# EUROPEAN PATENT APPLICATION

(11) **EP 4 811 769 A1**
(43) Date of publication of application: **23.09.2026**
(21) Application number: 24891648.8
(22) Date of filing: 04.10.2024
(51) Int. Cl.: H04N 19/105, H04N 19/61, H04N 19/625, H04N 19/63, H04N 19/176, H04N 19/119, H04N 19/196, H04N 19/132, H04N 19/60

(54) **APPARATUS AND METHOD FOR ENCODING AND DECODING IMAGE BY USING TEMPLATE MATCHING**

(30) Priority: 15.11.2023 KR 20230158632; 21.05.2024 KR 20240065856
(71) Applicant: Samsung Electronics Co., Ltd., Suwon-si, Gyeonggi-do 16677 (KR)
(72) Inventor: CHOI, Giyong, Suwon-si, Gyeonggi-do 16677 (KR); PARK, Minwoo, Suwon-si, Gyeonggi-do 16677 (KR); PARK, Jeeyoon, Suwon-si, Gyeonggi-do 16677 (KR); CHOI, Kwangpyo, Suwon-si, Gyeonggi-do 16677 (KR)
(74) Representative: Appleyard Lees IP LLP
(86) International application number: PCT/KR2024/015096
(87) International publication number: WO 2025/105701

(57) **Abstract**

A method for decoding an image, according to an embodiment, may comprise the steps of: determining a transformed template of the current block by performing transformation on a template of the current block, and determining transformed templates of a plurality of candidate blocks by performing transformation on templates of the plurality of candidate blocks within a search area; comparing the transformed template of the current block with the transformed template of each of the plurality of candidate blocks; on the basis of the result of the comparison, determining a reference block of the current block from among the plurality of candidate blocks; generating a prediction block of the current block by using the reference block; and reconstructing the current block by using the prediction block of the current block..

## Description

### Technical Field

The present disclosure relates to the field of encoding and decoding images, and more particularly, to an apparatus and method for encoding and decoding an image by performing intra prediction by using template matching.

### Background Art

When encoding or decoding an image, an image may be divided into blocks, and predictive encoding and predictive decoding may be performed on each block through inter prediction or intra prediction.

Inter prediction refers to the technology of compressing an image by removing temporal redundancy between images. In the inter prediction, blocks of a current image may be predicted by using a reference image. A reference block that is most similar to a current block may be searched within a predetermined search region in the reference image. The current block may be predicted based on the reference block, and a residual block may be generated by subtracting from the current block a prediction block generated based on a prediction result.

In standards such as H.264 AVC (advanced video coding) and HEVC (high efficiency video coding), motion vectors of previously encoded blocks adjacent to a current block or blocks included in a previously encoded image may be used as a motion vector predictor of the current block for predicting a motion vector of the current block. A motion vector difference, which is a difference between a motion vector and a motion vector predictor of a current block may be signaled to a decoder through a predetermined method.

Intra prediction refers to the technology of compressing an image by removing spatial redundancy in an image. In the intra prediction, a prediction block may be generated based on neighboring pixels of a current block according to an intra prediction mode. Then, a residual block may be generated by subtracting the prediction block from the current block.

The residual blocks generated through inter prediction or intra prediction may be delivered to a decoder through transform and quantization. The decoder may perform inverse quantization and inverse transform on the residual blocks and reconstruct the current block by combining the residual block with the prediction block of the current block. In certain cases, the decoder may remove artifacts in the reconstructed current block through filtering.

### Disclosure of Invention

### Solution to Problem

A method of decoding an image according to an embodiment may include determining a transformed template of a current block by performing a transform on a template of the current block, and determining transformed templates of a plurality of candidate blocks by performing a transform on templates of the plurality of candidate block within a search region.

A method of decoding an image according to an embodiment may include comparing the transformed template of the current block and each of the transformed templates of the plurality of candidate blocks.

The method of decoding an image according to an embodiment may include determining a reference block of the current block from among the plurality of candidate blocks based on results of the comparing.

The method of decoding an image according to an embodiment may include generating a prediction block of the current block using the reference block.

The method of decoding an image according to an embodiment may include reconstructing the current block using the prediction block of the current block.

An image-decoding apparatus according to an embodiment may include at least one memory in which at least one instruction is stored and at least one processor configured to operate according to the at least one instruction.

In an embodiment, the at least one processor may determine a transformed template of the current block by performing a transform on a template of the current block and determine transformed templates of a plurality of candidate blocks by performing a transform on templates of the plurality of candidate blocks within a search region.

In an embodiment, the at least one processor may compare the transformed template of the current block and each of the transformed templates of the plurality of candidate blocks.

In an embodiment, the at least one processor may determine a reference block of the current block from among the plurality of candidate blocks based on results of the comparing.

In an embodiment, the at least one processor may generate a prediction block of the current block using the reference block.

In an embodiment, the at least one processor may reconstruct the current block using the prediction block of the current block.

A method of encoding an image according to an embodiment may include determining a transformed template of the current block by performing a transform on a template of the current block and determining transformed templates of a plurality of candidate blocks by performing a transform on templates of the plurality of candidate blocks within the search region.

The method of encoding an image according to an embodiment may include comparing the transformed template of the current block with each of the transformed templates of the plurality of candidate blocks.

The method of encoding an image according to an embodiment may include determining a reference block of the current block from among the plurality of candidate blocks based on results of the comparing.

The method of encoding an image according to an embodiment may include generating a prediction block of the current block using the reference block.

The method of encoding an image according to an embodiment may include reconstructing the current block using the prediction block of the current block.

An image-encoding apparatus according to an embodiment may include at least one memory in which at least one instruction is stored and at least one processor configured to operate according to the at least one instruction.

In an embodiment, the at least one processor may determine a transformed template of a current block by performing a transform on a template of the current block and determine transformed templates of a plurality of candidate blocks by performing a transform on templates of the plurality of candidate blocks within the search region.

In an embodiment, the at least one processor may compare the transformed template of the current block and each of the transformed templates of the plurality of candidate blocks.

In an embodiment, the at least one processor may determine a reference block of the current block from among the plurality of candidate blocks based on results of the comparing.

In an embodiment, the at least one processor may generate a prediction block of the current block using the reference block.

In an embodiment, the at least one processor may encode the current block using the prediction block of the current block.

In a computer-readable recoding medium having recorded thereon a bitstream, the bitstream may include an encoding result of the current block.

In an embodiment, the encoding result of the current block may be generated by determining a transformed template of the current block by performing a transform on a template of the current block, and determining transformed templates of a plurality of candidate blocks by performing a transform on templates of the plurality of candidate blocks within the search region.

In an embodiment, the encoding result of the current block may be generated by comparing the transformed template of the current block with each of the transformed templates of the plurality of candidate blocks.

In an embodiment, the encoding result of the current block may be generated by determining a reference block of the current block from among the plurality of candidate blocks based on results of the comparing.

In an embodiment, the encoding result of the current block may be generated by generating a prediction block of the current block using the reference block.

In an embodiment, the encoding result of the current block may be generated by encoding the current block using the prediction block of the current block.

### Brief Description of Drawings

FIG. 1 is a block diagram of an image-decoding apparatus according to an embodiment.
FIG. 2 is a block diagram of an image-encoding apparatus according to an embodiment.
FIG. 3 illustrates a process of determining at least one coding unit by splitting a current coding unit, according to an embodiment.
FIG. 4 illustrates a process of determining at least one coding unit by splitting a non-square coding unit, according to an embodiment.
FIG. 5 illustrates a process of splitting a coding unit based on at least one of block shape information and partition shape mode information, according to an embodiment.
FIG. 6 illustrates a method of determining a coding unit from among an odd number of coding units, according to an embodiment.
FIG. 7 illustrates an order of processing a plurality of coding units in a case where the plurality of coding units are determined by splitting a current coding unit, according to an embodiment.
FIG. 8 illustrates a process of determining that a current coding unit is split into an odd number of coding units in a case where coding units cannot be processed in a predetermined order, according to an embodiment.
FIG. 9 illustrates a process of determining at least one coding unit by splitting a first coding unit, according to an embodiment.
FIG. 10 illustrates that, when a non-square second coding unit determined by splitting a first coding unit satisfies predetermined conditions, partitionable shapes are limited.
FIG. 11 illustrates a process of splitting a coding unit having a square shape in a case where partition shape mode information is incapable of representing a split into four square coding units, according to an embodiment.
FIG. 12 illustrates that a processing order among a plurality of coding units may change according to a splitting process of the coding units, according to an embodiment.
FIG. 13 illustrates a process of determining a depth of a coding unit according to a change in a shape and size of the coding unit when a plurality coding units are determined by recursively splitting the coding unit, according to an embodiment.
FIG. 14 illustrates a depth and a part index (hereinafter, "PID") for distinguishing coding units, which may be determined according to shapes and sizes of the coding units, according to an embodiment.
FIG. 15 illustrates that a plurality of coding units are determined according to a plurality of predetermined data units included in a picture, according to an embodiment.
FIG. 16 illustrates coding units that may be determined for each picture in a case where a combination of shapes in which a coding unit is partitioned is different for each picture, according to an embodiment.
FIG. 17 illustrates various shapes of coding unit that may be determined based on partition shape mode information represented by a binary code, according to an embodiment.
FIG. 18 illustrates other shapes of coding unit that may be determined based on partition shape mode information represented by a binary code, according to an embodiment.
FIG. 19 is a block diagram of an image-encoding and decoding system configured to perform loop filtering, according to an embodiment.
FIG. 20 is a block diagram illustrating a configuration of an image-decoding apparatus 2000 according to an embodiment.
FIG. 21 is a diagram for illustrating a method of template matching prediction according to an embodiment.
FIG. 22 is a diagram for illustrating a method of template matching prediction using a transformed template, according to an embodiment.
FIG. 23 is a diagram for illustrating template matching prediction by using a transformed sub-template, according to an embodiment.
FIG. 24 is a diagram for illustrating template matching prediction by using a transformed sub-template, according to an embodiment.
FIG. 25 is a diagram illustrating an example of a process of generating a prediction block by combining transformed reference blocks, according to an embodiment.
FIG. 26 is a diagram for illustrating a process of template matching prediction, according to an embodiment.
FIG. 27 is a flowchart illustrating a method of decoding an image, according to an embodiment.
FIG. 28 is a block diagram illustrating a configuration of an image-encoding apparatus according to an embodiment.
FIG. 29 is a flowchart illustrating a method of encoding an image, according to an embodiment.

### Best Mode for Carrying out the Invention

A method of decoding an image according to an embodiment may include determining a transformed template of the current block by performing a transform on a template of the current block and determining transformed templates of a plurality of candidate blocks by performing a transform on templates of the plurality of candidate blocks within the search region.

A method of decoding an image according to an embodiment may include comparing the transformed template of the current block and the transformed template of each of the plurality of candidate blocks.

The method of decoding an image according to an embodiment may include determining a reference block of the current block from among a plurality of candidate blocks based on results of the comparing.

The method of decoding an image according to an embodiment may include generating a prediction block of the current block by using the reference block.

The method of decoding an image according to an embodiment may include reconstructing the current block by using the prediction block of the current block.

### Mode for the Invention

As the present disclosure allows for various changes and numerous embodiments, embodiments will be illustrated in the drawings and described in detail in the written description. However, this is not intended to limit embodiments to particular modes of practice, and it is to be appreciated that all changes, equivalents, and substitutes that do not depart from the spirit and technical scope of the disclosure are encompassed in embodiments.

In describing an embodiment of the present disclosure, when a detailed explanation about related arts unnecessarily blur the gist of the disclosure, such explanation will be omitted. In addition, numbers used throughout the description (e.g., first, second, etc.) are only intended to distinguish one component from another.

Throughout the present disclosure, the expression "at least one of a, b, or c" indicates only a, only b, only c, both a and b, both a and c, both b and c, all of a, b, and c, or variations thereof.

In addition, through of the present disclosure, when one component is "coupled to" or "connected to" another component, it should be construed as meaning that one component is directly connected to another component or one component is coupled or connected indirectly to another component via an intervening component arranged therebetween unless otherwise described.

As for components described as "...unit," "module," etc., two or more components may be integrated with each other into a single component, or one component may be divided into two or more sub-components. Also, each of the components to be described below may additionally perform all or a part of functions of other components, in addition to its main functions, and some of main functions of each components may be solely performed by other components.

Throughout the present disclosure, the term "image" may refer to a picture, a still image, a frame, a motion clip including a plurality of consecutive still images, or a video.

In addition, throughout the present disclosure, the term "sample" may refer to data that is assigned to a sampling position and is to be processed. For example, a pixel within a frame of a spatial domain may be a sample. A unit including a plurality of samples may be defined as a block.

Throughout the present disclosure, the term "entropy decoding for a block or a unit" may refer to a process of obtaining a syntax element of a block or a unit from a bitstream (or bits included in a bitstream) or a process of obtaining a bin string corresponding to a syntax element.

Throughout the present disclosure, the term "entropy encoding for a block or a unit" may refer to a process of generating a bitstream (or bits constituting a bitstream) from a syntax element of a block or a unit or a process of generating a bitstream (or bits constituting a bitstream) from a bin string corresponding to a syntax element.

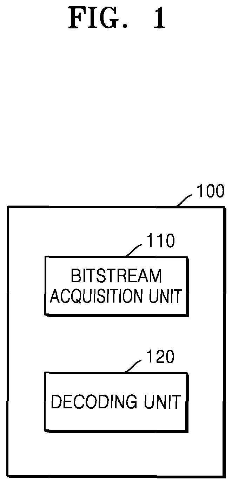

Hereinafter, a method and apparatus for encoding an image and a method and apparatus for decoding an image based on tree-structured coding units and transform units are provided with reference to FIGS. 1 to 19.

FIG. 1 is a block diagram of an image-decoding apparatus 100 according to an embodiment.

The image-decoding apparatus 100 may include a bitstream acquisition unit 110 and a decoding unit 120. The bitstream acquisition unit 110 and the decoding unit 120 may include at least one processor. The bitstream acquisition unit 110 and the decoding unit 120 may include a memory in which instructions executed by the at least one processor are stored.

The bitstream acquisition unit 110 and receive a bitstream. The bitstream may include information obtained by encoding an image by an image-encoding apparatus 200 to be described later. The bitstream may be transmitted from the image-encoding apparatus 200. The image-encoding apparatus 200 and the image-decoding apparatus 100 may be connected to each other in a wired or wireless manner, and the bitstream acquisition unit 110 may receive the bitstream in a wired or wireless manner. The bitstream acquisition unit 110 may receive the bitstream from a storage medium such as optical media, hard disk, etc. The decoding unit 120 may reconstruct an image based on information obtained from the received bitstream. The decoding unit 120 may obtain from the bitstream a syntax element for reconstructing an image. The decoding unit 120 may reconstruct an image based on the syntax element.

As for detailed operations of the image-decoding apparatus 100, the bitstream acquisition unit 110 may receive the bitstream.

The image-decoding apparatus 100 may perform an operation of obtaining from the bitstream a bin string corresponding to a partition shape mode of a coding unit. The image-decoding apparatus 100 may perform an operation of determining a partitioning rule of a coding unit. In addition, the image-decoding apparatus 100 may perform an operation of partitioning a coding unit into a plurality of coding units, based on at least one of a bin string corresponding to a partition shape mode and the partitioning rule. To determine the partitioning rule, the image-decoding apparatus 100 may determine a first allowable range of the size of the coding unit, according to a ratio between the width and the height of the coding unit. To determine the partitioning rule, the image-decoding apparatus 100 may determine a second allowable range of the size of the coding unit, according to a partition shape mode of the coding unit.

Hereinafter, partitioning of the coding unit is further described in detail according to an embodiment of the present disclosure.

First, a picture may be divided into one or more slices or one or more tiles. A slice or a tile may be a sequence of one or more coding tree units (CTUs). In an embodiment, a slice may include one or more tiles, and a slice may include one or more coding tree units. A slice including one or more tiles may be determined in a picture.

The coding tree unit (CTU) may be distinguished from a coding tree block (CTB). The coding tree block (CTB) refers to an NxN block including NxN sample(s) (N is an integer). Each color component may be divided into one or more coding tree blocks.

When a picture has three sample arrays (sample arrays for Y, Cr, and Cb components), the coding tree unit (CTU) may include a coding tree block of luma samples, two coding tree blocks of corresponding chroma samples, and syntax structures used to encode the luma and chroma samples. In the case of a monochrome picture, the coding tree unit may include a coding tree block of monochrome samples and syntax structures used to encode the monochrome samples. In the case of a picture encoded with separate color planes for each color component, the coding tree unit may include the picture and the syntax structures used to encode samples of the picture.

A coding tree block (CTB) may be divided into MxN coding blocks including MxN samples (M and N are each an integer).

When a picture has sample arrays for Y, Cr, and Cb components, the coding unit (CU) may include a coding block of luma samples, two coding blocks of corresponding chroma samples, and syntax structures used to encode the luma and chroma samples. In the case of a monochrome picture, the coding unit may include a coding block of monochrome samples and syntax structures used to encode the monochrome samples. In the case of a picture encoded with separate color planes for each color component, the coding unit may include the picture and the syntax structures used to encode samples of the picture.

As described above, the coding tree block and the coding tree unit are distinguished from each other, and the coding block and the coding unit are distinguished from each other. That is, a (largest) coding tree unit may refer to a data structure including a (largest) coding block containing the corresponding samples and syntax structures associated therewith. However, as those skilled in the art can understand that a (largest) coding unit or a (largest) coding block refers to a block of a predetermined size including a predetermined number of samples, in the following description, the largest coding block and the largest coding unit, or the coding block and the coding unit, are used interchangeably unless otherwise specified.

An image may be partitioned into coding tree unit (CTUs). The size of the coding tree unit may be determined based on information obtained from the bitstream. The coding tree unit may have a square shape of equal size. However, the present disclosure is not limited thereto.

For example, information on the maximum size of a luma coding block may be obtained from the bitstream. For example, the maximum size of a luma coding block indicated by information on the maximum size of a luma coding block may be one of 4x4, 8x8, 16x16, 32x32, 64x64, 128x128, and 256x256.

For example, information on a luma block size difference and the maximum size of a luma coding block splittable into two may be obtained from the bitstream. The information on the luma block size difference may represent a difference between a luma coding tree unit and a maximum luma coding block splittable into two. Accordingly, the size of the luma coding tree unit may be determined by combining the information on the maximum size of a luma coding block splittable into two and the information on the luma block size difference, which are obtained from the bitstream. By using the size of the luma coding tree unit, the size of the chroma coding tree unit may be determined. For example, when a Y:Cb:Cr ratio is 4:2:0 according to a color format, the size of a chroma block may be half the size of a luma block, and the size of the chroma coding tree unit may be half the size of the luma coding tree unit.

According to an embodiment, as information on a maximum size of a luma coding block that is binary-splittable is obtained from the bitstream, the maximum size of the binary-splittable luma coding block may be determined variably. Unlike the foregoing, a maximum size of a ternary-splittable luma coding block may be fixed. For example, a maximum size of a ternary-splittable luma coding block in an I-picture may be 32x32, and a maximum size of a ternary-splittable luma coding block in a P-picture or a B-picture may be 64x64.

The coding tree unit may be hierarchically partitioned into coding units based on partition shape mode information obtained from the bitstream. As the partition shape mode information, at least one of information indicating whether to perform quad-splitting, information indicating whether to perform multi-splitting, splitting direction information, and splitting type information may be obtained from the bitstream.

For example, the information indicating whether to perform quad-splitting may indicate whether a current coding unit is to be quad-split (QUAD_SPLIT) or not.

When the current coding unit is not quad-split, the information indicating whether to perform multi-splitting may indicate whether the current coding unit is no longer split (NO_SPLIT) or to be binary/ternary-split.

When the current coding unit is binary-split or ternary-split, the splitting direction information may indicate that the current coding unit is to be split in one of a horizontal direction and a vertical direction.

When the current coding unit is split in the horizontal direction or the vertical direction, the splitting type information may indicate binary-splitting or ternary splitting of the current coding unit.

According to the splitting direction information and the splitting type information, the partition mode of the current coding unit may be determined. The partition mode may be determined as horizontal binary-splitting (SPLIT_BT_HOR) when the current coding unit is binary-split in a horizontal direction, horizontal ternary-splitting (SPLIT_TT_HOR) when it the current coding unit is ternary-split in the horizontal direction, vertical binary-splitting (SPLIT_BT_VER) when the current coding unit is binary-split in a vertical direction, and vertical ternary-splitting (SPLIT_TT_VER) when the current coding unit is ternary-split in the vertical direction.

The image-decoding apparatus 100 may obtain partition shape mode information from a single bin string from the bitstream. The bitstream received by the image-decoding apparatus 100 may include a fixed-length binary code, a unary code, a truncated unary code, a predetermined binary code, etc. The bin string may represent information as a sequence of binary numbers. The bin string may include at least one bit. The image-decoding apparatus 100 may obtain partition shape mode information corresponding to the bin string based on the partitioning rule. The image-decoding apparatus 100 may determine whether to quad-split the coding unit, whether not to split the coding unit, or a splitting direction and a splitting type, based on a single bin string.

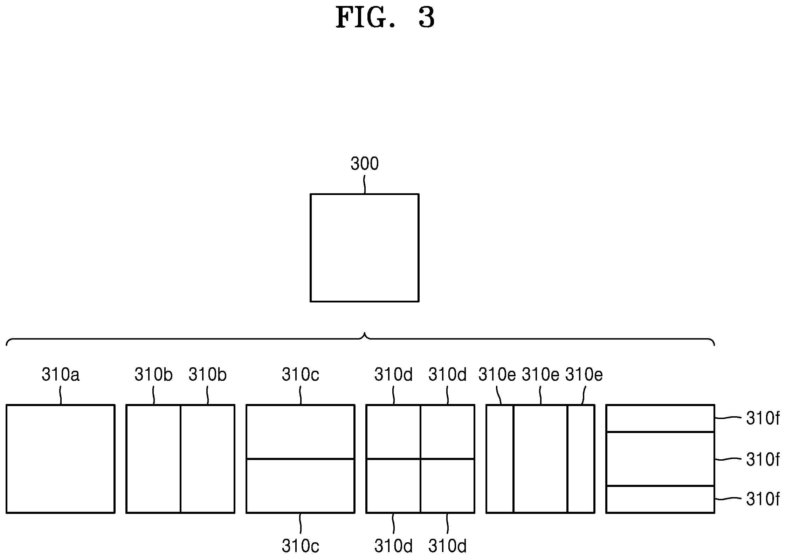

The coding unit may be less than or equal to the coding tree unit. For example, as the coding tree unit is also a coding unit having a maximum size, the coding tree unit may be one of coding units. When the partition shape mode information regarding the coding tree unit indicates that the coding tree unit is not split, the coding tree unit determined from the coding tree unit may have the same size as the coding tree unit. When the partition shape mode information regarding the coding tree unit indicates that the coding tree unit is split, the coding tree unit may be split into coding units. In addition, when the partition shape mode information regarding the coding unit indicates that the coding unit is split, the coding unit may be split into smaller coding units. Only, the splitting of an image is not limited thereto, and the coding tree unit and the coding unit may not be distinguished from each other. The splitting of the coding unit is to be further described in detail with in relation to FIGS. 3 to 16.

One or more prediction blocks for prediction may be determined from the coding unit. The prediction block may be less than or equal to the coding unit. One or more transform blocks for transform may be determined from the coding unit. The transform block may be less than or equal to the coding unit.

The shape and size of the transform block may not be related to those of the prediction block.

In another embodiment, prediction may be performed by using the coding unit as a prediction block. Furthermore, the transform may be performed by using the coding unit as a transform block.

The splitting of the coding unit is to be further described in detail with in relation to FIGS. 3 to 16. According to the present disclosure, the current block and neighboring blocks may represent one of a coding tree unit, a coding unit, a prediction block, and a transform block. Moreover, the current block or the current coding unit may be a block on which encoding or decoding is currently performed or a block on which splitting is currently performed. The neighboring block may be a block reconstructed before the current block. The neighboring block may be spatially or temporally adjacent to the current block. The neighboring block may be located at one of a below-left position, a left position, an above-left position, an above position, an above-right position, a right position, and a below-right position, with respect to the current block.

FIG. 3 illustrates a process of determining, by the image-decoding apparatus 100, at least one coding unit by splitting the current coding unit, according to an embodiment.

The block shape may include 4Nx4N, 4Nx2N, 2Nx4N, 4NxN, Nx4N, 32NxN, Nx32N, 16NxN, Nx16N, 8NxN, or Nx8N. N may be a positive integer. The block shape information may include at least one of a shape, direction, ratio between the width and the height, or size of the coding unit.

The shape of the coding unit may include a square shape and a non-square shape. When the width of the coding unit is equal to the height thereof (i.e., when the block shape of the coding unit is 4Nx4N), the image-decoding apparatus 100 may determine the block shape information of the coding unit as a square. The image-decoding apparatus 100 may determine the shape of the coding unit as a non-square.

When the width of the coding unit is different from the height thereof (i.e., when the block shape of the coding unit is 4Nx2N, 2Nx4N, 4NxN, Nx4N, 32NxN, Nx32N, 16NxN, Nx16N, 8NxN, or Nx8N), the image-decoding apparatus 100 may determine the block shape information of the coding unit as a non-square. When the shape of the coding unit is a non-square, the image-decoding apparatus 100 may determine the ratio between the width and the height in the block shape information of the coding unit as at least one of 1:2, 2:1, 1:4, 4:1, 1:8, 8:1, 1:16, 16:1, 1:32, and 32:1. In addition, based on the length of the width and the length of the height of the coding unit, the image-decoding apparatus 100 may determine whether the coding unit is in the horizontal direction or in the vertical direction. Moreover, based on at least one of the width length, height length, or area of the coding unit, the image-decoding apparatus 100 may determine the size of the coding unit.

According to an embodiment, the image-decoding apparatus 100 may determine the shape of the coding unit by using the block shape information and determine the partition shape of the coding unit by using the partition shape mode information. That is, a partitioning method for the coding unit indicated by the partition shape mode may be determined according to a block shape indicated by the block shape information used by the image-decoding apparatus 100.

The image-decoding apparatus 100 may obtain the partition shape mode information from the bitstream. However, the present disclosure is not limited thereto, and the image-decoding apparatus 100 and the image-encoding apparatus 200 may determine predefined partition shape mode information based on the block shape information. The image-decoding apparatus 100 may determine predefined partition shape mode information for a largest coding unit or a minimum coding unit. For example, the image-decoding apparatus 100 may determine the partition shape mode information for the coding tree unit as the quad-split. The image-decoding apparatus 100 may also determine the partition shape mode information for the minimum coding unit as "no split." More specifically, the image-decoding apparatus 100 may determine the size of the coding tree unit as 256x256. The image-decoding apparatus 100 may determine the predefined partition shape mode information as the quad-split. The quad-split may be a partition shape mode in which both the width and the height of the coding unit are divided into two equal parts. The image-decoding apparatus 100 may obtain a coding tree unit having the size of 128x128 from a coding unit having the size of 256x256 based on the partition shape mode information. The image-decoding apparatus 100 may determine the size of the minimum coding unit as 4x4. The image-decoding apparatus 100 may obtain partition shape mode information indicating "no split" for the minimum coding unit.

According to an embodiment, the image-decoding apparatus 100 may use block shape information indicating that the current coding unit has a square shape. For example, the image-decoding apparatus 100 may determine according to the partition shape mode information whether not to split a square coding unit, whether to vertically split the square coding unit, whether to horizontally split the square coding unit, whether to split the square coding unit into four coding units, etc. Referring to FIG. 3, when block shape information of a current coding unit 300 indicates a square shape, the decoding unit 120 may not split a coding unit 310a having the same size as the current coding unit 300 according to partition shape mode information indicating no-splitting or determine partitioned coding units (310b, 310c, 310d, 310e, 310f, etc.) based on partition shape mode information representing a predetermined partitioning method.

Referring to FIG. 3, the image-decoding apparatus 100 may determine two coding units 310b vertically split from the current coding unit 300 based on partition shape mode information indicating vertical splitting. The image-decoding apparatus 100 may determine two coding unit 310c horizontally split from the current coding unit 300 based on partition shape mode information indicating horizontal splitting. The image-decoding apparatus 100 may determine four coding unit 310d vertically and horizontally split from the current coding unit 300 based on partition shape mode information indicating both vertical and horizontal splitting. The image-decoding apparatus 100 may determine three coding units 310e vertically split from the current coding unit 300 based on partition shape mode information indicating vertical ternary-splitting. The image-decoding apparatus 100 may determine three coding unit 310f horizontally split from the current coding unit 300 based on partition shape mode information indicating horizontal ternary-splitting. Only, partition shapes into which a square coding unit may be split are not limited to the foregoing shapes and may include various shapes that may be indicated by the partition shape mode information. The partition shapes into which a square coding unit may be split are to be further described in detail through various embodiments.

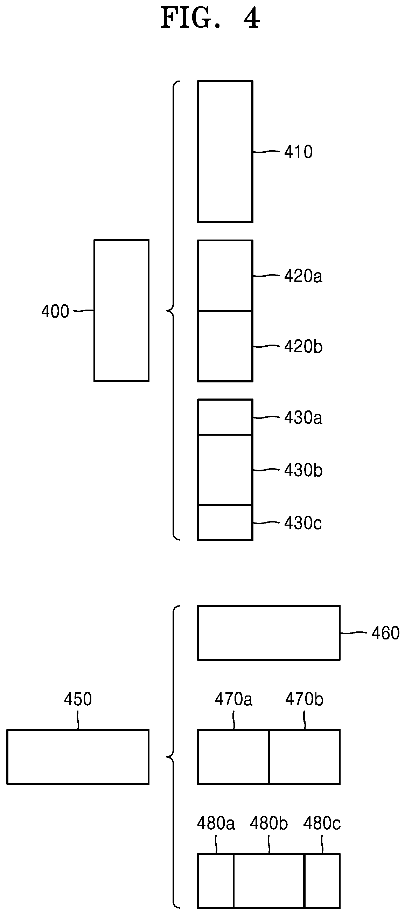

FIG. 4 illustrates a process of determining, by the image-decoding apparatus 100, at least one coding unit by splitting a non-square coding unit, according to an embodiment.

According to an embodiment, the image-decoding apparatus 100 may use block shape information indicating that the current coding unit has a non-square shape. The image-decoding apparatus 100 may determine whether not to split the non-square current coding unit or whether to split the non-square coding unit in a predetermined method, according to the partition shape mode information. Referring to FIG. 4, when block shape information of a current coding unit (400 or 450) indicates a non-square shape, the image-decoding apparatus 100 may determine a coding unit (410 or 460) having the same size as the current coding unit (400 or 450) according to the partition shape mode information indicating no-splitting or determine partitioned coding units (420a, 420b, 430a, 430b, 430c, 470a, 470b, 480a, 480b, and 480c) based on partition shape mode information representing a predetermine partitioning method. The partitioning methods by which a non-square coding unit is split are to be further described in detail through various embodiments.

According to an embodiment, the image-decoding apparatus 100 may determine a partition shape in which the coding unit is split, by using the partition shape mode information, and in this case, the partition shape mode information may represent the number of at least one coding unit generated by splitting the coding unit. Referring to FIG. 4, when the partition shape mode information indicates that the current coding unit (400 or 450) is split into two coding units, the image-decoding apparatus 100 may determine two coding units (420a and 420b or 470a and 470b) included in the current coding unit by splitting the coding unit (400 or 450), based on the partition shape mode information.

According to an embodiment, when the image-decoding apparatus 100 splits the current coding unit (400 or 450) having a non-square shape based on the partition shape mode information, the image-decoding apparatus 100 may split the current coding unit by considering the position of a long side of the non-square current coding unit (400 or 450). For example, the image-decoding apparatus 100 may determine a plurality of coding units by splitting the current coding unit (400 or 450) in a direction of of splitting the long side of the current coding unit (400 or 450) in consideration of the shape of the current coding unit (400 or 450).

According to an embodiment, when the partition shape mode information indicates that the coding unit is split into an odd number of blocks (e.g., ternary-split), the image-decoding apparatus 100 may determine an odd number of coding units included in the current coding unit (400 or 450). For example, when the partition shape mode information indicates that the current coding unit (400 or 450) is split into three coding units, the image-decoding apparatus 100 may split the current coding unit (400 or 450) into three coding units (430a, 430b, and 430c or 480a, 480b, and 480c).

According to an embodiment, a ratio between the width and the height of the current coding unit (400 or 450) may be 4:1 or 1:4. When the ratio between the width and the height is 4:1, as the length of the width is longer than the length of the height, the block shape information may indicate a horizontal direction. When the ratio between the width and the height is 1:4, as the length of the width is shorter than the length of the height, the block shape information may indicate a vertical direction. The image-decoding apparatus 100 may determine to split the current coding unit into an odd number of blocks based on the partition shape mode information. In addition, the image-decoding apparatus 100 may determine a splitting direction of the current coding unit (400 or 450) based on the block shape information of the current coding unit (400 or 450). For example, when the current coding unit 400 is in the vertical direction, the image-decoding apparatus 100 may determine the coding units 430a, 430b, and 430c by horizontally splitting the current coding unit 400. When the current coding unit 450 is in the horizontal direction, the image-decoding apparatus 100 may determine the coding units 480a, 480b, and 480c by vertically splitting the current coding unit 450.

According to an embodiment, the image-decoding apparatus 100 may determine an odd number of coding units included in the current coding unit (400 or 450), and the determined coding unit may have different sizes from each other. For example, from among the odd number of determined coding units (430a, 430b, and 430c or 480a, 480b, and 480c), the size of certain coding unit (430b or 480b) may be different from the size of other coding units (430a and 430c or 480a and 480c). That is, the coding units that may be determined by splitting the current coding unit (400 or 450) may have a plurality of types of sizes, and in some cases, the odd number of coding units (430a, 430b, and 430c or 480a, 480b, and 480c) may have different sizes from each other.

According to an embodiment, when the partition shape mode information indicates that the coding unit is split into an odd number of blocks, the image-decoding apparatus 100 may determine an odd number of coding units included in the current coding unit (400 or 450), and the image-decoding apparatus 100 may further apply a certain constraint to at least one coding unit from among an odd number of coding units generated by the splitting. Referring to FIG. 4, the image-decoding apparatus 100 may perform a decoding process for the coding units (430b or 480b) located at the center from among three coding units (430a, 430b, and 430c or 480a, 480b, and 480c) generated by splitting the current coding unit (400 or 450) differently from the other coding units (430a and 430c or 480a and 480c). For example, the image-decoding apparatus 100 may impose a limitation on the coding units (430b or 480b) located at the center such that partitioning is no longer performed or performed only up to a certain number of times, unlike the other coding units (430a and 430c or 480a and 480c).

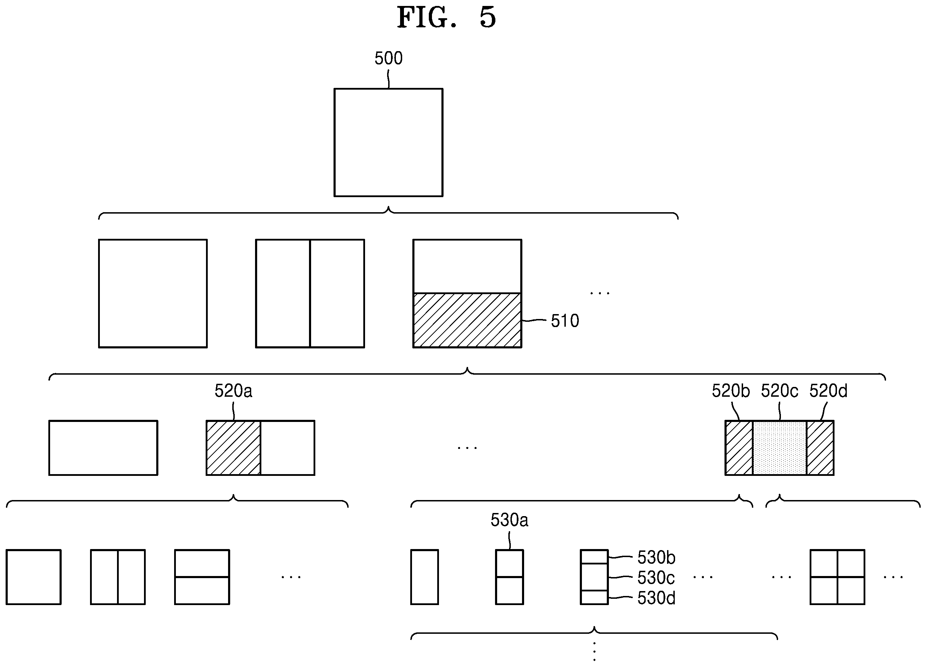

FIG. 5 illustrates a process of splitting, by the image-decoding apparatus 100, a coding unit based on at least one of block shape information and partition shape mode information, according to an embodiment.

According to an embodiment, the image-decoding apparatus 100 may determine not to split or split a first coding unit 500 having a square shape into coding units based on at least one of the block shape information and the partition shape mode information. According to an embodiment, when the partition shape mode information indicates that the first coding unit 500 is split in the horizontal direction, the image-decoding apparatus 100 may determine a second coding unit 510 by splitting the first coding unit 500 in the horizontal direction. The terms "first coding unit," "second coding unit," and "third coding unit" are employed in accordance with an embodiment to facilitate understanding of the hierarchical relationship between coding units before and after partitioning. For example, the second coding unit may be determined by splitting the first coding unit, and the third coding unit may be determined by splitting the second coding unit. In the following description, the relationship among the first coding unit, the second coding unit, and the third coding unit may be understood as complying with the aforementioned features.

According to an embodiment, the image-decoding apparatus 100 may determine not to split or split the determined second coding unit 510 into coding units based on the partition shape mode information. Referring to FIG. 5, the image-decoding apparatus 100 may not split the second coding unit 510 or split the second coding unit 510 of non-square shape determined by splitting the first coding unit 500 into at least one third coding unit (520a, 520b, 520c, 520d, etc.) based on the partition shape mode information. The image-decoding apparatus 100 may obtain the partition shape mode information and split a plurality of second coding units (for example, 510) of various shapes by splitting the first coding unit 500 based on the obtained partition shape mode information, and the second coding unit 510 may be partitioned according to a partitioning method for the first coding unit 500 based on the partition shape mode information. According to an embodiment, when the first coding unit 500 is split into the second coding units 510 based on the partition shape mode information for the first coding unit 500, the second coding unit 510 may also be split into third coding units (for example, 520a, 520b, 520c, 520d, etc.) based on the partition shape mode information for the second coding unit 510. That is, the coding units may be split recursively based on partition shape mode information associated with each coding unit. Accordingly, a square coding unit may be determined from a non-square coding unit, and such square coding unit may be recursively split to determine a non-square coding unit.

Referring to FIG. 5, from among an odd number of third coding units (520b, 520c, and 520d) determined by splitting the second coding unit 510 having a non-square shape, a certain coding unit (for example, a coding unit located at the center or a coding unit having a square shape) may be recursively split. According to an embodiment, the third coding unit 520 having a non-square shape, which is one of the odd number of third coding units (520b, 520c, and 520d), may be split in the horizontal direction into a plurality of fourth coding units. A fourth coding unit (530b or 530d) having a non-square shape, which is one of a plurality of fourth coding units (530a, 530b, 530c, and 530d), may be split into a plurality coding units. For example, the fourth coding unit (530b or 530d) having a non-square shape may be split into an odd number of coding units. Methods that may be used for recursive splitting of the coding units are to be described through various embodiments.

According to an embodiment, the image-decoding apparatus 100 may split each of the third coding units (520a, 520b, 520c, 520d, etc.) into coding units based on the partition shape mode information. The image-decoding apparatus 100 may determine not to split the second coding unit 510 based on the partition shape mode information. According to an embodiment, the image-decoding apparatus 100 may split the second coding unit 510 having a non-square shape into an odd number of third coding units (520b, 520c, and 520d). The image-decoding apparatus 100 may apply a certain constraint to a certain third coding unit from among the add number of third coding units (520b, 520c, and 520d). For example, the image-decoding apparatus 100 may impose a limitation such that the coding unit 520c located at the center from among the odd number of third coding units (520b, 520c, and 520d) is no longer split or split for a configurable number of times.

Referring to FIG. 5, the image-decoding apparatus 100 may impose a limitation such that the coding unit 520c located at the center from among the odd number of third coding units (520b, 520c, and 520d) included in the second coding unit 510 having a non-square shape is no longer split, is split in a predetermined shape (for example, split in four coding units or split in a shape corresponding to a partition shape of the second coding unit 510), or is split only a predetermined number of times (for example, split n times, n>0). As the aforementioned limitations applied to the coding unit 520c located at the center are merely illustrative embodiments, the present disclosure should be construed as including various limitations where the coding unit 520c located at the center is decoded differently from the other coding units (520b and 520d) instead of being limited to the above-described embodiments.

According to an embodiment, the image-decoding apparatus 100 may obtain the partition shape mode information used to split the current coding unit at a predetermined position within the current coding unit.

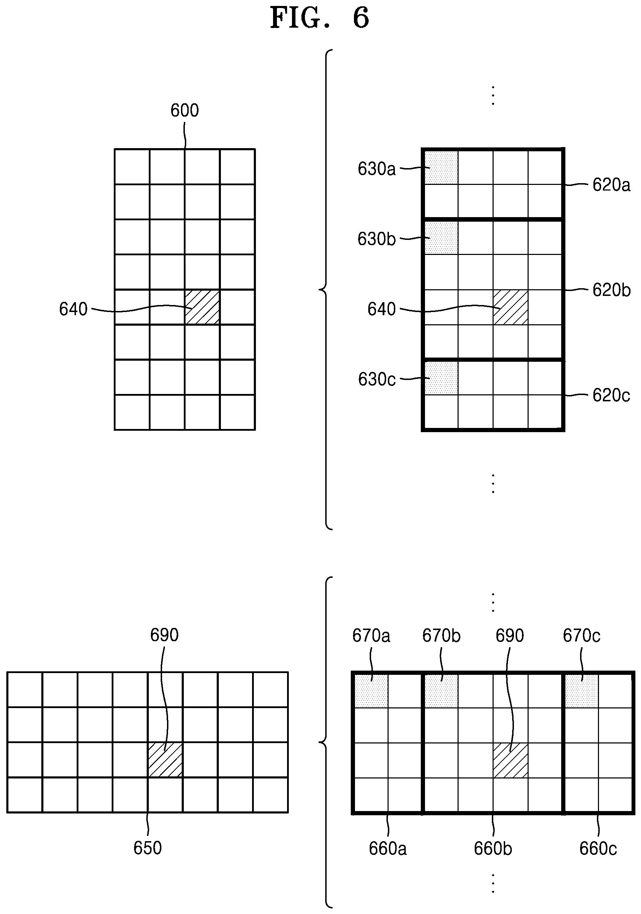

FIG. 6 illustrates a process of determining, by the image-decoding apparatus 100, a certain coding unit from among an odd number of coding units, according to an embodiment.

Referring to FIG. 6, partition shape mode information for a current coding unit (600 or 650) may be obtained a sample at a certain position (for example, a sample (640 or 690) located at the center) from among a plurality of samples included in the current coding unit (600 or 650). However, such position in the current coding unit 600 at which at least one partition shape mode information may be obtained is not limited to the central position illustrated in FIG. 6 and should be construed as including various positions that may be included in the current coding unit 600 (e.g., a topmost position, a bottommost position, a left position, a right position, an above-left position, a below-left position, an above-right position, or a below-right position). The image-decoding apparatus 100 may determine not to split or split the current coding unit into coding units of various shapes and sizes by obtaining the partition shape mode information obtained from a certain position.

According to an embodiment, when the current coding unit is split into a certain number of coding units, the image-decoding apparatus 100 may select one coding unit from among the coding units. Various method may be used to select one of a plurality of coding units, and the methods are to be described later through various embodiments.

According to an embodiment, the image-decoding apparatus 100 may split the current coding unit into a plurality of coding units and determine a coding unit at a certain position.

According to an embodiment, to determine a coding unit located at the center from among an odd number of coding units, the image-decoding apparatus 100 may use information representing a position of each of the odd number of coding units. Referring to FIG. 6, the image-decoding apparatus 100 may determine an odd number of coding units (620a, 620b, and 620c) or an odd number of coding units (660a, 660b, and 660c) by splitting the current coding unit 600 or the current coding unit 650. The image-decoding apparatus 100 may determine the coding unit 620b located at the center or the coding unit 660b located at the center by using information regarding the odd number of coding units (620a, 620b, and 620c) or the odd number of coding units (660a, 660b, and 660c). For example, the image-decoding apparatus 100 may determine the coding unit 620b located at the center by determining positions of the coding units (620a, 620b, and 620c) based on information representing positions of certain samples included in the coding unit (620a, 620b, and 620c). More specifically, the image-decoding apparatus 100 may determine the coding unit 620b located at the center by determining the positions of the coding units (620a, 620b, and 620c) based on the information representing positions of above-left samples (630a, 630b, and 630c) of the coding units (620a, 620b, and 620c).

According to an embodiment, the information representing the positions of the above-left samples (630a, 630b, and 630c) respectively included in the coding units (620a, and 620b, and 620c) may include information on positions or coordinates of the coding units (620a, 620b, and 620c) in a picture. According to an embodiment, the information representing the positions of the above-left samples (630a, 630b, and 630c) respectively included in the coding units (620a, and 620b, and 620c) may include information representing the width or the height of the coding units (620a, 620b, and 620c) included in the current coding unit 600, and the width or the height may correspond to information representing a difference among the coordinates of the coding units (620a, 620b, and 620c) in the picture. That is, the image-decoding apparatus 100 may determine the coding unit 620b located at the center by directly using information on the positions or the coordinates of the coding units (620a, 620b, and 620c) in the picture or by using the information on the width or the height of the coding units which corresponds to a difference value among the coordinates.

According to an embodiment, information representing a position of the above-left sample 630a of the above coding unit 620a may denote (xa, ya) coordinates, information representing a position of the above-left sample 530b of the center coding unit 620b may denote (xb, yb) coordinates, and information representing a position of the above-left sample 630c of the below coding unit 620c may denote (xc, yc) coordinates. The image-decoding apparatus 100 may determine the center coding unit 620b by using the coordinates of the above-left samples (630a, 630b, and 630c) respectively included in the coding units (620a, 620b, and 620c). For example, the coding unit 620b including (xb, yb) which is the coordinates of the sample 630b located at the center when the coordinates of the above-left samples (630a, 630b, and 630c) are sorted in ascending or descending order may be determined as a coding unit located at the center from among the coding units (620a, 620b, and 620c) determined by splitting the current coding unit 600. However, the coordinates representing the positions of the above-left samples (630a, 630b, and 630c) may denote absolute positions in the picture, and with respect to the position of the above-left sample 630a of the above coding unit 620a, the (dxb, dyb) coordinates, which represent a relative position of the above-left sample 630b of the center coding unit 620b and the (dxc, dyc) coordinates, which represent a relative position of the above-left sample 630c of the below coding unit 620c may be used. In addition, the method of determining a coding unit at a certain position by using coordinates of a corresponding sample as information representing positions of samples included in the coding unit is not limited to the foregoing and may be understood as one of various arithmetic methods using coordinates of samples.

According to an embodiment, the image-decoding apparatus 100 may split the current coding unit 600 into a plurality of coding units (620a, 620b, and 620c) and may select a coding unit from among the coding units (620a, 620b, and 620c) according to a predetermined criterion. For example, the image-decoding apparatus 100 may select the coding unit 620b having a different size from among the coding units (620a, 620b, and 620c).

According to an embodiment, the image-decoding apparatus 100 may determine the width or the height of each of the coding units (620a, 620b, and 620c) by using the (xa, ya) coordinates, which represent a position of the above-left sample 630a of the above coding unit 620a, the (xb, yb) coordinates, which represent a position of the above-left sample 630b of the center coding unit 620b, and the (xc, yc) coordinates, which represent a position of the above-left sample 630c of the below coding unit 620c. The image-decoding apparatus 100 may determine the size of each of the coding units (620a, 620b, and 620c) by using the (xa, ya), (xb, yb), and (xc, yc) coordinates respectively representing the positions of the coding units (620a, 620b, and 620c). According to an embodiment, the image-decoding apparatus 100 may determine the width of the above coding unit 620a as the width of the current coding unit 600. The image-decoding apparatus 100 may determine the height of the above coding unit 620a as yb-ya. According to an embodiment, the image-decoding apparatus 100 may determine the width of the center coding unit 620b as the width of the current coding unit 600. The image-decoding apparatus 100 may determine the height of the center coding unit 620b as yc-yb. According to an embodiment, the image-decoding apparatus 100 may determine the width or the height of the below coding unit by using the width or the height of the current coding unit and the widths and the heights of the above coding unit 620a and the center coding unit 620b. The image-decoding apparatus 100 may determine coding units having a different size than the other coding units based on the determined widths and the heights of the coding units (620a, 620b, and 620c). Referring to FIG. 6, the image-decoding apparatus 100 may determine, as a coding unit of a certain position, the center coding unit 620b which has a size different from the sizes of the above coding unit 620a and the below coding unit 620c. However, as the process of determining, by the image-decoding apparatus 100, a coding unit having a different size than the other coding units is merely an embodiment of determining a coding unit of a certain position by using the sizes of coding units determined based on the sample coordinates, various processes of determining a coding unit of a certain position by comparing the sizes of the coding units determined according to certain sample coordinates may also be used.

The image-decoding apparatus 100 may determine the width of the height of each of the coding units (660a, 660b, and 660c) by using the (xd, yd) coordinates, which represent a position of the above-left sample 670a of the left coding unit 660a, the (xe, ye) coordinates, which represent a position of the above-left sample 670b of the center coding unit 660b, and the (xf, yf) coordinates, which represent a position of the above-left sample 670c of the right coding unit 660c. The image-decoding apparatus 100 may determine the size of each of the coding units (660a, 660b, and 660c) by using the (xd, yd), (xe, ye), and (xf, yf) coordinates respectively representing the positions of the coding units (660a, 660b, and 660c).

According to an embodiment, the image-decoding apparatus 100 may determine the width of the left coding unit 660a as xe-xd. The image-decoding apparatus 100 may determine the height of the left coding unit 660a as the height of the current coding unit 650. According to an embodiment, the image-decoding apparatus 100 may determine the width of the center coding unit 660b as xf-xe. The image-decoding apparatus 100 may determine the height of the center coding unit 660b as the height of the current coding unit 600. According to an embodiment, the image-decoding apparatus 100 may determine the width or the height of the right coding unit 660c by using the width or the height of the current coding unit 650 and the widths and the heights of the left coding unit 660a and the center coding unit 660b. The image-decoding apparatus 100 may determine coding units having a different size than the other coding units based on the determined widths and the heights of the coding units (660a, 660b, and 660c). Referring to FIG. 6, the image-decoding apparatus 100 may determine, as a coding unit of a certain position, the center coding unit 660b which has a size different from the sizes of the left coding unit 660a and the right coding unit 660c. However, as the process of determining, by the image-decoding apparatus 100, a coding unit having a different size than the other coding units is merely an embodiment of determining a coding unit of a certain position by using the sizes of coding units determined based on the sample coordinates, various processes of determining a coding unit of a certain position by comparing the sizes of the coding units determined according to certain sample coordinates may also be used.

However, a position of a sample considered to determine a position of a coding unit is not limited to the above-left position, and information on a position of any sample included in the coding unit may be used.

According to an embodiment, the image-decoding apparatus 100 may consider a shape of the current coding unit to select a coding unit of a certain position from among an odd number of coding units determined by splitting the current coding unit. For example, when the current coding unit has a non-square shape having the width longer than the height, the image-decoding apparatus 100 may determine a coding unit of a certain position in the horizontal direction. That is, the image-decoding apparatus 100 may determine one of coding units at different positions in the horizontal direction to impose a limitation on the coding unit. When the current coding unit has a non-square shape having the height longer than the width, the image-decoding apparatus 100 may determine a coding unit of a certain position in the vertical direction. That is, the image-decoding apparatus 100 may determine one of coding units at different positions in the vertical direction to impose a limitation on the coding unit.

According to an embodiment, to determine a coding unit of a certain position from among an even number of coding units, the image-decoding apparatus 100 may use information representing a position of each of the even number of coding units. The image-decoding apparatus 100 may determine the even number of coding units by splitting (binary-splitting) the current coding unit and determine the coding unit of a certain position by using the information on positions of the even number of coding units. In this regard, as the specific process may correspond to the process of determining a coding unit of a certain position (for example, a central position) from among an odd number of coding units described above in relation to FIG. 6, any redundant description thereof is omitted.

According to an embodiment, when the current coding unit having a non-square shape is split into a plurality of coding units, to determine a coding unit of a certain position from among the plurality of coding units, certain information on the coding unit of a certain position may be used in the splitting process. For example, to determine the coding unit located at the center from among the plurality of coding units partitioned from the current coding unit, the image-decoding apparatus 100 may use at least one of block shape information and partition shape mode information stored in samples included in the center coding unit in the splitting process.

Referring to FIG. 6, the image-decoding apparatus 100 may split the current coding unit 600 into the plurality of coding units (620a, 620b, and 620c) based on the partition shape mode information and determine the coding unit 620b located at the center from among the plurality of coding units (620a, 620b, and 620c). Furthermore, the image-decoding apparatus 100 may determine the coding unit 620b located at the center by considering the position from which the partition shape mode information is obtained. That is, the partition shape mode information of the current coding unit 600 may be located from the sample 640 located at the center of the current coding unit 600, and when the current coding unit 600 is split into the plurality of coding units (620a, 620b, and 620c) based on the partition shape mode information, the coding unit 620b including the sample 640 may be determined as the coding unit located at the center. However, the information used to determine a coding unit as a coding unit located at the center is not limited to the partition shape mode information, and various types of information may be used in the process of determining the coding unit located at the center.

According to an embodiment, certain information for identifying a coding unit of a certain position may be obtained from a certain sample included in the coding unit to be determined. Referring to FIG. 6, to determine a coding unit of a certain position from among the plurality of coding units (620a, 620b, and 620c) determined by splitting the current coding unit 600 (for example, a coding unit located at the center from among the plurality of partitioned coding units), the image-decoding apparatus 100 may use the partition shape mode information obtained from a sample of a certain position in the current coding unit 600 (for example, a sample located at the center of the current coding unit 600). That is, the image-decoding apparatus 100 may determine the sample of a certain position by considering the block shape of the current coding unit 600 and impose a certain limitation by determining the coding unit 620b including a sample from which certain information (for example, partition shape mode information) may be obtained, from among the plurality of coding units (620a, 620b, and 620c) determined by splitting the current coding unit 600. Referring to FIG. 6, according to an embodiment, the image-decoding apparatus 100 may determine the sample 640 located at the center of the current coding unit 600 as a sample from which certain information may be obtained and impose a certain limitation in the process of decoding the coding unit 620b including the sample 640. However, the position of the sample from which certain information may be obtained is not limited to the aforementioned position and may include any positions of samples included in the coding unit 620b to be determined to impose a limitation.

According to an embodiment, the position of the sample from which certain information may be obtained may be determined according to the shape of the current coding unit 600. According to an embodiment, the block shape information may determine whether the shape of the current coding unit is a square shape or a non-square shape and determine a position of a sample from which certain information is obtained according to the shape. For example, the image-decoding apparatus 100 may use at least one of information on the width of the current coding unit and information of the height of the current coding unit to determine a sample located on a boundary dividing at least one of the width and the height of the current coding unit in half as the sample from which certain information may be obtained. In another example, when the block shape information indicates that the current coding unit has a non-square shape, the image-decoding apparatus 100 may determine one of samples adjacent to the boundary dividing the long side of the current coding unit in haft as the sample from which certain information may be obtained.

When the current coding unit is split into a plurality of coding units, the image-decoding apparatus 100 may use the partition shape mode information to determine a coding unit of a certain position from among the plurality of coding units. According to an embodiment, the image-decoding apparatus 100 may obtain the partition shape mode information from the sample of a certain position included in the current coding unit and split the plurality of coding units generated by splitting the current coding unit by using the partition shape mode information obtained from samples of certain positions respectively included in the plurality of coding units. That is, by using the partition shape mode information obtained from a sample of a certain position included in each of coding units, the coding unit may be recursively split. As the process of recursively splitting the coding unit is described above in relation to FIG. 5, detailed descriptions thereof are omitted.

According to an embodiment, the image-decoding apparatus 100 may determine at least one coding unit by splitting the current coding unit, and the order of processing the at least one coding unit may be determined according to a certain block (for example, the current coding unit).

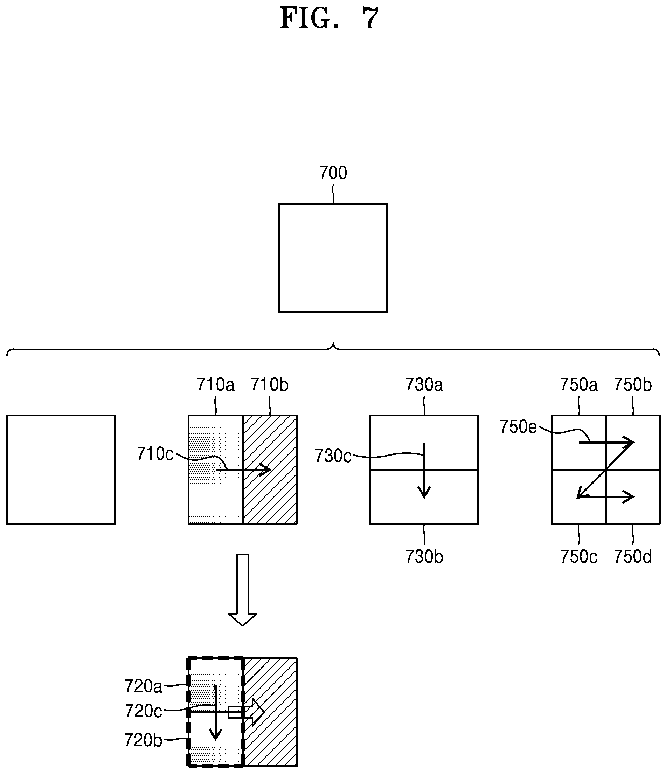

FIG. 7 illustrates an order of processing a plurality of coding units in a case where the plurality of coding units are determined by splitting the current coding unit by the image-decoding apparatus 100, according to an embodiment.

According to an embodiment, the image-decoding apparatus 100 may determine second coding units 710a and 710b by splitting a first coding unit 700 in the vertical direction, determine second coding units 730a and 730b by splitting the first coding unit 700 in the horizontal direction, or determine second coding units 750a, 750b, 750c, and 750d by splitting the first coding unit 700 in the vertical and horizontal directions.

Referring to FIG. 7, the image-decoding apparatus 100 may determine the process order such that the second coding units 710a and 710b determined by splitting the first coding unit 700 in the vertical direction is processed in a horizontal direction 710c. The image-decoding apparatus 100 may determine the processing order of the second coding units 730a and 730b determined by splitting the first coding unit 700 in the horizontal direction to be in a vertical direction 730c. The image-decoding apparatus 100 may determine the second coding unit 750a, 750b, 750c, and 750d determined by splitting the first coding unit 700 in the vertical and horizontal direction according to a predetermined order in which coding units in one row are processed first, and then coding units in a next row are processed (for example, a raster scan order, a z scan order 750e, etc.)

According to an embodiment, the image-decoding apparatus 100 may recursively split the coding units. Referring to FIG. 7, the image-decoding apparatus 100 may determine a plurality of coding units (710a, 710b, 730a, 730b, 750a, 750b, 750c, and 750d) by splitting the first coding unit 700 and recursively split the plurality of determined coding units (710a, 710b, 730a, 730b, 750a, 750b, 750c, and 750d). The method of splitting the plurality of coding units (710a, 710b, 730a, 730b, 750a, 750b, 750c, and 750d) may correspond to the method of splitting the first coding unit 700. Accordingly, the plurality of coding units (710a, 710b, 730a, 730b, 750a, 750b, 750c, and 750d) may each independently be split into a plurality of coding units. Referring to FIG. 7, the image-decoding apparatus 100 may determine the second coding unit 710a and 710b by splitting the first coding unit 700 in the vertical direction and determine whether to each independently split the second coding units 710a and 710b.

According to an embodiment, the image-decoding apparatus 100 may split the left second coding unit 710a in the horizontal direction to obtain the third coding units 720a and 720b and may not split the right second coding unit 710b.

According to an embodiment, the order of processing the coding units may be determined based on the splitting process of the coding units. In other words, the order of processing the split coding units may be determined based on the order of processing the coding units immediately before the splitting. The image-decoding apparatus 100 may determine the order of processing the third coding units 720a and 720b determined by splitting the left second coding unit 710a independently from the right second coding unit 710b. As the third coding units 720a and 720b are determined by splitting the left second coding unit 710a in the horizontal direction, the third coding units 720a and 720b may be processed in the vertical direction 720c. In addition, as the order of processing the left second coding unit 710a and the right second coding unit 710b corresponds to the horizontal direction 710c, the right coding unit 710b may be processed after the third coding units 720a and 720b included in the left second coding unit 710a are processed in the vertical direction 720c. The foregoing features are provided to describe the process of determining the processing order of the coding units according to the coding units before the splitting and are not limited to the embodiments described above. Various methods may be used to independently process according to a predetermined order a plurality of coding units determined through splitting in various shapes.

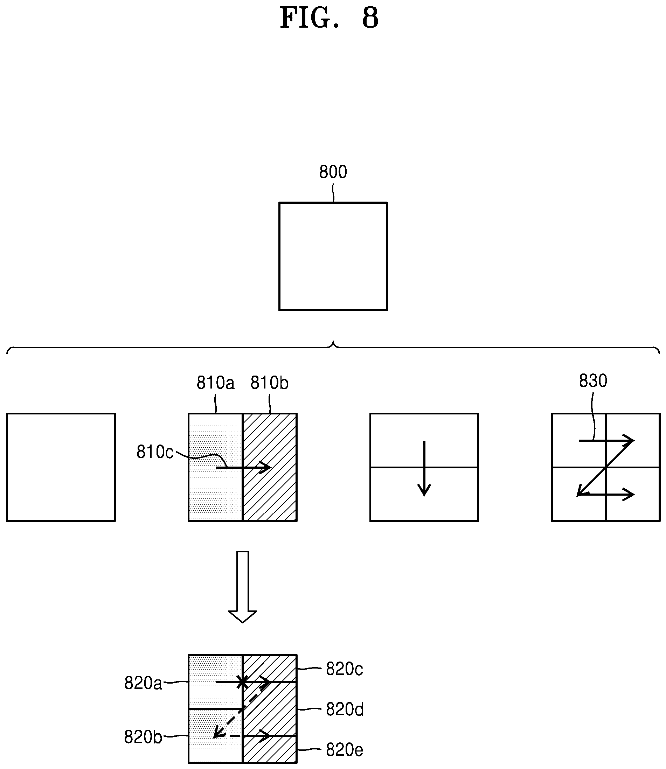

FIG. 8 illustrates a process of determining by the image-decoding apparatus 100 that a current coding unit is split into an odd number of coding units in a case where a coding unit cannot be processed in a predetermined order, according to an embodiment.

According to an embodiment, the image-decoding apparatus 100 may determine that the current coding unit is split into an odd number of coding units based on obtained partition shape mode information. Referring to FIG. 8, a first coding unit 800 having a square shape may be split into second coding units 810a and 810b having a non-square shape, and the second coding units 810a and 810b may each independently be split into third coding units 820a, 820b, 820c, 820d, and 820e. According to an embodiment, the image-decoding apparatus 100 may determine a plurality of third coding units (820a and 820b) by splitting the left coding unit 810a of the second coding units in the horizontal direction and split the right coding unit 810b into an odd number of third coding units (820c, 820d, and 820e).

According to an embodiment, the image-decoding apparatus 100 may determine whether there are an odd number of split coding units by determining whether the third coding units 820a, 820b, 820c, 820d, and 820e can be processed in a predetermined order. Referring to FIG. 8, the image-decoding apparatus 100 may determine the third coding units 820a, 820b, 820c, 820d, and 820e by recursively splitting the first coding unit 800. Based on at least one of the block shape information and the partition shape mode information, the image-decoding apparatus 100 may determine whether the first coding unit 800, the second coding unit (810a and 810b), or the third coding unit (820a, 820b, 820c, 820d, and 820e) is split into an odd number of coding units. For example, the right coding unit of the second coding units 810a and 810b may be split into an odd number of third coding units (820c, 820d, and 820e). The order of processing a plurality of coding units included in the first coding unit 800 may correspond to a predetermined order (for example, a z-scan order 830), and the image-decoding apparatus 100 may determine whether the third coding units (820c, 820d, 820e) determined by splitting the right second coding unit 810b into an odd number of coding units satisfy the conditions for processing in the predetermined order.

According to an embodiment, the image-decoding apparatus 100 may determine whether the third coding units 820a, 820b, 820c, 820d, and 820e included in the first coding unit 800 satisfy the conditions for processing in the predetermined order, and the conditions may relate to whether at least one of the width and the height of the second coding unit 810a and 810b is divided in half along the boundary of the third coding units 820a, 820b, 820c, 820d, and 820e. For example, the third coding units 820a and 820b determined by dividing the height of the left second coding unit 810a having a non-square shape in half may satisfy the conditions. As the boundary of the third coding units 820c, 820d, and 820e determined by splitting the second coding unit 810b into three coding units fails to divide the width or the height of the right second coding unit 810b in haft, the third coding units 820c, 820d, and 820e may not be determined as not satisfying the conditions. The image-decoding apparatus 100 may determine such dissatisfaction of conditions as disconnection of scan order and may determine to split the right second coding unit 810b into an odd number of coding units based on the determination result. According to an embodiment, the image-decoding apparatus 100 may impose a certain limitation on a coding unit of a certain position from among the odd number of split coding units, and as various embodiments are provided above in relation to the limitation or certain positions, detailed descriptions thereon are omitted.

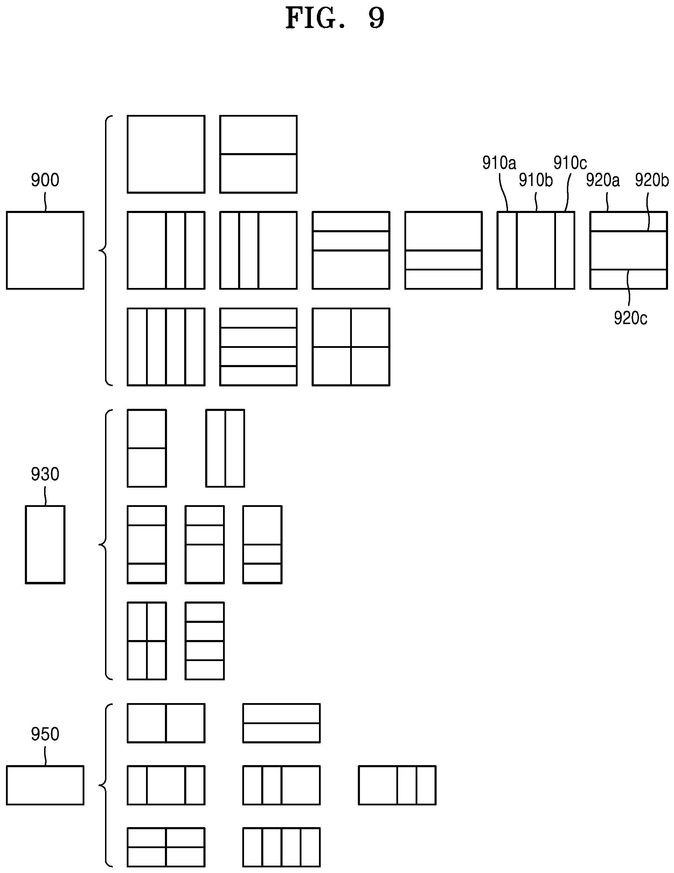

FIG. 9 illustrates a process of determining, by the image-decoding apparatus 100, at least one coding unit by splitting a first coding unit 900, according to an embodiment.

According to an embodiment, the image-decoding apparatus 100 may split the first coding unit 900 based on the partition shape mode information obtained through the bitstream acquisition unit 110. The first coding unit 900 having a square shape may be split into four coding units each having a square shape or may be split into a plurality of coding units each having a non-square shape. For example, referring to FIG. 9, when the first coding unit 900 has a square shape, and the partition shape mode information indicates that the first coding unit 900 is split into non-square coding units, the image-decoding apparatus 100 may split the first coding unit 900 into a plurality of non-square coding units. More specifically, when the partition shape mode information indicates that an odd number of coding units are determined by splitting the first coding unit 900 in the horizontal or vertical direction, the image-decoding apparatus 100 may split the first coding unit 900 having a square shape into second coding units 910a, 910b, and 910c determined by vertical splitting or second coding units 920a, 920b, and 920c determined by horizontal splitting as the odd number of coding units.

According to an embodiment, the image-decoding apparatus 100 may determine whether the second coding units 910a, 910b, 910c, 920a, 920b, and 920c included in the first coding unit 900 satisfy the conditions for processing in the predetermined order, and the conditions may relate to whether at least one of the width and the height of the first coding unit 900 is divided in half along the boundary of the second coding units 910a, 910b, 910c, 920a, 920b, and 920c. Referring to FIG. 9, as the boundary of the second coding units 910a, 910b, and 910c determined by splitting the first coding unit 900 having a square shape in the horizontal direction fails to divide the width of the first coding unit 900 in half, the first coding unit 900 may be determined as not satisfying the conditions for processing in the predetermined order. In addition, as the boundary of the second coding units 920a, 920b, and 920c determined by splitting the first coding unit 900 having a square shape in the vertical direction fails to divide the height of the first coding unit 900 in half, the first coding unit 900 may be determined as not satisfying the conditions for processing in the predetermined order. The image-decoding apparatus 100 may determine such dissatisfaction of conditions as disconnection of scan order and may determine to split the first coding unit 900 into an odd number of coding units based on the determination result. According to an embodiment, the image-decoding apparatus 100 may impose a certain limitation on a coding unit of a certain position from among the odd number of split coding units, and as various embodiments are provided above in relation to the limitation or certain positions, detailed descriptions thereon are omitted.

According to an embodiment, the image-decoding apparatus 100 may determine coding units having various shapes by splitting the first coding unit.

Referring to FIG. 9, the image-decoding apparatus 100 may split the first coding unit 900 having a square shape and the first coding unit (930 or 950) having a non-square shape into coding units having various shapes.

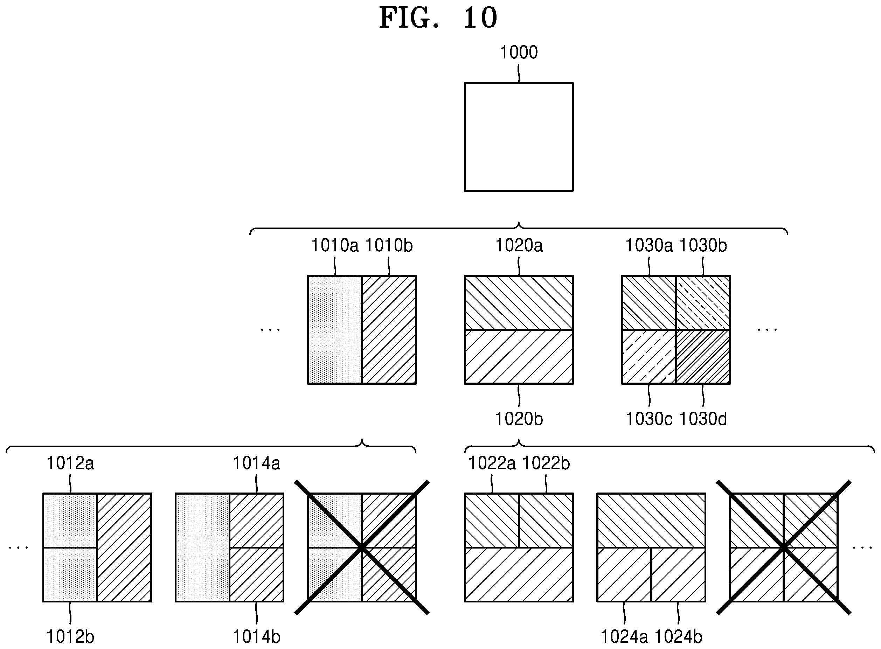

FIG. 10 illustrates that when a second coding unit having a non-square shape and determined by splitting a first coding unit 1000 satisfies predetermined conditions, the shape in which the second coding unit is split is limited according to an embodiment.

According to an embodiment, the image-decoding apparatus 100 may determine to split the first coding unit 1000 having a square shape into second coding units (1010a, 1010b, 1020a, and 1020b) each having a non-square shape based on the partition shape mode information obtained through the bitstream acquisition unit 110. The second coding units (1010a, 1010b, 1020a, and 1020b) may be split independently. Accordingly, the image-decoding apparatus 100 may determine whether to split each second coding unit into a plurality of coding units based on the partition shape mode information related to each of the second coding units (1010a, 1010b, 1020a, and 1020b). According to an embodiment, the image-decoding apparatus 100 may determine third coding units 1012a and 1012b by horizontally splitting the left second coding unit 1010a having a non-square shape and determined by splitting the first coding unit 1000 in the horizontal direction. However, when the left second coding unit 1010a is split in the horizontal direction, the image-decoding apparatus 100 may impose a limitation such that the right second coding unit 1010b is not split in the horizontal direction in which the left second coding unit 1010a is split. When the right second coding unit 1010b is split in the same direction as the left second coding unit, thereby determining third coding units 1014a and 1014b, the left second coding unit 1010a and the right second coding unit 1010b may each independently be split in the horizontal direction to determine the third coding units 1012a, 1012b, 1014a, and 1014b. However, such splitting may have the same results as when the image-decoding apparatus 100 splits the first coding unit 1000 into four square second coding units 1030a, 1030b, 1030c, and 1030d based on the partition shape mode information and may also be considered inefficient in terms of image decoding.

According to an embodiment, the image-decoding apparatus 100 may determine third coding units (1022a, 1022b, 1024a, and 1024b) by vertically splitting the second coding unit (1020a or 1020b) having a non-square shape and determined by splitting the first coding unit 1000 in the vertical direction. However, when the image-decoding apparatus 100 splits one of the second coding units (for example, the above second coding unit 1020a) in the vertical direction, the other second coding unit (for example, the below coding unit 1020b) may be restricted from being split in the vertical direction as the above second coding unit 1020a.

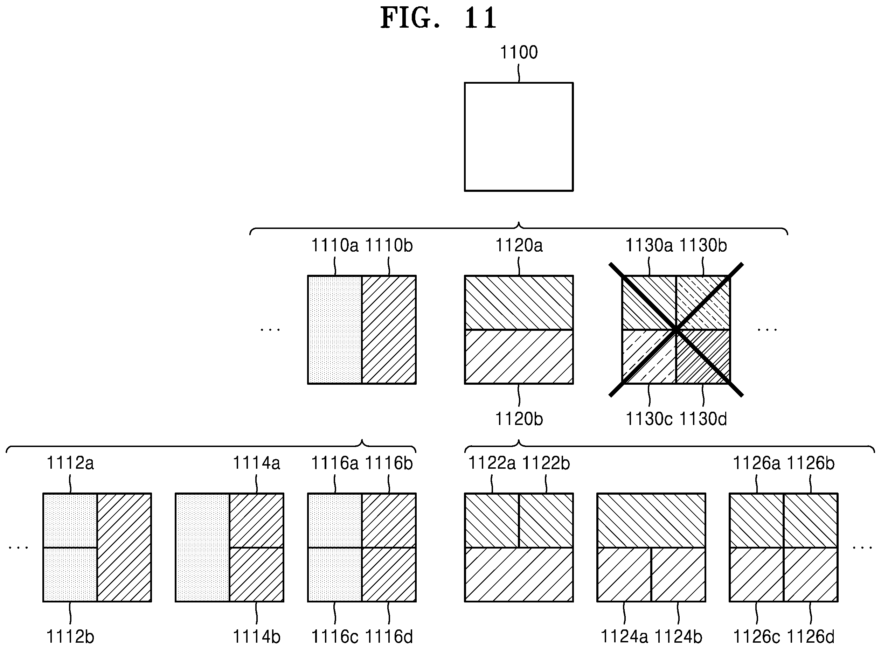

FIG. 11 illustrates a process of splitting, by the image-decoding apparatus 100, a coding unit having a square shape in a case where partition shape mode information is incapable of representing a split into four square coding units, according to an embodiment.

According to an embodiment, the image-decoding apparatus 100 may determine second coding units (1110a, 1110b, 1120a, 1120b...) by splitting a first coding unit 1100 based on the partition shape mode information. The partition shape mode information may include information on various shapes in which a coding unit is split. However, the information on various shapes may not include information for splitting a coding unit into four square coding units. According to such partition shape mode information, the image-decoding apparatus 100 may not split the first coding unit 1100 having a square shape into four second coding units 1130a, 1130b, 1130c, and 1130d each having a square shape. The image-decoding apparatus 100 may determine the second coding units (1110a, 1110b, 1120a, 1120b...) each having a non-square shape based on the partition shape mode information.

According to an embodiment, the image-decoding apparatus 100 may split the second coding units (1110a, 1110b, 1120a, 1120b...) each having a non-square shape in an independent manner. The second coding units (1110a, 1110b, 1120a, 1120b...) may each be split in a predetermined order by a recursive method, and such splitting may correspond to the splitting of the first coding unit 1100 based on the partition shape mode information.

For example, the image-decoding apparatus 100 may determine the third coding units 1112a and 1112b each having a square shape by splitting the left second coding unit 1110a in the horizontal direction and determine the third coding units 1114a and 1114b each having a square shape by splitting the right second coding unit 1110b in the horizontal direction. Furthermore, the image-decoding apparatus 100 may determine third coding units 1116a, 1116b, 1116c, and 1116d each having a square shape by splitting both the left second coding unit 1110a and the right second coding unit 1110b in the horizontal direction. In this case, the coding units may be determined in the same shape as when the first coding unit 1100 is split into four second coding units 1130a, 1130b, 1130c, and 1130d each having a square shape.

In another example, the image-decoding apparatus 100 may determine the third coding units 1122a and 1122b each having a square shape by splitting the above second coding unit 1120a in the vertical direction and determine the third coding units 1124a and 1124b each having a square shape by splitting the below second coding unit 1120b in the vertical direction. Furthermore, the image-decoding apparatus 100 may determine third coding units 1126a, 1126b, 1126c, and 1126d each having a square shape by splitting both the above second coding unit 1120a and the below second coding unit 1120b in the vertical direction. In this case, the coding units may be determined in the same shape as when the first coding unit 1100 is split into four second coding units 1130a, 1130b, 1130c, and 1130d each having a square shape.

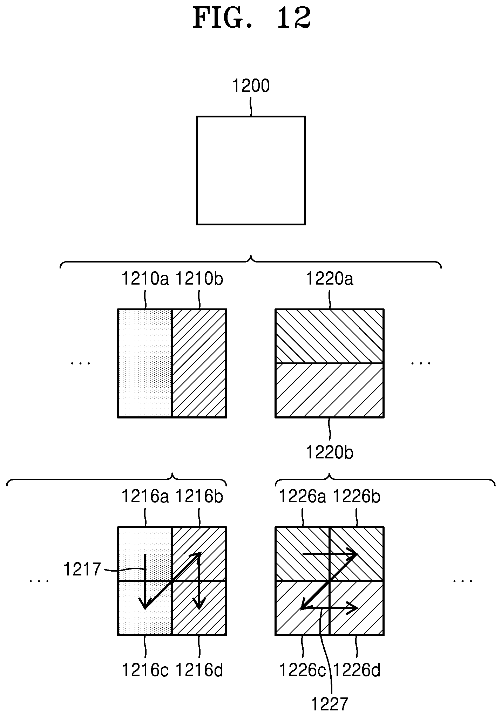

FIG. 12 illustrates that a processing order among a plurality of coding units may change according to a splitting process of the coding units, according to an embodiment.

According to an embodiment, the image-decoding apparatus 100 may split a first coding unit 1200 based on the partition shape mode information. When the block has a square shape, and the partition shape mode information indicates that the first coding unit 1200 is split in at least one of the horizontal direction and the vertical direction, the image-decoding apparatus 100 may split the first coding unit 1200 and determine second coding units (for example, 1210a, 1210b, 1220a, and 1220b). Referring to FIG. 12, the second coding units 1210a, 1210b, 122a, and 1220b each having a non-square shape and determined by splitting the first coding unit 1200 in the horizontal direction or the vertical direction may each independently be split based on the partition shape mode information for each of the second coding units. For example, the image-decoding apparatus 100 may determine the third coding units 1216a, 1216b, 1216c, and 1216d by horizontally splitting the second coding units 1210a and 1210b generated by splitting the first coding unit 1200 in the horizontal direction and determine the third coding units 1226a, 1226b, 1226c, and 1226d by vertically splitting the second coding unit 1220a and 1220b generated by splitting the first coding unit 1200 in the horizontal direction. As such splitting process of the second coding units 1210a, 1210b, 1220a, and 1220b is described above in relation to FIG. 11, detailed descriptions thereof are omitted.

According to an embodiment, the image-decoding apparatus 100 may process the coding units in a predetermined order. As the features concerning the processing of the coding units in a predetermined order are described above in relation to FIG. 7, detailed descriptions thereof are omitted. Referring to FIG. 12, the image-decoding apparatus 100 may determine four third coding units (1216a, 1216b, 1216c, and 1216d or 1226a, 1226b, 1226c, and 1226d) each having a square shape by splitting the first coding unit 1200 having a square shape. According to an embodiment, the image-decoding apparatus 100 may determine a processing order for the third coding units 1216a, 1216b, 1216c, 1216d, 1226a, 1226b, 1226c, and 1226d each having a square shape according to a shape in which the first coding unit 1200 is split.

According to an embodiment, the image-decoding apparatus 100 may determine the third coding units 1216a, 1216b, 1216c, and 1216d by horizontally splitting the second coding units 1210a and 1210b generated by vertical splitting. The image-decoding apparatus 100 may first process the third coding units 1216a, 1216b, 1216c, and 1216d according to an order 1217 in which the third coding units 1216a and 1216c included in the left second coding unit 1210a are first processed in the vertical direction, and then the third coding unit 1216b and 1216d included in the right second coding unit 1210b are processed in the vertical direction.

According to an embodiment, the image-decoding apparatus 100 may determine the third coding units 1226a, 1226b, 1226c, and 1226d by horizontally splitting the second coding units 1220a and 1220b generated by horizontal splitting. The image-decoding apparatus 100 may first process the third coding units 1226a, 1226b, 1226c, and 1226d according to an order 1227 in which the third coding units 1226a and 1226b included in the above second coding unit 1220a are first processed in the horizontal direction, and then the third coding unit 1226b and 1226d included in the below second coding unit 1220b are processed in the horizontal direction.

Referring to FIG. 12, the third coding units 1216a, 1216b, 1216c, 1216d, 1226a, 1226b, 1226c, and 1226d each having a square shape may be determined by splitting the second coding units 1210a, 1210b, 1220a, 1220b. Although the second coding units1210a and 1210b determined by vertical splitting and the second coding units 1220a and 1220b determined by horizontal splitting have different partition shapes from each other, according to the third coding units 1216a, 1216b, 1216c, 1216d, 1226a, 1226b, 1226c, and 1226d determined thereafter, ultimately, the first coding unit 1200 may be partitioned into the coding units having the same shape. Accordingly, even when the image-decoding apparatus 100 determines coding units that eventually have the same shape by recursively splitting the coding units through different processes based on the partition shape mode information, the plurality of coding units determined to have the same shape may be processed in different orders from each other.

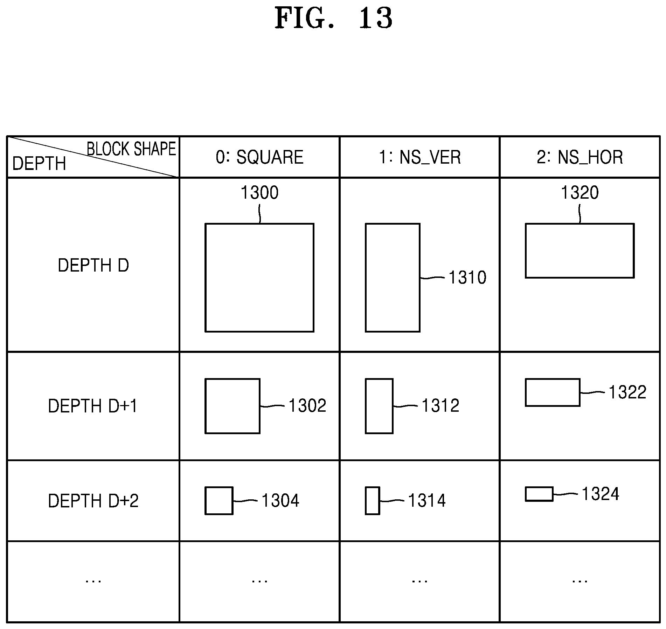

FIG. 13 illustrates a process of determining a depth of a coding unit according to a change in a shape and size of the coding unit when a plurality coding units are determined by recursively splitting the coding unit, according to an embodiment.

According to an embodiment, the image-decoding apparatus 100 may determine the depth of a coding unit according to a predetermined criterion. For example, the predetermined criterion may be the length of a long side of the coding unit. When the length of the long side of the current coding unit is divided to be 2n times (n>0) smaller than the long-side length of the coding unit before being partitioned, the image-decoding apparatus 100 may determine the depth of the current coding unit to be increased by n from the depth of the coding unit before being partitioned. Hereinafter, the coding unit with increased depth may be represented as a coding unit of a lower depth.

Referring to FIG. 13, according to an embodiment, the image-decoding apparatus 100 may determine a second coding unit 1302, a third coding unit 1304, etc. which have a lower depth by splitting a first coding unit 1300 having a square shape based on the block shape information representing a square shape (for example, the block shape information may represent "0:SQUARE"). When the size of the first coding unit 1300 having a square shape is 2Nx2N, the second coding unit 1302 determined by splitting the width and height of the first coding unit 1300 by half may have the size of NxN. Moreover, the third coding unit 1304 determined by splitting the width and height of the second coding unit 1302 by half may have the size of N/2xN/2. In this case, the width and height of the third coding unit 1304 may respectively correspond to 1/4 times the width and height of the first coding unit 1300. When the depth of the first coding unit 1300 is D, the depth of the second coding unit 1302 having the width and height that are half those of the first coding unit 1300 may be D+1, and the depth of the third coding unit 1304 having the width and height that are one-fourth those of the first coding unit 1300 may be D+2.

According to an embodiment, based on the block shape information representing a non-square shape (for example, the block shape information may represent "1: NS_VER" indicating a block has a non-square shape having the height longer than the width or "2: NS_HOR" indicating that a block has a non-square having the width longer than the height), the image-decoding apparatus 100 may determine a second coding unit (1312 or 1322), a third coding unit (1314 or 1324), etc. of which have a lower depth by splitting a first coding unit (1310 or 1320) having a non-square shape.

The image-decoding apparatus 100 may determine the second coding unit (for example, 1302, 1312, 1322, etc.) by splitting at least one of the width and height of the first coding unit 1310 having the size of Nx2N. That is, the image-decoding apparatus 100 may determine the second coding unit 1302 having the size of NxN or the second coding unit 1322 having the size of NxN/2 by splitting the first coding unit 1310 in the horizontal direction and may determine the second coding unit 1312 having the size of N/2xN by splitting the first coding unit 1310 in the horizontal direction and vertical direction.

According to an embodiment, the image-decoding apparatus 100 may determine the second coding unit (for example, 1302, 1312, 1322, etc.) by splitting at least one of the width and height of the first coding unit 1320 having the size of 2NxN. That is, the image-decoding apparatus 100 may determine the second coding unit 1302 having the size of NxN or the second coding unit 1312 having the size of N/2xN by splitting the first coding unit 1320 in the vertical direction and may determine the second coding unit 1322 having the size of NxN/2 by splitting the first coding unit 1320 in the horizontal direction and vertical direction.

According to an embodiment, the image-decoding apparatus 100 may determine the third coding unit (for example, 1304, 1314, 1324, etc.) by splitting at least one of the width and height of the second coding unit 1302 having the size of NxN. That is, by splitting the second coding unit 1302 in the vertical direction and horizontal direction, the image-decoding apparatus 100 may determine the third coding unit 1304 having the size of N/2xN/2, determine the third coding unit 1314 having the size of N/4xN/2, or determine the third coding unit 1324 having the size of N/2xN/4.

According to an embodiment, the image-decoding apparatus 100 may determine the third coding unit (for example, 1304, 1314, 1324, etc.) by splitting at least one of the width and height of the second coding unit 1312 having the size of N/2xN. That is, the image-decoding apparatus 100 may determine the third coding unit 1304 having the size of N/2xN/2 or the third coding unit 1324 having the size of N/2xN/4 by splitting the second coding unit 1312 in the horizontal direction or may determine the third coding unit 1314 having the size of N/4xN/2 by splitting the second coding unit 1312 in the vertical direction and horizontal direction.

According to an embodiment, the image-decoding apparatus 100 may determine the third coding unit (for example, 1304, 1314, 1324, etc.) by splitting at least one of the width and height of the second coding unit 1322 having the size of NxN/2. That is, the image-decoding apparatus 100 may determine the third coding unit 1304 having the size of N/2xN/2 or the third coding unit 1314 having the size of N/4xN/2 by splitting the second coding unit 1322 in the vertical direction or may determine the third coding unit 1324 having the size of N/2xN/4 by splitting the second coding unit 1322 in the vertical direction and horizontal direction.

According to an embodiment, the image-decoding apparatus 100 may split a coding unit having a square shape (for example, 1300, 1302, and 1304) in the horizontal direction or vertical direction. For example, the first coding unit 1310 having the size of Nx2N may be determined by splitting the first coding unit 1300 having the size of 2Nx2N in the vertical direction, or the first coding unit 1320 having the size of 2NxN may be determined by splitting the first coding unit 1300 in the horizontal direction. According to an embodiment, when the depth is determined based on the length of a longest side of a coding unit, the depth of a coding unit determined by splitting the first coding unit 1300 having the size of 2Nx2N in the horizontal direction or vertical direction may be equal to the depth of the first coding unit 1300.

According to an embodiment, the width and height of the third coding unit (1314 or 1324) may correspond to one-fourth of the width and height of the first coding unit (1310 or 1320). When the depth of the first coding unit (1310 or 1320) is D, the depth of the second coding unit (1312 or 1322) having the width and height corresponding to one-half of the width and height of the first coding unit (1310 or 1320) may be D+1, and the depth of the third coding unit (1314 or 1324) having the width and height corresponding to one-fourth of the width and height of the first coding unit (1310 or 1320) may be D+2.

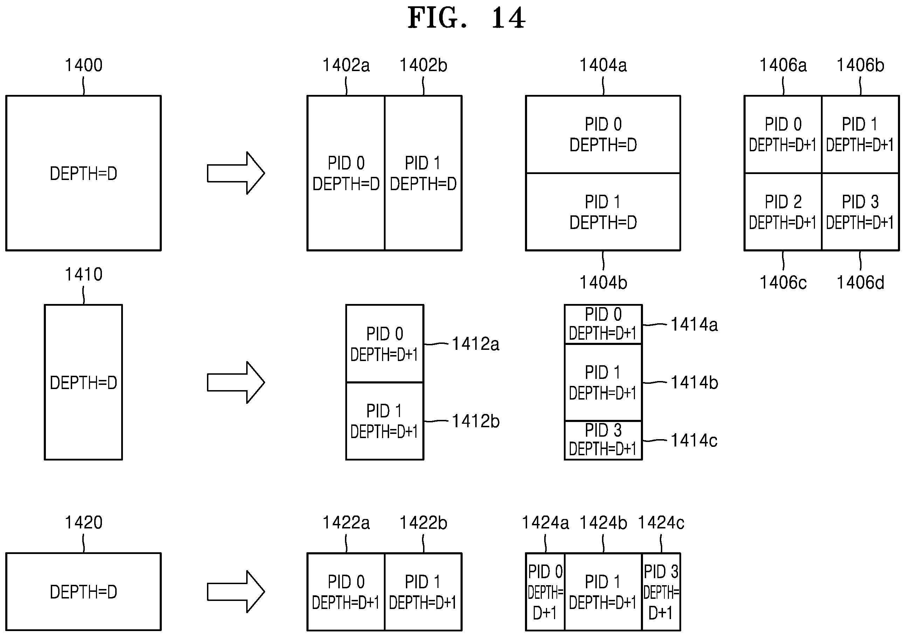

FIG. 14 illustrates a depth and a part index (hereinafter, "PID") for distinguishing coding units, which may be determined according to shapes and sizes of the coding units, according to an embodiment.

According to an embodiment, the image-decoding apparatus 100 may determine second coding units having various shapes by splitting a first coding unit 1400 having a square shape. Referring to FIG. 14, the image-decoding apparatus 100 may determine the second coding units 1402a, 1402b, 1404a, 1404b, 1406a, 1406b, 1406c, and 1406d by splitting the first coding unit 1400 in at least one of the vertical direction and the horizontal direction according to the partition shape mode information. That is, the image-decoding apparatus 100 may determine the second coding units 1402a, 1402b, 1404a, 1404b, 1406a, 1406b, 1406c, and 1406d based on the partition shape mode information for the first coding unit 1400.

According to an embodiment, the depth of each of the second coding units 1402a, 1402b, 1404a, 1404b, 1406a, 1406b, 1406c, and 1406d determined according to the partition shape mode information for the first coding unit 1400 having a square shape may be determined based on the length of a long side. For example, as the length of a side of the first coding unit 1400 having a square shape is equal to the length of a long side of the second coding unit (1402a, 1402b, 1404a, and 1404b) having a non-square shape, the depth of the first coding unit 1400 and the depth of the second coding unit (1402a, 1402b, 1404a, and 1404b) having a non-square shape may be the same, i.e., D. On the other hand, when the image-decoding apparatus 100 splits the first coding unit 1400 into four second coding units (1406a, 1406b, 1406c, and 1406d) each having a square shape, as the length of a side of the second coding unit (1406a, 1406b, 1406c, and 1406d) having a square shape is one-half of the length of a side of the first coding unit 1400, the depth of the second coding unit (1406a, 1406b, 1406c, and 1406d) may be D+1 which is one level lower than D, the depth of the first coding unit 1400.

According to an embodiment, the image-decoding apparatus 100 may horizontally split a first coding unit 1410 having a shape in which the height is longer than the width into a plurality of second coding units (1412a, 1412b, 1414a, 1414b, and 1414c) according to the partition shape mode information. According to an embodiment, the image-decoding apparatus 100 may vertically split a first coding unit 1420 having a shape in which the width is longer than the height into a plurality of second coding units (1422a, 1422b, 1424a, 1424b, and 1424c) according to the partition shape mode information.

According to an embodiment, the depth of the second coding unit (1412a, 1412b, 1414a, 1414b, 1414c, 1422a, 1422b, 1424a, 1424b, and 1424c) determined by the partition shape mode information for the first coding unit (1410 or 1420) having a non-square shape may be determined by the length of a long side. For example, as the length of a side of the second coding unit (1412a and 1412b) having a square shape is one-half of the length of a side of the first coding unit 1410 having a non-square shape in which the height is longer than the width, the depth of the second coding unit (1412a and 1412b) having a square shape may be D+1 which is one level lower than D, the depth of the first coding unit 1410 having a non-square shape.

The image-decoding apparatus 100 may split the first coding unit 1410 having a non-square shape into an odd number of second coding units 1414a, 1414b, and 1414c based on the partition shape mode information. The odd number of second coding units 1414a, 1414b, and 1414c may include the second coding units 1414a and 1414c each having a non-square shape and the second coding unit 1414b having a square shape. In this case, as the length of the long sides of the second coding units 1414a and 1414c having a non-square shape and the length of a side of the second coding unit 1414b having a square shape are each one-half of the length of a side of the first coding unit 1410, the depth of the second coding units 1414a, 1414b, and 1414c may be D+1 which is one level lower than D, the depth of the first coding unit 1410. The image-decoding apparatus 100 may determine the depths of the coding unit related to the first coding unit 1420 having a non-square shape in which the width is longer than the height in a manner that corresponds to the method of determining the depths of the coding units related to the first coding unit 1410.

According to an embodiment, in determining a part index (PID) for distinguishing partitioned coding units from each other, when an odd number of partitioned coding units have different sizes from each other, the image-decoding apparatus 100 may determine the PID based on a size ratio between the coding units. Referring to FIG. 14, the coding unit 1414b located at the center from among the odd number of partitioned coding units (1414a, 1414b, and 1414c) may have the same height as the other coding units (1414a and 1414c) yet have a height two times longer than the height of the other coding units (1414a and 1414c). That is, in this case, the coding unit 1414b located at the center may have a size corresponding to two of the other coding units (1414a and 1414c). Accordingly, when the part index (PID) of the coding unit 1414b located at the center according to a scan order is 1, the part index of the coding unit 1414c located next in order may be 3, which is a value incremented by 2 from the previous part index. That is, a discontinuity may exist in the index values. According to an embodiment, the image-decoding apparatus 100 may determine whether the odd number of partitioned coding units have the same size based on whether a discontinuity exists in the part index values for distinguishing the partitioned coding units from each other.

According to an embodiment, the image-decoding apparatus 100 may determine whether a plurality of coding units determined by splitting the current coding unit are partitioned in a particular partition shape, based on the part index values for distinguishing the plurality of coding units from each other. Referring to FIG. 14, the image-decoding apparatus 100 may determine an even number of coding units (1412a and 1412b) or determine an odd number of coding units (141a, 1414b, and 1414c) by splitting the first coding unit 1410 having a rectangular shape in which the height is longer than the width. To distinguish a plurality of coding units from each other, the image-decoding apparatus 100 may use the part index (PID) representing each coding unit. According to an embodiment, the PID may be obtained from a sample of a certain position (for example, a top-left sample) included in each coding unit.

According to an embodiment, the image-decoding apparatus 100 may determine a coding unit of a certain position from among the coding units determined through splitting, by using the PID for distinguishing the coding units from each other. According to an embodiment, when the partition shape mode information for the first coding unit 1410 having a rectangular shape in which the height is longer than the width indicates a ternary-split into three coding units, the image-decoding apparatus 100 may split the first coding unit 1410 into three coding units (1414a, 1414b, and 1414c). The image-decoding apparatus 100 may assign a PID for each of the three coding units (1414a, 1414b, and 1414c). The image-decoding apparatus 100 may compare the PIDs of coding units to determine a center coding unit from among an odd number of partitioned coding units. Based on PIDs of coding unit, the image-decoding apparatus 100 may determine the coding unit 1414b having a PID corresponding to a center value from among the PIDs as a coding unit located at the center from among the coding units determined by splitting the first coding unit 1410. According to an embodiment, in determining a PID for distinguishing partitioned coding units from each other, when the coding units have different sizes from each other, the image-decoding apparatus 100 may determine the PID based on a size ratio between the coding units. Referring to FIG. 14, the coding unit 1414b generated by splitting the first coding unit 1410 may have the same width as the other coding units (1414a and 1414c) while the height thereof may be twice the height of the other coding units (1414a and 1414c). In this case, when the PID of the coding unit 1414b located at the center is 1, the part index of the coding unit 1414c located next in order may be 3, which is a value incremented by 2 from the previous PID. As such, when PIDs increase uniformly and then an increment of the PIDs varies, the image-decoding apparatus 100 may determine that a coding unit is split into a plurality of coding units, which include a coding unit having a different size than the other coding units. According to an embodiment, when the partition shape mode information indicates splitting into an odd number of coding units, the image-decoding apparatus 100 may split the current coding unit into an odd number of coding units, wherein a coding unit of a certain position (e.g., a center coding unit) from among the odd number of coding units has a different size than the other coding units. In this case, the image-decoding apparatus 100 may determine the center coding unit that has a different size than the other coding units by using the PID. However, the size or position of the coding unit at a predetermined position to be determined is specified for the purpose of describing an embodiment and should not be construed as being limited thereto. It should be interpreted that various PIDs and various positions and sizes of coding units may also be used.

According to an embodiment, the image-decoding apparatus 100 may use a predetermined data unit from which recursive splitting of coding unit begins.

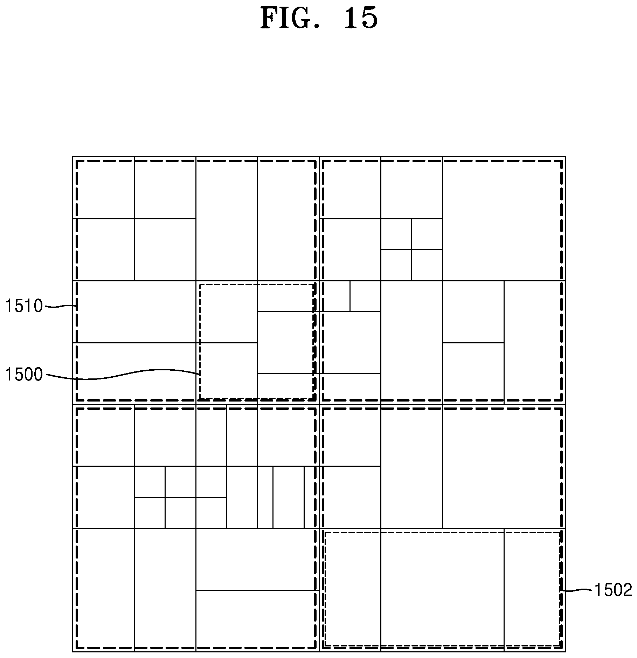

FIG. 15 illustrates that a plurality of coding units are determined according to a plurality of predetermined data units included in a picture, according to an embodiment.

According to an embodiment, the predetermined data unit may be defined as a data unit from which a coding unit starts to be recursively split by using partition shape mode information. That is, the predetermined data unit may correspond to a coding unit of a highest depth level used in the process of determining a plurality of coding units partitioning a current picture. Hereinafter, such predetermined data unit may be referred to as a reference data unit for convenience.

According to an embodiment, the reference data unit may represent a predetermined size and shape. According to an embodiment, the reference data unit may include MxN samples. In this regard, M and N may be identical to each other and may each be an integer represented by a power of 2. That is, the reference data unit may represent a square shape or a non-square shape and may be split into an integer number of coding units.

According to an embodiment, the image-decoding apparatus 100 may split the current picture into a plurality of reference data units. According to an embodiment, the image-decoding apparatus 100 may split the plurality of reference data units partitioning the current picture by using partition shape mode information for each reference data unit. Such splitting process of the reference data unit may correspond to a splitting process using a quad-tree structure.

According to an embodiment, the image-decoding apparatus 100 may predetermine a minimum size of the reference data unit included in the current picture. Accordingly, the image-decoding apparatus 100 may determine the reference data unit of various sizes greater than or equal to the minimum size and determine at least one coding unit by using partition shape mode information based on the determined reference data unit.

Referring to FIG. 15, the image-decoding apparatus 100 may use a reference coding unit 1500 having a square shape or use a reference coding unit 1502 having a non-square shape. According to an embodiment, the shape and size of the reference coding unit may be determined by various data units including at least one reference coding unit (for example, a sequence, a picture, a slice, a slice segment, a tile, a tile group, a coding tree unit, etc.)

According to an embodiment, the bitstream acquisition unit 110 of the image-decoding apparatus 100 may obtain at least one of information on the shape of the reference coding unit and information on the size of the reference coding unit from the bitstream for each of the various data units. As the process of determining at least one coding unit included in the reference coding unit 1500 having a square shape is described through the process of splitting the current coding unit 300 as illustrated in FIG. 3, and the process of determining at least one coding unit included in the reference coding unit 1502 having a non-square shape is descried through the process of splitting the current coding unit (400 or 450) as illustrated in FIG. 4, detailed descriptions thereon are omitted.

According to an embodiment, to determine the size and shape of a reference coding unit according to some data units predetermined based on certain conditions, the image-decoding apparatus 100 may use an index for identifying the size and shape of the reference coding unit. That is, the bitstream acquisition unit 110 may obtain from a bitstream only an index for identifying the size and shape of a reference coding tree unit for each data unit (e.g., a slice, a slice segment, a tile, a tile group, a coding tree unit, etc.) that satisfies a predetermined condition (e.g., having a size equal to or smaller than a slice) from among various data units (e.g., a sequence, a picture, a slice segment, a tile, a tile group, a coding tree unit, etc.) The image-decoding apparatus 100 may determine the size and shape of the reference data unit for each data unit satisfying the predetermined condition, by using the index. When the information on the shape of the reference coding unit and the information on the size of the reference coding unit are obtained from the bitstream and used for each data unit having a relatively small size, the bitstream utilization efficiency may not be high, and thus, only the index may be obtained and used instead of directly obtaining the information on the shape of the reference coding unit and the information on the size of the reference coding unit. In this case, at least one of the size and shape of the reference coding unit that corresponds to the index representing the size and shape of the reference coding unit may be predetermined. That is, the image-decoding apparatus 100 may determine at least one of the size and shape of the reference coding unit included in the data unit used as a reference for acquiring the index by selecting at least one of the predetermined size and shape of the reference coding unit according to the PID.

According to an embodiment, the image-decoding apparatus 100 may use at least one reference coding unit included in a coding tree unit. That is, the coding tree unit partitioning an image may include at least one reference coding unit, and coding units may be determined through recursive splitting of each reference coding unit. According to an embodiment, at least one of the width and height of the coding tree unit may correspond to an integer multiple of at least one of the width and height of the reference coding unit. According to an embodiment, the size of the reference coding unit may correspond to the size obtained by splitting the coding tree unit n times according to a quad-tree structure. That is, the image-decoding apparatus 100 may determine the reference coding unit by splitting the coding tree unit n times according to a quad-tree structure and split the reference coding unit based on at least one of the block shape information and the partition shape mode information, according to various embodiments.

According to an embodiment, the image-decoding apparatus 100 may obtain, from the bitstream, and use the block shape information indicating a shape of the current coding unit or the partition shape mode information indicating a method of splitting the current coding unit. The partition shape mode information may be included in the bitstream related to various data units. For example, the image-decoding apparatus 100 may use the partition shape mode information included in a sequence parameter set, a picture parameter set, a video parameter set, a slice header, a slice segment header, a tile header, and a tile group header. In addition, the image-decoding apparatus 100 may obtain, from the bitstream, and use a syntax element corresponding to the block shape information or the partition shape mode information for each coding tree unit and reference coding unit.

Hereinafter, a method of determining a partitioning rule according to an embodiment is described in detail.

The image-decoding apparatus 100 may determine a rule for partitioning an image. The partitioning rule may be predetermined between the image-decoding apparatus 100 and the image-encoding apparatus 200. The image-decoding apparatus 100 may determine the partitioning rule for the image based on the information obtained from the bitstream. The image-decoding apparatus 100 may determine the partitioning rule based on the information obtained from at least one of a sequence parameter set, a picture parameter set, a video parameter set, a slice header, a slice segment header, a tile header, and a tile group header. The image-decoding apparatus 100 may determine the partitioning rule differently according to a frame, a slice, a tile, a temporal layer, a coding tree unit, or a coding unit.

The image-decoding apparatus 100 may determine the partitioning rule based on the block shape of the coding unit. The block shape may include the size, shape, width-to-height ratio, and direction of the coding unit. The image-encoding apparatus 200 and the image-decoding apparatus 100 may predetermined to determine the partitioning rule based on the block shape of the coding unit. However, the present disclosure is not limited thereto. The image-decoding apparatus 100 may determine the partitioning rule based on the information obtained from the bitstream received from the image-encoding apparatus 200.

The shape of the coding unit may include a square shape and a non-square shape. When the width of the coding unit is equal to the height thereof, the image-decoding apparatus 100 may determine the shape of the coding unit as a square shape. When the width of the coding unit is different from the height thereof, the image-decoding apparatus 100 may determine the shape of the coding unit as a non-square shape.

The size of the coding unit may include various sizes such as 4x4, 8x4, 4x8, 8x8, 16x4, 16x8, ..., 256x256. The size of the coding unit may be categorized according to the length of a long side, the length of a short side, or an area of the coding unit. The image-decoding apparatus 100 may apply the same partitioning rule to coding units categorized into the same group. For example, the image-decoding apparatus 100 may categorize coding units having the same long-side length into a group of the same size. In addition, the image-decoding apparatus 100 may apply the same partitioning rule to coding units having the same long-side length.

The ratio between the width and the height of the coding unit may include 1:2, 2:1, 1:4, 4:1, 1:8, 8:1, 1:16, 16:1, 32:1, 1:32, etc. Furthermore, the direction of the coding unit may include a horizontal direction and a vertical direction. The horizontal direction may indicate a case in which the length of the width of a coding unit is longer the length of the height. The vertical direction may indicate a case in which the length of the width of a coding unit is shorter the length of the height.

The image-decoding apparatus 100 may adaptively determine the partitioning rule based on the size of the coding unit. The image-decoding apparatus 100 may determine an allowable partition shape mode differently according to the size of the coding unit. For example, the image-decoding apparatus 100 may determine whether to allow splitting based on the size of the coding unit. The image-decoding apparatus 100 may determine the splitting direction according to the size of the coding unit. The image-decoding apparatus 100 may determine an allowable splitting type according to the size of the coding unit.

The determination of the partitioning rule based on the size of the coding unit may be predetermined between the image-encoding apparatus 200 and the image-decoding apparatus 100. Furthermore, the image-decoding apparatus 100 may determine the partitioning rule based on the information obtained from the bitstream.

The image-decoding apparatus 100 may adaptively determine the partitioning rule based on the position of the coding unit. The image-decoding apparatus 100 may adaptively determine the partitioning rule based on a position occupied by the coding unit in the image.

Moreover, the image-decoding apparatus 100 may determine the partitioning rule such that coding units generated through different splitting paths from each other do not have the same block shape. However, the present disclosure is not limited thereto, and coding unit generated through different splitting paths from each other may have the same block shape. The coding unit generated through different splitting paths from each other may be processed in different decoding process orders from each other. As the decoding process order is described above in relation to FIG. 12, detailed descriptions thereon are omitted.

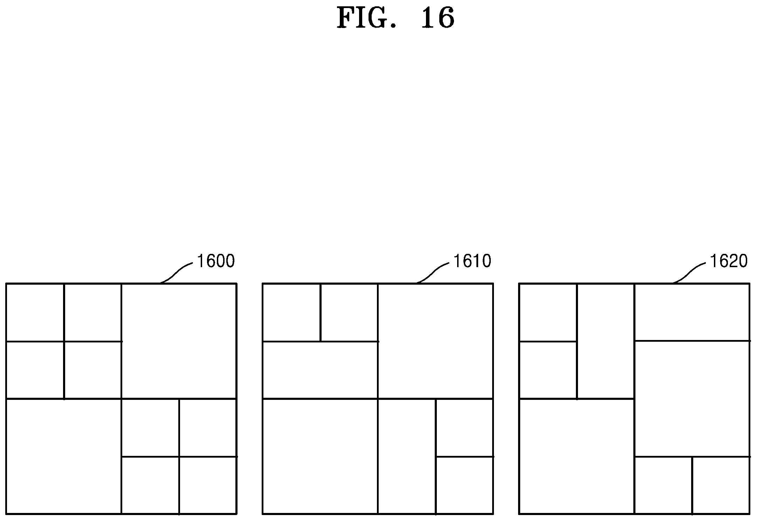

FIG. 16 illustrates coding units that may be determined for each picture in a case where a combination of shapes into which a coding unit is partitioned is different for each picture, according to an embodiment.

Referring to FIG. 16, the image-decoding apparatus 100 may determine a combination of partition shapes in which a coding unit may be split differently for each picture. For example, the image-decoding apparatus 100 may decode an image by using, from among one or more pictures included in the image, a picture 1600 splittable into four coding units, a picture 1610 splittable into two or four coding units, and a picture 1620 splittable into two, three, or four coding units. To split the picture 1600 into a plurality of coding units, the image-decoding apparatus 100 may use only the partition shape information indicating splitting into four square coding units. To split the picture 1610, the image-decoding apparatus 100 may use only the partition shape information indicating splitting into two or four coding units. To split the picture 1620, the image-decoding apparatus 100 may use only the partition shape information indicating splitting into two, three, or four coding units. As the combinations of partition shapes described above are merely an embodiment to describe operations of the image-decoding apparatus 100, the above combinations are not limited to the foregoing embodiments, and various types of combinations may be used for each data unit.

According to an embodiment, the bitstream acquisition unit 110 of the image-decoding apparatus 100 may a bitstream including an index indicating a combination of partition shape information for each predetermined data unit (for example, a sequence, a picture, a slice, a slice segment, a tile, a tile group, etc.) For example, the bitstream acquisition unit 110 may obtain an index indicating a combination of partition shape information from a sequence parameter set, a picture parameter set, a slice header, a tile header, or a tile group header. The image-decoding apparatus 100 may determine for each predetermined data unit a combination of partition shapes in which a coding unit is splittable by using the obtained index, and accordingly, a different combination of partitions shapes may be used for each predetermined data unit.

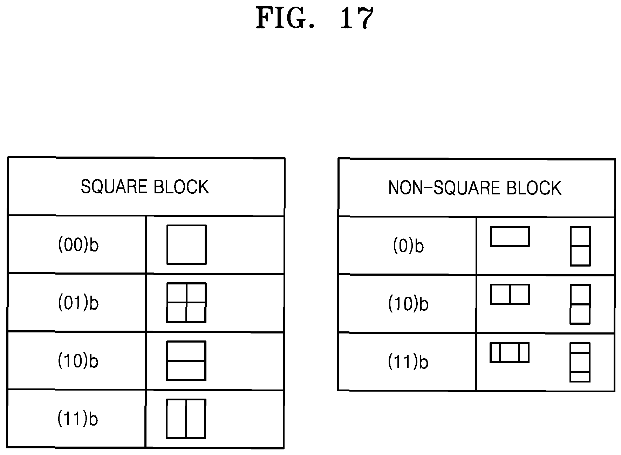

FIG. 17 illustrates various shapes of coding unit that may be determined based on partition shape mode information represented by a binary code, according to an embodiment.

According to an embodiment, the image-decoding apparatus 100 may split the coding unit by using the block shape information and the partition shape mode information obtained through the bitstream acquisition unit 110. The splittable shapes of the coding unit may correspond to various shapes including the shapes described through the foregoing embodiments.

Referring to FIG. 17, based on the partition shape mode information, the image-decoding apparatus 100 may split the coding unit having a square shape in at least one of the horizontal direction and the vertical direction and may split the coding unit having a non-square shape in the horizontal direction or the vertical direction.

According to an embodiment, when the image-decoding apparatus 100 splits the coding unit having a square shape in the horizontal direction and the vertical direction into four square coding units, the partition shape mode information for the coding unit having a square shape may represent four partition types. According to an embodiment, the partition shape mode information may be represented as a binary code of two digits, and a binary code may be assigned to each of the partition shapes. For example, when the coding unit is not split, the partition shape mode information may be represented as (00)b, when the coding unit is split in the horizontal direction and the vertical direction, the partition shape mode information may be represented as (01)b, when the coding unit is split in the horizontal direction, the partition shape mode information may be represented as (10)b, and when the coding unit is split in the vertical direction, the partition shape mode information may be represented as (11)b.

According to an embodiment, when the image-decoding apparatus 100 splits the coding unit having a non-square in the horizontal direction or the vertical direction, the types of partition shapes represented by the partition shape mode information may be determined based on the number of coding units into which the current coding unit is partitioned. Referring to FIG. 17, the image-decoding apparatus 100 may split the coding unit having a non-square into up to three coding units, according to an embodiment. The image-decoding apparatus 100 may split the coding unit into two coding units, and in this case, the partition shape mode information may be represented as (10)b. The image-decoding apparatus 100 may split the coding unit into three coding units, and in this case, the partition shape mode information may be represented as (11)b. The image-decoding apparatus 100 may determine not to split the coding unit, and in this case, the partition shape mode information may be represented as (0)b. That is, the image-decoding apparatus 100 may use variable length coding (VLC) instead of fixed length coding (FLC) to use a binary code representing the partition shape mode information.

According to an embodiment, referring to FIG. 17, the binary code of the partition shape mode information indicating that the coding unit is not split may be (0)b. When the binary code of the partition shape mode information indicating that the coding unit is not split is set as (00)b, the full 2-bit binary code may need to be used even in the absence of a partition shape mode information corresponding to (01)b. However, as illustrated in FIG. 17, in a case of using three partition shapes for a non-square coding unit, the image-decoding apparatus 100 may determine not to split the coding unit even when a 1-bit binary code (0)b is used as partition shape mode information, the bitstream may be utilized efficiently. However, the partition shape of the coding unit having a non-square shape that is indicated by the partition shape mode information is not limited to three shapes illustrated in FIG. 17 and may include various shapes including the embodiments described above.

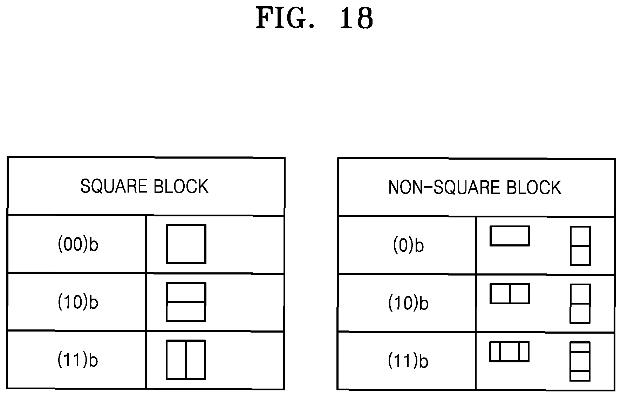

FIG. 18 illustrates other shapes of coding unit that may be determined based on partition shape mode information represented as a binary code, according to an embodiment.

Referring to FIG. 18, based on the partition shape mode information, the image-decoding apparatus 100 may split the coding unit having a square shape in the horizontal direction or the vertical direction and may split the coding unit having a non-square shape in the horizontal direction or the vertical direction. That is, the partition shape mode information may indicate that the coding unit having a square shape is split in one direction. In this case, the binary code of the partition shape mode information indicating that the coding unit having a square shape is not split may be (0)b. When the binary code of the partition shape mode information indicating that the coding unit is not split is set as (00)b, the full 2-bit binary code may need to be used even in the absence of a partition shape mode information corresponding to (01)b. However, as illustrated in FIG. 18, in a case of using three partition shapes for a square coding unit, the image-decoding apparatus 100 may determine not to split the coding unit even when a 1-bit binary code (0)b is used as partition shape mode information, the bitstream may be utilized efficiently. However, the partition shape of the coding unit having a square shape that is indicated by the partition shape mode information is not limited to three shapes illustrated in FIG. 18 and may include various shapes including the embodiments described above.

According to an embodiment, the block shape information or the partition shape mode information may be represented by using a binary code, and such information may be directly generated as the bitstream. In addition, the block shape information or the partition shape mode information that may be represented by a binary code may not be directly generated as the bitstream and may be used as a binary code input in context adaptive binary arithmetic coding (CABAC).

According to an embodiment, a process of obtaining by the image-decoding apparatus 100 a syntax for the block shape information or the partition shape mode information through CABAC. The bitstream acquisition unit 110 may obtained a bitstream including a binary code for the syntax. The image-decoding apparatus 100 may detect a syntax element representing the block shape information or the partition shape mode information by de-binarizing a bin string included in the obtained bitstream. According to an embodiment, the image-decoding apparatus 100 may derive a set of binary bin strings corresponding to a syntax element to be decoded, decode each bin using probability information, and repeat the decoding until a bin string consisting of the decoded bins matches one of the previously derived bin strings. The image-decoding apparatus 100 may determine a syntax element by performing the de-binarizing on a bin string.

According to an embodiment, the image-decoding apparatus 100 may determine a syntax for a bin string by performing adaptive binary arithmetic coding and may update a probability model for bins obtained through the bitstream acquisition unit 110. Referring to FIG. 17, the image-decoding apparatus 100 may obtain a bitstream representing a binary code indicating the partition shape mode information, according to an embodiment. The image-decoding apparatus 100 may determine a syntax for the partition shape mode information by using a binary bode having the size of 1 bit or 2 bits. The image-decoding apparatus 100 may update the probability for each bit of 2-bit binary code to determine a syntax for the partition shape mode information. That is, the image-decoding apparatus 100 may update the probability of having a value of 0 or 1 when the next bin is decoded, based on whether the value of the first bin of the 2-bit binary code is 0 or 1.

According to an embodiment, in the process of determining a syntax, the image-decoding apparatus 100 may update the probabilities for the bins used in the process of decoding the bins of the bin string for the syntax. The image-decoding apparatus 100 may determine that the probability is not updated for a particular bit of the bin string and that the particular bit has the same probability.

Referring to FIG. 17, in the process of determining a syntax by using a bin string representing the partition shape mode information for the coding unit having a non-square shape, when the coding unit having a non-square shape is not split, the image-decoding apparatus 100 may determine the syntax for the partition shape mode information by using a single bin having the value of 0. That is, when the block shape information indicates that the current coding unit has a non-square shape, the first bind of the bin string for the partition shape mode information may be 0 in a case where the coding unit having a non-square shape is not split and may be 1 in a case where the coding unit is split into two or three coding units. Accordingly, the probability that the first bin of the bin string of the partition shape mode information for the coding unit having a non-square shape is 0 may be 1/3, and the probability of the first bin being is 1 may be 2/3. As described above, as the partition shape mode information indicating that the coding unit having a non-square shape is not split is represented only by a 1-bit bin string having a value of 0, the image-decoding apparatus 100 may determine a syntax for the partition shape mode information by identifying whether a second bin is 0 or 1 only when the first bin of the partition shape mode information is 1. According to an embodiment, when the first bind for the partition shape mode information is 1, the image-decoding apparatus 100 may consider that the probability of the second bin being 0 or 1 is equal to each other and decode the bin.

According to an embodiment, the image-decoding apparatus 100 may use various probabilities for each bin in the process of determining a bin of the bin string for the partition shape mode information. According to an embodiment, the image-decoding apparatus 100 may determine the probability of the bin for the partition shape mode information according to a direction of the non-square block. According to an embodiment, the image-decoding apparatus 100 may determine the probability of the bin for the partition shape mode information according to an area or length of a long side of the current coding unit. According to an embodiment, the image-decoding apparatus 100 may determine the probability of the bin for the partition shape mode information according to at least one of the shape and length of the long side of the current coding unit.

According to an embodiment, the image-decoding apparatus 100 may determine that probabilities of bins for the partition shape mode information are equal to each other for coding units having a size greater than or equal to a predetermined size. For example, for coding units having a size of 64 samples or more based on the length of a long side of the coding unit, probabilities of bins for the partition shape mode information may be determined to be the same.

According to an embodiment, the image-decoding apparatus 100 may determine initial probabilities of bins constituting a bin string of the partition shape mode information based on a slice type (for example, I slice, P slice, or B slice).

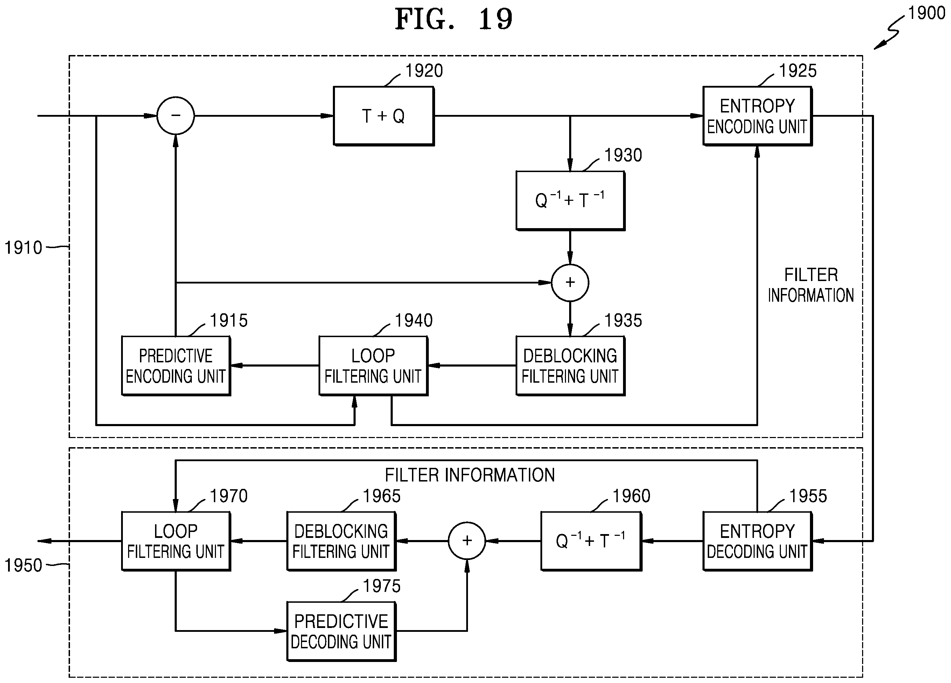

FIG. 19 is a block diagram of an image-encoding and decoding system configured to perform loop filtering.

An encoder unit 1910 of an image-encoding and decoding system 1900 may transmit an encoded bitstream of an image, and a decoder unit 1950 may receive and decode the bitstream to output a reconstructed image. Here, the encoder unit 1910 may be a component similar to the image-encoding apparatus 200 to be described, and the decoder unit 1950 may be a component similar to the image-decoding apparatus 100.

In the encoder unit 1910, a predictive encoding unit 1915 may output prediction data through inter prediction and intra prediction, and a transform and quantization unit 1920 may output a quantized transform coefficient of residual data between prediction data and a current input image. An entropy encoding unit 1925 may encode and transform the quantized transform coefficient and output the same to the bitstream. The quantized transform coefficient may be reconstructed into spatial domain data through an inverse quantization and inverse transform unit 1930, and the reconstructed spatial domain data may be output as a reconstructed image after passing through a deblocking filtering unit 1935 and a loop filtering unit 1940. The reconstructed image may be used as a reference image for a next input image through the predictive encoding unit 1915.

Encoded image data of the bitstream received by the decoder unit 1950 may be reconstructed into spatial domain residual data by passing through an entropy decoding unit 1955 and an inverse quantization and inverse transform unit 1960. Prediction data output from a predictive decoding unit 1975 and residual data may be combined to constitute image data in a spatial domain, and a deblocking filtering unit 1965 and a loop filtering unit 1970 may perform filtering on the image data in the spatial domain and output a reconstructed image of the current original image. The reconstructed image may be used by the predictive decoding unit 1975 as a reference image for a next original image.

The loop filtering unit 1940 of the encoder unit 1910 may perform loop filtering by using filter information input according to a user input or system setting. The filter information used by the loop filtering unit 1940 may be output to the entropy encoding unit 1925 and may be transmitted to the decoder unit 1950 along with the encoded image data. The loop filtering unit 1970 of the decoder unit 1950 may perform loop filtering based on the filter information input from the decoder unit 1950.

The various embodiments provided above are for describing operations related to a method of decoding an image performed by the image-decoding apparatus 100. Hereinafter, operations of the image-encoding apparatus 200 configured to perform a method of encoding an image, which corresponds to a reverse process of the method of decoding an image are described.

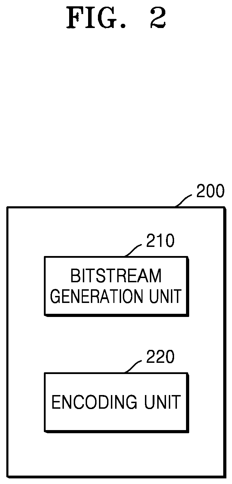

FIG. 2 is a block diagram of the image-encoding apparatus 200 capable of encoding an image based on at least one of block shape information and partition shape mode information, according to an embodiment.

The image-encoding apparatus 200 may include an encoding unit 220 and a bitstream generation unit 210. The encoding unit 220 may receive and encode an input image. The encoding unit 220 may obtain at least one syntax element by encoding the input image. The syntax element may include at least one of a skip flag, a prediction mode, a motion vector difference, a motion vector prediction method (or index), a transform quantized coefficient, a coded block pattern, a coded block flag, an intra prediction mode, a direct flag, a merge flag, a delta QP, a reference index, a prediction direction, and a transform index. The encoding unit 220 may determine a context model based on the block shape information including at least one of the size, direction, ratio between the width and the height, or size of a coding unit.

The bitstream generation unit 210 may generate a bitstream based on the encoded input image. For example, the bitstream generation unit 210 may generate a bitstream by entropy-encoding the syntax element based on the context model. In addition, the image-encoding apparatus 200 may transmit the bitstream to the image-decoding apparatus 100.

According to an embodiment, the encoding unit 220 of the image-encoding apparatus 200 may determine the shape of the coding unit. For example, the coding unit may have square shape or a non-square shape, and information indicating a shape may be included in the block shape information.

According to an embodiment, the encoding unit 220 may determine a shape in which the coding unit is to be split. The encoding unit 220 may determine a shape of at least one coding unit included in the coding unit, and the bitstream generation unit 210 may generate a bitstream including the partition shape mode information including information on the shape of the coding unit.

According to an embodiment, the encoding unit 220 may determine whether the coding unit is split or not. When the encoding unit 220 determines that only a single coding unit is included in the coding unit, or the coding unit is not split, the bitstream generation unit 210 may generate a bitstream including the partition shape mode information indicating that the coding unit is not split. Furthermore, the encoding unit 220 may split the coding unit into a plurality of coding units, and the bitstream generation unit 210 may generate a bitstream including the partition shape mode information indicating that the coding unit is split into a plurality of coding units.

According to an embodiment, information on into how many coding units the coding unit is split or indicating in which direction the coding unit is split may be included in the partition shape mode information. For example, the partition shape mode information may indicate a split in at least one of the vertical direction and the horizontal direction or no split.

The image-encoding apparatus 200 may determine information on a partition shape mode based on a partition shape mode of a coding unit. The image-encoding apparatus 200 may determine a context model based on at least one of the shape, direction, ratio between the width and the height, or size of the coding unit. The image-encoding apparatus 200 may generate as a bitstream information on the partition shape mode for splitting the coding unit based on the context model.

To determine the context model, the image-encoding apparatus 200 may obtain an array for associating a context model index with at least one of the shape, direction, ratio between the width and the height, or size of the coding unit. The image-encoding apparatus 200 may obtain from the array the context model index based on at least one of the shape, direction, ratio between the width and the height, or size of the coding unit. The image-encoding apparatus 200 may determine a context model based on the context model index.

The image-encoding apparatus 200 may determine a context model further based on the block shape information including at least one of a shape, direction, ratio between the width and the height, or size of neighboring coding units adjacent to the coding unit. In addition, the neighboring coding units may include at least one of a below-left coding unit, a left coding unit, an above-left coding unit, an above coding unit, an above-right coding unit, a right coding unit, or a below-right coding unit.

To determine a context model, the image-encoding apparatus 200 may compare the length of the width of the neighboring above coding unit with the length of the width of the coding unit. The image-encoding apparatus 200 may compare the length of the height of the neighboring left and right coding units with the length of the height of the coding unit. The image-encoding apparatus 200 may determine a context model based on results of the comparison.

As operations of the image-encoding apparatus 200 correspond to operations similar to those of the video-decoding apparatus 100 described in relation to FIGS. 3 to 19, detailed descriptions thereof are omitted.

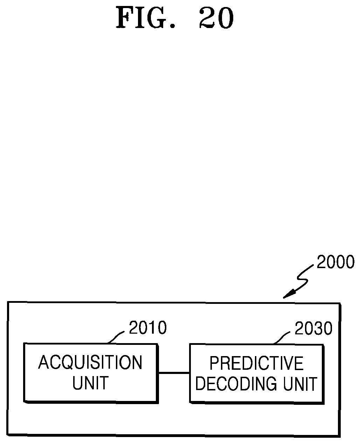

FIG. 20 is a block diagram illustrating a configuration of an image-decoding apparatus 2000 according to an embodiment.

Referring to FIG. 20, the image-decoding apparatus 2000 may include an acquisition unit 2010 and a predictive decoding unit 2030.

The acquisition unit 2010 and the predictive decoding unit 2030 according to an embodiment may be implemented as at least one processor. In an embodiment, the acquisition unit 2010 and the predictive decoding unit 2030 may operate according to at least one instruction stored in at least one memory.

The image-decoding apparatus 2000 may include at least one memory in which input/output data of the acquisition unit 2010 and the predictive decoding unit 2030 are stored. In addition, the image-decoding apparatus 2000 may include memory controller configured to control a data input/output of the at least one memory.

In an embodiment, the acquisition unit 2010 may correspond to the entropy decoding unit 1955 illustrated in FIG. 19, and the predictive decoding unit 2030 may correspond to the predictive decoding unit 1975 illustrated in FIG. 19.

The acquisition unit 2010 may obtain a bitstream generated as a result of decoding a picture. The bitstream may include a decoding result of the current block. The current block may be a coding tree unit, a coding unit, a transform unit, or a prediction unit split from the current picture to be decoded.

In an embodiment, the acquisition unit 2010 may receive a bitstream from the image-encoding apparatus through a network.

In an embodiment, the acquisition unit 2010 may obtain a bitstream from a data storage medium including a magnetic medium such as a hard disk, a floppy disk, and a magnetic tape, an optical recording medium such as a CD-ROM and a DVD, and a magneto-optical medium such as a floptical disk, etc.

The acquisition unit 2010 may obtain from the bitstream syntax elements for decoding of a picture. Values corresponding to the syntax elements may be included in the bitstream according to a hierarchical structure of the picture.

The acquisition unit 2010 may obtain the syntax elements by entropy-decoding the bins included in the bitstream.

In an embodiment, the bitstream may include information on a prediction mode of the current block in the current picture. The prediction mode of the current block may be any one of a plurality of prediction modes including an intra mode and an inter mode. For example, the intra mode may include a template matching prediction mode.

Throughout the present disclosure, a method of generating a predictor based on template-matching may be referred to as template matching prediction. Prediction based on template matching may also be referred to as template matching prediction, template matching mode, template matching prediction mode, intra template matching prediction, intra template matching mode, or intra template matching prediction mode.

Alternatively, in an embodiment, the prediction mode of the current block may be any one of a plurality of prediction modes including at least one of an intra mode, an inter mode, or a template matching prediction mode.

The predictive decoding unit 2030 may generate a prediction block of the current block by performing the intra prediction or the inter prediction on the current block based on a prediction mode of the current block and reconstruct the current block by using the prediction block.

In an embodiment, when the prediction mode of the current block is a template matching prediction mode, the predictive decoding unit 2030 may determine a reference block for the current block within a search region by performing template matching.

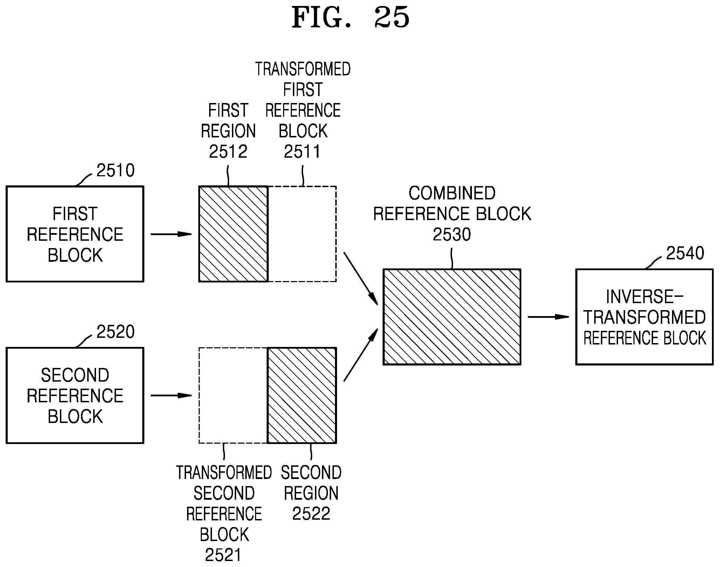

In an embodiment, when the prediction mode of the current block is an intra mode, the acquisition unit 2010 may obtain information on the intra prediction mode of the current block from the bitstream. For example, the information on the intra prediction mode may include information on the template matching prediction mode. For example, the information on the template matching prediction mode may include information indicating whether the template matching prediction mode is applied. Alternatively, the information on the template matching prediction mode may include information specifying one of a plurality of template matching prediction modes. Embodiments relating to the above features are to be described in detail in relation to FIG. 25.

In an embodiment, the information on the intra prediction mode may be included in a sequence parameter set, a picture parameter set, a slice header, or slice data of a bitstream. For example, the slice data may include information signaled at a level of coding tree, coding unit, transform tree, or transform unit.

When a prediction block is generated through the intra prediction performed on the current block, the predictive decoding unit 2030 may obtain a reconstructed current block by using the prediction block.

In an embodiment, the predictive decoding unit 2030 may determine the prediction block as the reconstructed current block.

In an embodiment, the predictive decoding unit 2030 may generate a reconstructed current block by combining a prediction with residual data obtained by the acquisition unit 2010 from the bitstream.

In an embodiment, when the template matching prediction is applied to the current block, a reference block may be identified in a predefined search region by performing the template matching, and a prediction block of the current block may be generated by using the identified reference block.

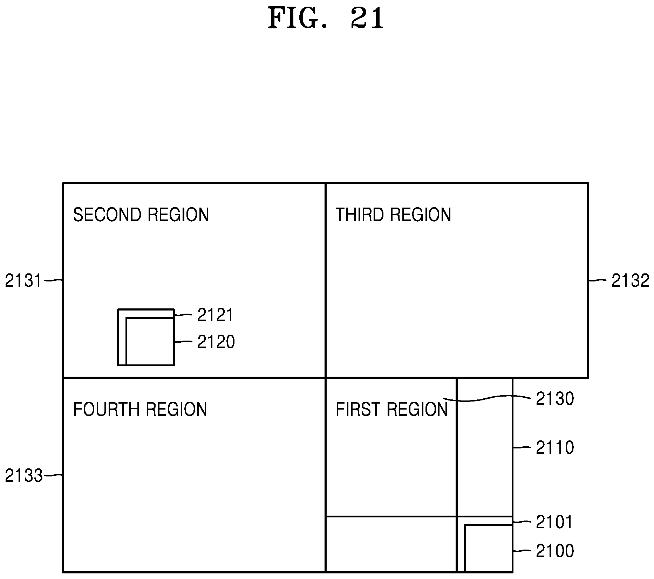

Hereinafter, a process of template matching prediction performed on the current block is described in detail with reference to FIGS. 21 to 27.

FIG. 21 is a diagram for illustrating a method of template matching prediction according to an embodiment.

Referring to FIG. 21, the image-decoding apparatus 2000 may generate a prediction block of a current block 2100 based on template matching.

In an embodiment, when the template matching prediction is applied, the image-decoding apparatus 2000 may generate a predictor of the current block 2100 by itself through a searching process. In other words, the image-decoding apparatus 2000 may identify a reference block 2120 in a search region through a searching process and generate a prediction block (or prediction sample) of the current block 2100 by using the identified reference block 2120.

The image-decoding apparatus 2000 may determine the reference block 2120 of the current block 2100 by comparing a template 2101 of the current block 2100 with a template 2121 of the reference block 2120. For example, the image-decoding apparatus 2000 may calculate a cost between the template 2101 of the current block 2100 and the template 2121 of the reference block 2120 and determine the reference block 2120 of the current block 2100 by using the calculated cost. In the present disclosure, the cost (i.e., template matching cost) may also be referred to as a difference.

The image-decoding apparatus 2000 may determine the reference block 2120 of the current block 2100 through a difference comparison between templates. When the template matching prediction is applied to the current block 2100, a candidate block that minimizes the difference may be determined as the reference block 2120 of the current block 2100. Alternatively, when the template matching prediction is applied to the current block 2100, a predetermined number of candidate blocks that minimize the difference may be determined as the reference block 2120 of the current block 2100.

In the present disclosure, the candidate block may be a block having a template on which the difference comparison is performed with respect to the template 2101 of the current block 2100 in the search region of the current block 2100. In addition, in the present disclosure, the reference block may refer to a specific candidate block identified for prediction of the current block 2100 from among candidate blocks or may collectively refer to all candidate blocks for which difference comparison is performed.

In an embodiment, the search region for template matching prediction may be predefined. In an embodiment, a plurality of search regions for template matching prediction may be predefined. In this case, a search order among the plurality of search regions may be predefined. The image-decoding apparatus 2000 may determine a reference block having a template that is most similar to the template 2101 of the current block 2100 by sequentially searching the search regions in accordance with a predefined search order.

In an embodiment, as illustrated in FIG. 21, the search region may include a first region 2130, a second region 2131, a third region 2132, and a fourth region 2133. The search regions shown in FIG. 21 are just an example, and the search region for template matching prediction is not limited to the regions illustrated in FIG. 21. An addition region may be included as a search region in addition to the regions illustrated in FIG. 21, and the regions shown in FIG. 21 may each be split differently from the method of FIG. 21.

In an embodiment, the first region 2130 may be an above-left region with respect to a current block 2101 in a current coding tree unit (CTU) 2110 to which the current block 2101 belongs. Alternatively, the first region 2130 may be a region adjacent to the above-left of the template 2101 of the current block 2101 in the current CTU 2110 to which the current block 2101 belongs. Alternatively, the first region 2130 may be a neighboring region of the current block 2101 in the current CTU 2110 to which the current block 2101 belongs.

In an embodiment, a search order among the first region 2130, the second region 2131, the third region 2132, and the fourth region 2133 may be defined. In an embodiment, the second region 2131, the third region 2132, and the fourth region 2133 may respectively be an above-left CTU, an above CTU, and a left CTU of the current CTU 2110. For example, the candidate block or the reference may be searched in the first region 2130, the second region 2131, the third region 2132, and the fourth region 2133 in this stated order. Alternatively, the candidate block or the reference may be searched in the first region 2130, the fourth region 2133, the third region 2132, and the second region 2131 in this stated order. Alternatively, the candidate block or the reference may be searched in the first region 2130, third region 2132, the fourth region 2133, and the second region 2131 in this stated order.

In an embodiment, the image-decoding apparatus 2000 may determine a predetermined number of candidate blocks in each search region. For example, a candidate list including a predetermined number of candidate blocks may be configured. Candidates included in the candidate list may include block vectors indicating the candidate blocks. In the present disclosure, blocks vectors for identifying reference blocks or candidate blocks used for template matching prediction may be referred to as template matching block vectors.

In an embodiment, the image-decoding apparatus 2000 may determine as reference blocks a certain number of candidate blocks minimizing a difference, from among a plurality of searched candidate blocks. For example, the image-decoding apparatus 2000 may determine as a reference block a candidate block minimizing a difference, from among a plurality of searched candidate blocks. Alternatively, the image-decoding apparatus 2000 may determine a plurality of candidate blocks as a reference block. Relevant embodiments are to be described with reference to Formula 4 below.

The image-decoding apparatus 2000 may search the reference block 2120 having the template 2121 that is most similar to the template 2101 of the current block 2100, within the search region. The image-decoding apparatus 2000 may calculate a difference between the template 2121 of the reference block 2120 and the template 2101 of the current block 2100 to find a similar template. In general, the sum of absolute difference (SAD) may be used as a method of calculating a difference.

In an embodiment, when the SAD is used, the image-decoding apparatus 2000 may select the reference block 2120 including the template 2121 having the minimum SAD within the search region. In other words, when the SAD is used, the image-decoding apparatus 2000 may determine a candidate block including the template 2121 minimizing the SAD within the search region as the reference block 2120.

In an embodiment, the template matching cost may be calculated according to various criteria (or cost functions). In other words, various metrics may be used for difference calculation. For example, a difference may be calculated by using sum of squared error (SSE), mean-removed SAD (MR-SAD), or sum of absolute transformed difference (SATD), in addition to the SAD described above. Alternatively, a difference may be calculated by using partial SAD for calculating the SAD only for some templates.

The reference block 2120 having the minimum SAD value may not be necessarily a block that is most similar to the current block 2100 in any cases. In addition, the template matching prediction using the SAD for simply comparing pixel values in the spatial domain may have a lower prediction accuracy than the template matching prediction in which coefficient values are compared in a frequency domain.

In consideration of the aforementioned feature, the present disclosure suggests a prediction method in which template matching is performed in the frequency domain to consider more various predictors in the prediction and to increase the prediction accuracy.

In the frequency domain, low-frequency components may represent regions having small differences in pixel values from neighboring regions, and high-frequency components may represent regions having great differences in pixel values from neighboring regions. The low-frequency components may represent wide regions such as overall information of an image, and the high-frequency components may represent detailed regions including corners or edges with large changes.

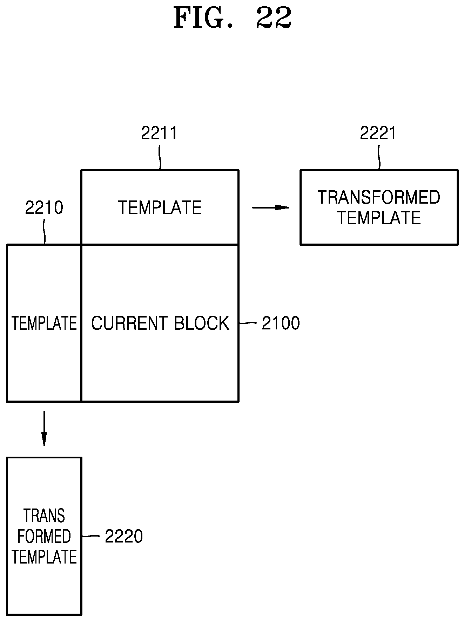

Hereinafter, a method of template prediction considering characteristics according to a frequency band is described with reference to FIGS. 22 to 25. In an embodiment, the template matching prediction may be performed based on a frequency-domain template.

By performing the template matching prediction considering the characteristics according to a frequency band, the prediction accuracy may increase, and as more various predictors are considered in the prediction, the compression efficiency may be improved.

FIG. 22 is a diagram for illustrating a method of template matching prediction using a transformed template, according to an embodiment.

Referring to FIG. 22, the image-decoding apparatus 2000 may determine a reference block by performing the difference comparison by using frequency-domain templates (2220 and 2221). Although FIG. 22 illustrates the transform of templates 2210 and 2211 of the current block 2100, the transform of templates of candidate blocks (or reference blocks) of the current block 2100 may also be performed. That is, templates of a candidate block that correspond to the templates 2210 and 2211 of the current block 2100 may be transformed in the same manner as applied to the transform of the templates 2210 and 2211 of the current block 2100 to determine transformed templates.

More specifically, the image-decoding apparatus 2000 may obtain transformed templates of the candidate block and the transformed templates 2220 and 2221 of the current block by performing the transform on each of the templates of the candidate block and the templates 2210 and 2211 of the current block 2100.

In an embodiment, the templates 2210 and 2211 of the current block 2100 may include at least one of the left template 2210 or the right template 2211. The templates of the candidate block may be determined as regions corresponding to the templates 2210 and 2211 of the current block. The transformed templates 2220 and 2221 of the current block may include at least one of the left transformed template 2220 or the upper transformed template 2221.

The image-decoding apparatus 2000 may determine the left transformed template 2220 by performing a transform on the left template 2210 and determine the upper transformed template 2221 by performing a transform on the upper template 2211.

In an embodiment, the image-decoding apparatus 2000 may perform a difference comparison between the transformed templates of the candidate block and the transformed templates 2220 and 2221 of the current block. By performing the difference comparison in the frequency domain, a more accurate predictor may be obtained as compared to the case of SAD-based template matching prediction in which a difference is calculated in the spatial domain as described in relation to the embodiment of FIG. 21.

ln an embodiment, the image-decoding apparatus 2000 may obtain the transformed templates 2220 and 2221 of the current block 2100 in the frequency domain by performing a predefined transform on the templates 2210 and 2211 of the current block 2100 in the spatial domain. Similarly, the image-decoding apparatus 2000 may obtain the transformed templates of the candidate block in the frequency domain by performing a predefined transform on the templates of the candidate block in the spatial domain.

In an embodiment, various transforms (or transform kernels, transform types, or transform matrixes) may be defined. For example, the predefined transform may include at least one of Hadamard transform, discrete cosine transform (DCT)-based transform, discrete sine transform (DST)-based transform, discrete Fourier transform (DFT)-based transform, Wavelet transform, or Karhunen Loeve transform (KLT).

In an embodiment, the image-decoding apparatus 2000 may determine a reference block of the current block 2100 from among candidate blocks by performing a difference comparison between the transformed templates of the candidate blocks and the transformed templates 2220 and 2221 of the current block 2100. For example, for difference comparison, the sum of absolute differences between the transform coefficient of the transformed templates 2220 and 2221 of the current block 2100 and the transform coefficient of the transformed templates of the candidate block may be calculated.

In an embodiment, when calculating the difference between the templates of the current block 2100 and the candidate block, the image-decoding apparatus 2000 may summate the sum of absolute differences between the left transformed template 2220 of the current block 2100 and the left transformed template of the candidate block and the sum of absolute differences between the upper transformed template 2221 of the current block 2100 and the upper transformed template of the candidate block. That is, the calculation of difference between the transformed template of the candidate block that correspond to the transformed templates 2220 and 2221 of the current block 2100 may be performed.

Regions on which the difference calculation (or difference comparison) is performed may be defined by considering the characteristics according to the frequency domain described above. That is, the difference may be calculated between predetermined regions in the transformed template or between predetermine transform coefficients.

In an embodiment, the difference calculation may be performed by considering only a certain frequency band, and a reference block may be determined from among candidate blocks based on the calculated difference. In other words, a region corresponding to a certain frequency band may be predefined within the transformed template, and a difference between transform coefficients included in the region may be calculated.

In an embodiment, a region corresponding to a low-frequency band (or low-frequency component) in the transformed template may be defined as a region subject to the difference calculation. Alternatively, for example, a difference between particular left regions in the transformed template may be calculated. For example, when the transformed template has the size of WxH, a cost comparison between MxN regions in the transformed template may be performed. In this regard, W >= M and H >= N.

In an embodiment, a certain number of transform coefficients in the transformed template may be used for difference comparison between the templates. For example, a certain number of transform coefficients determined according to a predefined scan order starting from the top-left portion of the transformed template may be used for difference comparison. For example, the scan order may include at least one of a x-scan order, a raster scan order, a zig-zag scan order, an up-right diagonal scan order, a horizontal scan order, or a vertical scan order.

In addition, in an embodiment, the search region may be predefined. A plurality of regions may be determined as the search region. A reference block may be sequentially searched according to a search order defined among the plurality of search regions. In this case, as the embodiment described above in relation to FIG. 12 may be applied, any redundant description thereon is omitted.

When performing the template matching prediction using transformed templates, a candidate block in the search region may be determined (or searched) by various method.

In an embodiment, the image-decoding apparatus 2000 may determine as a candidate block all blocks within the search region that correspond to the current block 2100, at a 1-pixel interval. The image-decoding apparatus 2000 may perform a transform on the templates of the candidate blocks by shifting pixel-by-pixel and perform template matching prediction by using the transformed templates.

In an embodiment, the image-decoding apparatus 2000 may determine a candidate block at each 1-pixel interval, beginning from the initial top-left position in the search region. For example, the initial top-left position may be determined based on the height of the top template and the width of the left template. When the top-left pixel position in the search region is (0,0), the height of the top template is H, and the width of the left template is W, the initial top-left position may be (W,H). Alternatively, the initial top-left position may be a top-left pixel position in the search region.

However, according to the embodiments described above, as transforms are required for all possible blocks at a pixel-level within the search region, the complexity may increase. Hereinafter, in consideration of the foregoing, embodiments related to determination of candidate blocks for template matching prediction in the frequency domain are described.

In an embodiment, candidate blocks may be searched in units of a predetermined number of pixels within the search region. In other words, positions of the candidate blocks in the search region may be determined in the units of pixel. For example, the predetermined number may be 2, 4, 8, 16, or 64. For example, within the search region, the candidate blocks may be determined at intervals of 2, 4, 8, 16, or 64 pixels in the horizontal/vertical direction, starting from the initial top-left position. The initial top-left position may be determined based on the height of the top template and the width of the left template. When the top-left pixel position in the search region is (0,0), the height of the top template is H, and the width of the left template is W, the initial top-left position may be (W,H). Alternatively, the initial top-left position may be a top-left pixel position in the search region.

In an embodiment, the candidate blocks may be selected within the search region based on the template matching prediction in the spatial domain. In this regard, the embodiment described in relation to FIG. 21 may be applied. For example, the image-decoding apparatus 2000 may determine a plurality of candidate blocks by performing the template matching prediction in the spatial domain.

In an embodiment, the number of candidate blocks determined by the spatial-domain template matching prediction may be predefined. For example, a candidate list including a predetermined number of candidate blocks may be configured. Candidates included in the candidate list may include block vectors indicating the candidate blocks.

In an embodiment, the spatial-domain template matching prediction may be performed based on the SAD. That is, a predetermined number of candidate blocks having the minimum SAD value may be determined within the search region.

The image-decoding apparatus 2000 may determine a plurality of candidate blocks by the spatial-domain template matching prediction and perform the frequency-domain template matching prediction based on the plurality of determined candidate blocks. The image-decoding apparatus 2000 may determine a transformed template of each candidate block by performing a transform on the templates of determined candidate blocks.

The image-decoding apparatus 2000 may compare the transformed template of the current block 2100 with the transformed template of each of the plurality of candidate blocks and determine a reference block of the current block 2100 from among the plurality of candidate blocks based on the comparison result. That is, the image-decoding apparatus 2000 may determine as a reference block of the current block 2100 a candidate block having a transformed template that is most similar to the transformed template of the current block 2100, from among the plurality of candidate blocks.

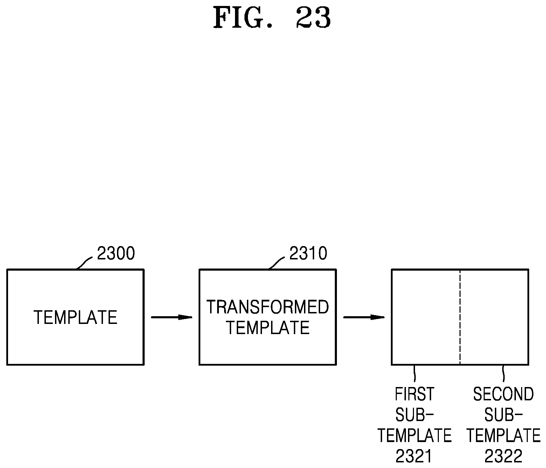

FIG. 23 is a diagram for illustrating template matching prediction by using a transformed sub-template, according to an embodiment.

Referring to FIG. 23, the image-decoding apparatus 2000 may perform the template matching prediction in the frequency domain in units of sub-templates (2321 and 2322) split from the transformed template 2310 by considering the characteristics according to a frequency component. In other words, the image-decoding apparatus 2000 may determine as a reference block a candidate block having a sub-template that is most similar to each sub-template (2321 and 2322) by performing the difference comparison in units of sub-templates (2321 and 2322).

In an embodiment, the template 2300 illustrated in FIG. 23 may be a template of the current block 2100 or a template of the candidate block (or reference block). The transformed templates of the candidate blocks corresponding to the transformed template of the current block 2100 may have the same sub-template partitioning structure.

In an embodiment, the image-decoding apparatus 2000 may determine a plurality of reference blocks by performing the difference comparison between corresponding sub-templates in the current block 2100 and the candidate block. The image-decoding apparatus 2000 may determine as reference blocks two candidate blocks each having a sub-template that minimizes the difference with each sub-template (2321 and 2322) of the current block 2100. The image-decoding apparatus 2000 may generate a prediction block of the current block 2100 through a weighted sum of the plurality of determined reference blocks.

In an embodiment, the image-decoding apparatus 2000 may obtain the transformed template 2310 by transforming the template 2300 of the current block 2100. The image-decoding apparatus 2000 may split the transformed template 2310 into a first sub-template 2321 and a second sub-template 2322 by considering the frequency band (or frequency component). The image-decoding apparatus 2000 may obtain an optimal predictor for each frequency band by performing the difference comparison based on the transform coefficient included in each of the first sub-template 2321 and the second sub-template 2322 and may improve the prediction accuracy by using more various predictors for prediction.

In an embodiment, as illustrated in FIG. 23, the image-decoding apparatus 2000 may obtain the first sub-template 2321 and the second sub-template 2322 by splitting the transformed template 2310 into two sub-templates in the vertical direction. For example, the first sub-template 2321 may be a region including a low-frequency component, and the second sub-template 2322 may be a region including a high-frequency component.

In an embodiment, the first sub-template 2321 may include transform coefficients having a relatively lower frequency than transform coefficients included in the second sub-template 2322. For example, the first sub-template 2321 may include transform coefficients corresponding to a first frequency band, and the second sub-template 2322 may include transform coefficients corresponding to a second frequency band. The first frequency band may be lower than the second frequency band.

In an embodiment, the image-decoding apparatus 2000 may obtain two reference blocks through the difference comparison between corresponding sub-templates in the current block 2100 and the candidate block.

In an embodiment, the image-decoding apparatus 2000 may determine as a first reference block a candidate block having the first sub-template 2321 that minimizes the difference between the first sub-templates 2321. That is, a candidate block having the first sub-template 2321 that is most similar to the first sub-template 2321 of the current block 2100 may be determined as the first reference block.

In an embodiment, the image-decoding apparatus 2000 may determine as a second reference block a candidate block having the second sub-template 2322 that minimizes the difference between the second sub-templates 2322. That is, a candidate block having the second sub-template 2322 that is most similar to the second sub-template 2322 of the current block 2100 may be determined as the second reference block.

In an embodiment, the image-decoding apparatus 2000 may generate a prediction block of the current block 2100 by using a weighted summation of the first reference block and the second reference block.

The splitting of the transformed template 2310 illustrated in FIG. 23 may be performed on the transformed template 2310 of the current block 2100 and the corresponding transformed template 2310 of the candidate block. For example, the transformed template 2310 may be the left transformed template 2310 of the current block 2100 and the candidate block or may be the upper transformed template 2310 of the current block 2100 and the candidate block.

Although FIG. 23 illustrates the case in which the transformed template 2310 is split into two sub-templates in the vertical direction, the present disclosure is not limited thereto. When the transformed template 2310 is split in to two sub-templates in the horizontal direction, the difference comparison may also be performed on corresponding sub-templates by using substantially the same method.

In an embodiment, when the transformed template 2310 is split into two sub-templates in the horizontal direction, an upper sub-template and a lower sub-template may be obtained therefrom. The upper sub-template may be a region including a low-frequency component, and the lower sub-template may be a region including a high-frequency component. For example, the upper sub-template may include transform coefficients having a relatively lower frequency than transform coefficients included in the lower sub-template. The upper sub-template may include transform coefficients corresponding to the first frequency band, and the lower sub-template may include transform coefficients corresponding to the second frequency band. The first frequency band may be lower than the second frequency band.

In an embodiment, when the transformed template is split into two sub-templates in the horizontal direction, the upper sub-template may correspond to the first sub-template 2321 obtained by splitting the transformed template into two sub-templates in the vertical direction, and the lower sub-template may correspond to the second sub-template 2322 obtained by splitting the transformed template into two sub-templates in the vertical direction.

In an embodiment, a splitting direction (or splitting structure) of the left and upper transformed templates 2310 may be defined. For example, the left and upper transformed templates 2310 may have the same splitting direction. For example, the left and upper transformed templates 2310 may each be split into two sub-templates in the vertical direction as illustrated in FIG. 23. Alternatively, the left and upper transformed templates 2310 may each be split into two sub-templates in the horizontal direction.

In an embodiment, the left and upper transformed templates 2310 may be split in different directions from each other. For example, the left transformed template 2310 may be split in the horizontal direction, and the upper transformed template 2310 may be split in the vertical direction. Alternatively, the left transformed template 2310 may be split in the vertical direction, and the upper transformed template 2310 may be split in the horizontal direction.

In an embodiment, when the left and upper transformed template 2310 are each split into two sub-templates, the difference comparison may be performed in units of sub-template sets including corresponding sub-templates in the left and upper transformed templates 2310. That is, the image-decoding apparatus 2000 may obtain two reference blocks through the difference comparison between corresponding sub-template sets in the current block 2100 and the candidate block. The sub-template set may include sub-templates in the left and upper transformed templates 2310.

For example, when the left and upper transformed templates 2310 are each split in the vertical direction, a first sub-template set may include the first sub-templates 2321 of the left and upper transformed templates 2310, and a second sub-template set may include the second sub-templates 2322 of the left and upper transformed templates 2310.

For example, when the left and upper transformed templates 2310 are each split in the horizontal direction, the first sub-template set may include the upper sub-templates of the left and upper transformed templates 2310, and the second sub-template set may include the lower sub-templates of the left and upper transformed templates 2310.

For example, when the left transformed template 2310 is split in the horizontal direction, and the upper transformed template 2310 is split in the vertical direction, the first sub-template set may include the upper sub-template of the left transformed template 2310 and the first sub-template 2321 of the upper transformed template 2310, and the second sub-template set may include the lower sub-template of the transformed template 2310 and the second sub-template 2322 of the upper transformed template 2310.

Although FIG. 23 illustrates the case in which the transformed template 2310 is split into two symmetrical sub-templates, the present disclosure is not limited thereto. The transformed template may be split into two asymmetrical sub-templates, considering a position of a transform coefficient according to a frequency band. For example, a ratio between the width of the first sub-template 2321 and the width of the second sub-template 2322 may be 1:3.

The image-decoding apparatus 2000 may generate a prediction block of the current block 2100 through a weighted sum of the first reference block and the second reference block. In this regard, the prediction block of the current block 2100 may be generated by using Formula 1 below. $P = {w}_{1} * {RB}_{f 1} + {w}_{2} * {RB}_{f 2}$

Referring to Formula 1, a prediction sample (P) of the current sample of the current block 2100 may be obtained by weighted summation of a sample (RB_{f1}) corresponding to the current sample in the first reference block and a sample (RB_{f2}) corresponding to the current sample in the second reference block. w₁ represents a first weight applied to the samples in the first reference block, and w₂ represents a second weight applied to the samples in the second reference block.

For example, the first weight and the second weight may each be 1. That is, the prediction block of the current block 2100 may be generated by averaging the first reference block and the second reference block.

Alternatively, the first weight and the second weight may each be a predefined fixed value or may each be a value determined based on encoding information of the current block 2100. The encoding information may include a search region including a reference block to which the weight is applied, sub-template position/size, sub-template splitting structure, and frequency band corresponding to a sub-template, etc.

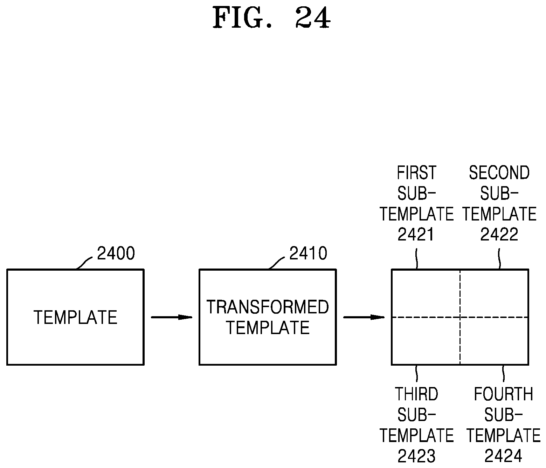

FIG. 24 is a diagram for illustrating template matching prediction by using a transformed sub-template, according to an embodiment.

Referring to FIG. 24, the image-decoding apparatus 2000 may perform the template matching prediction in the frequency domain in units of sub-templates (2421, 2422, 2423, and 2424) split from the transformed template 2410 by considering the characteristics according to a frequency component. In other words, the image-decoding apparatus 2000 may determine as a reference block a candidate block having a sub-template that is most similar to each sub-template (2421, 2422, 2423, and 2424) by performing the difference comparison in units of sub-templates (2421, 2422, 2423, and 2424).

In an embodiment, the template 2400 illustrated in FIG. 24 may be a template of the current block 2100 or a template of the candidate block (or reference block). The transformed templates of the candidate blocks corresponding to the transformed template of the current block 2100 may have the same sub-template partitioning structure.

In an embodiment, the image-decoding apparatus 2000 may determine a plurality of reference blocks by performing the difference comparison between corresponding sub-templates in the current block 2100 and the candidate block. The image-decoding apparatus 2000 may determine as reference blocks four candidate blocks each having a sub-template that minimizes the difference with each sub-template (2421, 2422, 2423, and 2424) of the current block 2100. The image-decoding apparatus 2000 may generate a prediction block of the current block 2100 through a weighted sum of the plurality of determined reference blocks.

In an embodiment, the image-decoding apparatus 2000 may obtain the transformed template 2410 by transforming the template 2400 of the current block 2100. The image-decoding apparatus 2000 may split the transformed template 2410 into a first sub-template 2421, a second sub-template 2422, a third sub-template 2423, and a fourth sub-template 2424 by considering the frequency band (or frequency component). The image-decoding apparatus 2000 may obtain an optimal predictor for each frequency band by performing the difference comparison based on the transform coefficient included in each of the first sub-template 2421, the second sub-template 2422, the third sub-template 2423, and the fourth sub-template 2424 and may improve the prediction accuracy by using more various predictors for prediction.

In an embodiment, as illustrated in FIG. 24, the image-decoding apparatus 2000 may obtain the first sub-template 2421, the second sub-template 2422, the third sub-template 2423, and the fourth sub-template 2424 by splitting the transformed template 2410 into four sub-templates in the vertical and horizontal directions. For example, the first sub-template 2421, the second sub-template 2422, the third sub-template 2423, and the fourth sub-template 2424 may include transform coefficients each having a relatively low frequency in this order.

For example, the first sub-template 2421 may include transform coefficients corresponding to the first frequency band, the second sub-template 2422 may include transform coefficients corresponding to the second frequency band, the third sub-template 2423 may include transform coefficients corresponding to the third frequency band, and the fourth sub-template 2424 may include transform coefficients corresponding to the fourth frequency band. The lowest frequency band may be assigned to the first frequency band, and frequency bands may be assigned in increasing order of frequency up to the fourth frequency band. For example, the first sub-template 2421 may be a region including a low-frequency component, and the fourth sub-template 2424 may be a region including a high-frequency component.

In an embodiment, the image-decoding apparatus 2000 may obtain four reference blocks through the difference comparison between corresponding sub-templates in the current block 2100 and the candidate block.

In an embodiment, the image-decoding apparatus 2000 may determine as a first reference block a candidate block having the first sub-template 2421 that minimizes the difference between the first sub-templates 2421. That is, a candidate block having the first sub-template 2421 that is most similar to the first sub-template 2421 of the current block 2100 may be determined as the first reference block.

In an embodiment, the image-decoding apparatus 2000 may determine as a second reference block a candidate block having the second sub-template 2422 that minimizes the difference between the second sub-templates 2422. That is, a candidate block having the second sub-template 2422 that is most similar to the second sub-template 2422 of the current block 2100 may be determined as the second reference block.

In an embodiment, the image-decoding apparatus 2000 may determine as a third reference block a candidate block having the third sub-template 2423 that minimizes the difference between the third sub-templates 2423. That is, a candidate block having the third sub-template 2423 that is most similar to the third sub-template 2423 of the current block 2100 may be determined as the third reference block.

In an embodiment, the image-decoding apparatus 2000 may determine as a fourth reference block a candidate block having the fourth sub-template 2424 that minimizes the difference between the fourth sub-templates 2424. That is, a candidate block having the fourth sub-template 2422 that is most similar to the second sub-template 2424 of the current block 2100 may be determined as the fourth reference block.

In an embodiment, the image-decoding apparatus 2000 may generate a prediction block of the current block 2100 by using a weighted summation of the first reference block to the fourth reference block.

The splitting of the transformed template 2410 illustrated in FIG. 24 may be performed on the transformed template 2410 of the current block 2100 and the corresponding transformed template 2410 of the candidate block. For example, the transformed template 2410 may be the left transformed template 2410 of the current block 2100 and the candidate block or may be the upper transformed template 2410 of the current block 2100 and the candidate block.

In an embodiment, when the left and upper transformed template 2410 are each split into four sub-templates, the difference comparison may be performed in units of sub-template sets including corresponding sub-templates in the left and upper transformed templates 2410. That is, the image-decoding apparatus 2000 may obtain four reference blocks through the difference comparison between corresponding sub-template sets in the current block 2100 and the candidate block. The sub-template set may include sub-templates in the left and upper transformed templates 2310.

For example, the first sub-template set may include the first sub-templates 2421 of the left and upper transformed templates 2410, the second sub-template set may include the second sub-templates 2422 of the left and upper transformed templates 2410, the third sub-template set may include the third sub-templates 2423 of the left and upper transformed templates 2410, and the fourth sub-template set may include the fourth sub-templates 2424 of the left and upper transformed templates 2410.

Although FIG. 24 illustrates the case in which the transformed template 2410 is split into four symmetrical sub-templates, the present disclosure is not limited thereto. The transformed template may be split into four asymmetrical sub-templates, considering a position of a transform coefficient according to a frequency band. For example, a ratio between the width of the first sub-template 2421 and the width of the second sub-template 2422 may be 1:3, and a ratio between the height of the first sub-template 2421 and the height of the third sub-template 2423 may be 1:3.

The image-decoding apparatus 2000 may generate a prediction block of the current block 2100 through a weighted sum of the first reference block to fourth reference block. In this regard, Formula 2 may be applied. $P = {w}_{1} * {RB}_{f 1} + {w}_{2} * {RB}_{f 2} + {w}_{3} * {RB}_{f 3} + {w}_{4} * {RB}_{f 4}$

In Formula 2, RB_{f1} represents the first reference block, RB_{f2} represents the second reference block, RB_{f3} represents the third reference block, and RB_{f4} represent the fourth reference block. w₁ represents a first weight applied to the first reference block, w₂ represents a second weight applied to the second reference block, w₃ represents a third weight applied to the third reference block, and w₄ represents a fourth weight applied to the fourth reference block.

For example, the first to fourth weights may each be 1. That is, the prediction block of the current block 2100 may be generated by averaging the first to fourth reference blocks.

Alternatively, the first to fourth weights may each be a predefined fixed value or may each be a value determined based on encoding information of the current block 2100. The encoding information may include a search region including a reference block to which the weight is applied, sub-template position/size, sub-template splitting structure, and frequency band corresponding to a sub-template, etc.

The splitting of the transformed template (2310 and 2410) described in relation to FIGS. 23 and 24 is not limited to the aforementioned embodiments and may be performed by using various methods. For example, the transformed template of the current block 2100 may be split in a uniform manner or in a non-uniform manner. The transformed template of the candidate block and the transformed template of the current block 2100 may be split into the same structure.

In an embodiment, the image-decoding apparatus 2000 may split the transformed template in a non-uniform manner into a top-left region and the rest of the region. The transformed template may be split into a first sub-template including the top-left region and a second sub-template including the rest of the region excluding the top-left region. For example, the first sub-template may include the first sub-template 2421 illustrated in FIG. 24. The second sub-template may include the second to fourth sub-templates 2422, 2423, and 2424 illustrated in FIG. 24.

In an embodiment, the image-decoding apparatus 2000 may partition regions within the transformed template in ascending order of frequency, beginning with the lowest frequencies. For example, the first sub-template may be determined as a region including a predetermined number of transform coefficients starting from low frequencies, and the second sub-template may be determined as a region including the rest of the transform coefficients. Partitioning of the transform coefficient region may be determined according to a predefined scan order. For example, the scan order may include at least one of a x-scan order, a raster scan order, a zig-zag scan order, an up-right diagonal scan order, a horizontal scan order, or a vertical scan order.

In an embodiment, the image-decoding apparatus 2000 may not perform searching with respect to a particular frequency band in the process of determining sub-templates by splitting the transformed template. For example, the image-decoding apparatus 2000 may not perform the difference comparison with respect to the second sub-template 2422 or the third sub-template 2423 of FIG. 24. That is, a reference block (i.e., second reference block or third reference block) may be obtained based on the second sub-template 2422 or the third sub-template 2423.

In an embodiment, the image-decoding apparatus 2000 may set the transform coefficient corresponding to the frequency band to be 0 such that searching is not performed with respect to the particular frequency band. For example, the image-decoding apparatus 2000 may set the transform coefficient included in the second sub-template 2422 or the third sub-template 2423 of FIG. 24 to be 0.

In the foregoing embodiments, the template matching prediction is performed based on the difference comparison between specific frequency bands or specific regions of a frequency-domain transformed template. According to the embodiments described above, the template matching prediction may be performed by considering the characteristics according a frequency band to increase the prediction accuracy.

When the characteristics according to a frequency band are considered in obtaining of a prediction block from a reference block, more various predictors may be considered in the prediction, and the compression efficiency may be improved. Hereinafter, a method of generating a prediction block by using a frequency band in a frequency domain and considering characteristics according to a frequency band.

FIG. 25 is a diagram illustrating an example of a process of generating a prediction block by combining transformed reference blocks, according to an embodiment.

Referring to FIG. 25, the image-decoding apparatus 2000 may obtain a transformed reference block (2511 and 2521) by performing a transform on a reference block (2510 and 2520) and generate a prediction block of the current block 2100 based on a region corresponding to a sub-template used for determination of each reference block (i.e., the hatched region in FIG. 25, a first region 2512 and a second region 2522), within the transformed reference block.

More specifically, the image-decoding apparatus 2000 may obtain a transformed first reference block 2511 and a transformed second reference block 2521 by transforming the first reference block 2510 and the second reference block 2520, respectively. The image-decoding apparatus 2000 may combine regions (i.e., the hatched region in FIG. 25, the transformed first reference block 2511 and the transformed second reference block 2521) respectively corresponding to sub-templates used for difference comparison within the first transformed reference block 2511 and the second transformed reference block 2521. The image-decoding apparatus 2000 may generate a prediction block of the current block 2100 by performing an inverse transform on the combined region.

In an embodiment, the region corresponding to the sub-template used for difference comparison may be a region including a transform coefficient corresponding to a frequency band of the sub-template used for the difference comparison.

In FIG. 25, although it is assumed that the transformed first reference block 2511 and the transformed second reference block 2521 are vertically split into two, the present disclosure is not limited thereto, and the transformed reference blocks (2511 and 2521) may be split into a structure corresponding to a partitioning structure of the transformed template.

In an embodiment, the image-decoding apparatus 2000 may determine the first reference block 2510 and the second reference block 2520. In this regard, the method described in relation to FIG. 23 may be applied. When the transformed template is split into four, four reference blocks may be determined. In this case, the method described in relation to FIG. 24 may be applied.

In FIG. 25, it is assumed that the first reference block 2510 is obtained through the difference comparison between the first sub-templates 2321 of the candidate block and the current block 2100, and the second reference block 2520 is obtained through the difference comparison between the second sub-templates 2322 of the candidate block and the current block 2100 as described above in relation to FIG. 23. In this regard, the first region 2512 in the transformed first reference block 2511 may be a region corresponding to the first sub-template 2321, and the second region 2522 in the transformed second reference block 2521 may be a region corresponding to the second sub-template 2322.

In an embodiment, the image-decoding apparatus 2000 may obtain a combined reference block 2530 by combining the first region 2512 in the transformed first reference block 2511 and the second region 2522 in the transformed second reference block 2521.

In an embodiment, the position of the first region 2512 in the combined reference block 2530 may correspond to the position of the first sub-template 2321 in the transformed template 2310. That is, the first region 2512 may be located at a left position in the combined reference block 2530.

Similar to the above, the position of the second region 2522 in the combined reference block 2530 may correspond to the position of the second sub-template 2322 in the transformed template 2310. That is, the second region 2522 may be located at a right position in the combined reference block 2530.

In an embodiment, the image-decoding apparatus 2000 may derive an inverse-transformed reference block 2540 by performing an inverse transform on the combined reference block 2530. The inverse-transformed reference block 2540 may be determined as a prediction block of the current block 2100. The image-decoding apparatus 2000 may generate a prediction block of the current block 2100 by performing an inverse transform on the combined reference block 2530.

In an embodiment, the transform performed on the reference block may be predefined. Various transforms (or transform kernels, transform types, or transform matrixes) may be defined for transform of the reference block. For example, the predefined transform may include at least one of Hadamard transform, DCT-based transform, DST-based transform, DFT-based transform, Wavelet transform, or KLT. For example, the transform performed on the reference block may be identical to the transform performed on the templates of the candidate block and the current block 2100. For example, the transform performed on the reference block may be different from the transform performed on the templates of the candidate block and the current block 2100.

As described above, the partitioning structure of the transformed reference block (2510 and 2520) may correspond to the partitioning structure of the transformed template.

In an embodiment, when the transformed template is split into N regions, N reference blocks may be determined. In this case, the image-decoding apparatus 2000 may determine N transformed reference blocks by performing a transform on the N reference blocks. The image-decoding apparatus 2000 may combine regions corresponding to the sub-templates within the N transformed reference blocks. Then, the image-decoding apparatus 2000 may generate a prediction block of the current block 2100 by inverse-transforming the combined reference block.

In an embodiment, when the transformed template is split into four as described above in the embodiment illustrated in FIG. 24, the image-decoding apparatus 2000 may determine four reference blocks based on the difference comparison among the four sub-templates. The image-decoding apparatus 2000 may determine four transformed reference blocks by performing a transform on the four reference blocks. The image-decoding apparatus 2000 may determine a combined reference block by combining regions corresponding to sub-templates used in determination of each reference block, within the four transformed reference block. The image-decoding apparatus 2000 may determine a prediction block of the current block 2100 by an inverse-transforming the combined reference block.

According to the embodiments described in relation to FIGS. 22 top 25, a transform may be performed on the template or the reference block for frequency-domain template matching prediction. In this case, the greater the unit to which the transform is performed, the higher the complexity may be. Accordingly, in consideration of foregoing, the size of the unit to which the transform is applied may be predefined. For example, wheh the size of the template or the reference block is WxH, a transform kernel (or transform matrix) may be defined as MxN, and the transform may be performed in units of MxN blocks.

In an embodiment, when the current block 2100 is WxH, and the upper and left templates are Wx4 and 4xH, respectively, the image-decoding apparatus 2000 may perform the transform on the templates of the current block 2100 in 4x4 units. The image-decoding apparatus 2000 may obtain 4x4 sub-templates by performing the transform on each of the upper and left templates in 4x4 units. The image-decoding apparatus 2000 may determine a plurality of reference blocks by performing the difference comparison in units of 4x4 sub-templates and generate a prediction block through a weighted sum of the reference blocks.

In an embodiment, when the reference block is WxH, the image-decoding apparatus 2000 may perform the transform on the reference block in 4x4 units. For example, the size of transform applied to the reference block may be equal to the size of transform applied to the template. The image-decoding apparatus 2000 may obtain a combined reference block by combining regions corresponding to sub-templates used in determination of each reference block, within the transformed reference block. The image-decoding apparatus 2000 may determine a prediction block of the current block 2100 by an inverse-transforming the combined reference block. For example, within the combined reference block, regions corresponding to the sub-templates used in determination of each reference block may be assigned to predefined positions.

In an embodiment, the frequency-domain template matching prediction method described above in relation to FIGS. 22 to 25 and the spatial-domain template matching prediction method described above in relation to FIG. 21 may be used selectively. For example, the SATD-based template matching prediction mode and the SAD-based template matching prediction mode may be defined and used selectively.

In an embodiment, a plurality of template matching prediction modes may be defined. The plurality of template matching prediction modes may include the SATD-based template matching prediction mode and the SAD-based template matching prediction mode. For example, a syntax element indicating a particular template matching prediction mode from among the plurality of template matching prediction modes may be signaled through a bitstream. In this case, the syntax element may be a flag or an index.

In an embodiment, the plurality of template matching prediction modes may include the SAD-based template matching prediction mode, the SATD-based template matching prediction mode, or the combined template matching prediction mode. The combined template matching prediction mode may be a method of determining candidate blocks based on the SAD as described above in relation to FIGS. 21 and 25 and then determining a final reference block from among the determined candidate blocks based on the SATD. For example, a syntax element indicating a particular template matching prediction mode from among the plurality of template matching prediction modes may be signaled through a bitstream. In this case, the syntax element may be an index.

In an embodiment, a syntax element indicating a partitioning structure of the transformed template, the number of sub-templates, a partitioning structure of the reference block, and information on a weight applied to the reference block may be signaled through the bitstream.

As described above in relation to FIG. 22, the image-decoding apparatus 2000 may determine a final candidate block by performing the SATD-based template matching prediction on the candidates determined by the SAD-based template matching prediction. In the present disclosure, the SAD-based template matching prediction may refer to the spatial domain-based template matching prediction described in relation to FIG. 21, and the SATD-based template matching prediction may refer to the frequency domain-based template matching prediction described in relation to FIG. 25.

As described above, when performing the frequency domain-based template matching prediction, the search for difference comparison may be performed on candidate blocks at every pixel positions within the search region. The image-decoding apparatus 2000 may perform a transform on the templates of the candidate blocks within the search region by shifting pixel-by-pixel and perform the template matching prediction by using the transformed templates.

However, as described above, as transforms are required for all possible blocks at a pixel-level within the search region, the complexity may increase. Accordingly, the candidate block for the template matching prediction may be defined as a block at a predetermined position sampled within the search region and may be determined by the SAD-based template matching prediction.

In an embodiment, the candidate blocks on which the SATD-based template matching prediction is performed may be selected by performing the SAD-based template matching prediction within the search region. In this regard, the embodiment described in relation to FIG. 21 may be applied.

In an embodiment, the number of candidate blocks determined by the SAD-based template matching prediction may be predefined. For example, a candidate list including a predetermined number of candidate blocks may be configured. Candidates included in the candidate list may include block vectors indicating the candidate blocks. That is, a candidate list including a predetermined number of candidate blocks having the minimum SAD value within the search region may be configured.

In an embodiment, the image-decoding apparatus 2000 may determine as a reference block a candidate block having the minimum SATD value in the candidate list. As described above in relation to FIGS. 23 to 25, when the template matching prediction is performed in units of sub-templates, the image-decoding apparatus 2000 may determine as a reference block a candidate block having the smallest SATD value in the candidate list in units of sub-templates.

In an embodiment, the image-decoding apparatus 2000 may perform the difference comparison by using both the difference between the templates in the spatial domain and the difference between the templates in the frequency domain. That is, the image-decoding apparatus 2000 may obtain the difference between the templates by using the SAD and SATD and may determine a candidate block minimizing the obtained difference as a reference block. In this regard, Formula 3 may be used.$New metric = SAD + λ ⋅ SATD$

Referring to FIG. 3, a difference between templates may be calculated by using a SAD value and a SATD value. For example, a template minimizing a value obtained by adding the SAD value and the SATD value multiplied by λ may be determined as a reference block. In Formula 3, λ, a variable applied to the SATD value, may be a predefined constant. The reference block may be determined by comparing the differences obtained by using Formula 3.

The embodiment of obtaining a prediction block by inverse-transforming a reference block in the frequency domain as described in relation to FIG. 25 may be used in a substantially identical manner for intra block copy (IBC) prediction or inter prediction. For example, a transform may be performed on a plurality of reference blocks obtained based on the IBC prediction or the inter prediction. In an embodiment, in the case of IBS prediction, a reference block may be identified by a block vector in the current picture, and in the case of inter prediction, a reference block may be identified by a motion vector in a reference picture.

In an embodiment, the image-decoding apparatus 2000 may obtain a combined reference block by combining predetermined regions (or frequency bands) in each transformed reference block and generate a prediction block by performing an inverse-transform on the combined reference block.

In an embodiment, the image-decoding apparatus 2000 may obtain a first transformed reference block by transforming a first reference block. The image-decoding apparatus 2000 may split the first transformed reference block into two frequency domains. That is, the first transformed reference block may be split into a region corresponding to a first frequency domain and a region corresponding to a second frequency domain.

Similarly, the image-decoding apparatus 2000 may obtain a second transformed reference block by transforming a second reference block. The image-decoding apparatus 2000 may split the second transformed reference block into two frequency domains. The second transformed reference block may be split into a region corresponding to a first frequency domain and a region corresponding to a second frequency domain.

The image-decoding apparatus 2000 may obtain a combined reference block by combining the region corresponding to the first frequency domain in the first transformed reference block and the region corresponding to the second frequency domain in the second transformed reference block. The image-decoding apparatus 2000 may generate a prediction block by inverse-transforming the combined reference block.

Hereinafter, various extended embodiments of performing the spatial domain-based template matching prediction are described.

In the spatial domain-based template matching prediction according to the embodiment described in relation to FIG. 21, a candidate block having the minimum difference between templates may be determined as a reference block. That is, one reference block may be searched in a search region. In an embodiment, when performing the spatial domain-based template matching prediction, the image-decoding apparatus 2000 may generate a prediction block through a weighted sum of a plurality of reference blocks.

In an embodiment, the image-decoding apparatus 2000 may determine a predetermined number of reference blocks in the order of lowest to highest SAD within the search region. The image-decoding apparatus 2000 may generate a prediction block of the current block 2100 through a weighted sum of a plurality of determined reference blocks. In this regard, Formula 4 may be applied. $P = {w}_{1} * {RB}_{1} + {w}_{2} * {RB}_{2} + {w}_{3} * {RB}_{3} + ⋯ + {w}_{n} * {RB}_{n}$

In Formula 4, RB₁ represents a reference block having the smallest SAD value, RB₂ represents a reference block having the second smallest SAD value, and RB₃ represents a reference block having the third smallest SAD value. For example, w₁+w₂+w₃+...+wₙ=1. That is, the sum of weights applied to the reference blocks may be 1. Alternatively, the same weight may be applied to the reference blocks. That is, a prediction block may be generated by averaging the reference blocks. Alternatively, the weights applied to the reference blocks may be different from each other. The weights applied to the reference blocks may be set to always satisfy w*x >= w*y when x <= y. The weights applied to the reference blocks may be determined according to a used cost function.

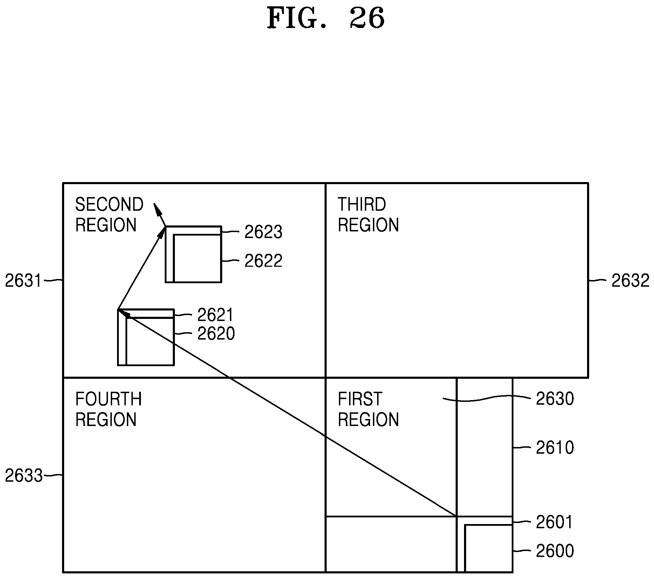

FIG. 26 is a diagram for illustrating a process of template matching prediction, according to an embodiment.

Referring to FIG. 26, the image-decoding apparatus 2000 may determine a reference block performing a cascaded search on candidate blocks in the search region.

More specifically, the image-decoding apparatus 2000 may determine a first reference block 2620 having template 2621 minimizing a template difference with a template 2601 of a current block 2600 within the search region. Then, the image-decoding apparatus 2000 may additionally perform the template matching prediction by using the template 2621 of the first reference block 2620 in the search region. That is, the image-decoding apparatus 2000 may determine a second reference block 2622 having template 2623 minimizing a template difference with a template 2621 of the first reference block 2620 within the search region.

In an embodiment, the image-decoding apparatus 2000 may determine a predetermined number of reference blocks of the current block 2600 by performing the aforementioned process sequentially and repeatedly. The image-decoding apparatus 2000 may generate a prediction block of the current block 2100 through a weighted sum of a plurality of determined reference blocks. In this regard, Formula 5 may be applied. $P = {w}_{1} * {RB}_{1} + {w}_{2} * {RB}_{2} + {w}_{3} * {RB}_{3} + ⋯ + {w}_{n} * {RB}_{n}$

Referring to FIG. 5, RB₁ represents the first reference block 2620 having the template 2621 minimizing a template difference with the template 2601 of the current block 2600, RB₂ represents the second reference block 2622 having the template 2623 minimizing a template difference with the template 2621 of the first reference block 2620, and RB₃ represents a third reference block having a template minimizing a template difference with the template 2623 of the second reference block 2622.

In an embodiment, w₁+w₂+w₃+...+wₙ=1. That is, the sum of weights applied to the reference blocks may be 1. Alternatively, the same weight may be applied to the reference blocks. That is, a prediction block may be generated by averaging the reference blocks. Alternatively, the weights applied to the reference blocks may be different from each other.

In an embodiment, after the first reference block 2620 is determined, as the template matching prediction is performed in the search region that is already reconstructed, a subsequent reference block search may be performed through a difference comparison between reference blocks instead of a difference comparison between templates. That is, the image-decoding apparatus 2000 may determine as the second reference block 2622 a block minimizing a difference with the first reference block 2620 and determine as the third reference block a block minimizing a difference with the second reference block 2622.

In an embodiment, the search region may be predefined. A plurality of regions may be determined as the search region. A reference block may be sequentially searched according to a search order defined among the plurality of search regions. In this case, as the embodiment described above in relation to FIG. 12 may be applied, any redundant description thereon is omitted.

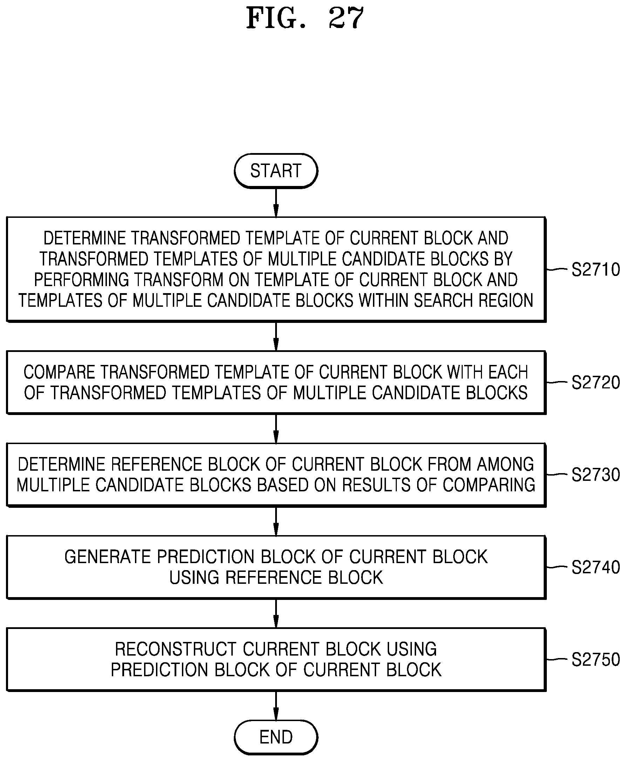

FIG. 27 is a flowchart illustrating a method of decoding an image, according to an embodiment.

In operation S2710, the image-decoding apparatus 2000 may determine a transformed template of the current block by performing a transform on a template of the current block 2100 and determine transformed templates of a plurality of candidate blocks by performing a transform on templates of the plurality of candidate blocks in the search region.

In an embodiment, various transforms may be predefined. For example, the predefined transform may include at least one of Hadamard transform, DCT-based transform, DST-based transform, Wavelet transform, or KLT.

In an embodiment, when performing the template matching prediction using transformed templates, a candidate block in the search region may be determined by various method. In this regard, the embodiment described in relation to FIGS. 22 and 25 may be applied. Any redundant descriptions thereof are omitted.

In an embodiment, positions of the plurality of candidate blocks may be determined in units of predetermined pixel units starting from a top-left initial position within the search region. For example, the top-left initial position may be determined based on the height of the top template of the upper template of the current block 2100 and the width of the left template of the current block 2100.

Furthermore, the positions of the plurality of candidate blocks may be determined according to results of comparison performed based on the SAD within the search region.

In operation S2720, the image-decoding apparatus 2000 may compare the transformed template of the current block 2100 and the transformed template of each of the plurality of candidate blocks.

In an embodiment, the image-decoding apparatus 2000 may split each of the transformed template of the current block 2100 and the transformed template of each of the plurality of candidate blocks into a plurality of sub-templates. In this regard, the embodiment described in relation to FIGS. 23 to 25 may be applied. Any redundant descriptions thereof are omitted.

In an embodiment, the image-decoding apparatus 2000 may calculate a difference between a current sub-template in the transformed template of the current block 2100 and a sub-template corresponding to a current sub-template in the transformed template of the first candidate block. For example, the difference may be calculated by using the SATD.

In an embodiment, the transformed template of the current block 2100 may include a first sub-template including transform coefficients corresponding to the first frequency band (or frequency component) and a second sub-template including transform coefficients corresponding to the second frequency band. In other words, the transformed template of the current block 2100 may include the first sub-template corresponding to the first frequency band and the second sub-template corresponding to the second frequency band.

Similarly, each of the transformed templates of the plurality of candidate blocks may include a third sub-template including transform coefficients corresponding to the first frequency band and a fourth sub-template including transform coefficients corresponding to the second frequency band. In other words, the transformed template of each of the plurality of candidate blocks may include the third sub-template corresponding to the first frequency band and the fourth sub-template corresponding to the second frequency band.

In operation 2730, the image-decoding apparatus 2000 may determine a reference block of the current block 2100 from among a plurality of candidate blocks based on the comparison result obtained in operation S2720.

In an embodiment, the image-decoding apparatus 2000 may determine as a reference block of the current block 2100 a candidate block having a sub-template that is most similar to each sub-template in the transformed template of the current block 2100 by performing the difference comparison in units of partitioned sub-templates. In this regard, the embodiment described in relation to FIGS. 23 to 25 may be applied. Any redundant descriptions thereof are omitted.

In an embodiment, the image-decoding apparatus 2000 may determine as a first reference block a candidate block minimizing a difference between the first sub-template of the current block 2100 and the third sub-template of the candidate block. The image-decoding apparatus 2000 may determine as a second reference block a candidate block minimizing a difference between the second sub-template of the current block 2100 and the fourth sub-template of the candidate block.

In operation S2740, the image-decoding apparatus 2000 may generate a prediction block of the current block 2100 by using the reference block.

In an embodiment, the image-decoding apparatus 2000 may generate a prediction block of the current block 2100 by performing a weighted summation of the first reference block and the second reference block.

In addition, the image-decoding apparatus 2000 may obtain a transformed reference block from the reference block, combine the regions corresponding to the sub-templates used in the determination of each reference block in the transformed reference block, and generate a prediction block of the current block 2100 based on the combined region. In this regard, the embodiment described in relation to FIG. 25 may be applied. Any redundant descriptions thereof are omitted.

In an embodiment, the image-decoding apparatus 2000 may determine a first transformed reference block and a second transformed reference block by performing a transform on each of the first reference block and the second reference block.

In an embodiment, the image-decoding apparatus 2000 may combine a first region including transform coefficients corresponding to the first frequency band in the first transformed reference block and a second region including transform coefficients corresponding to the second frequency band in the second transformed reference block.

In an embodiment, the image-decoding apparatus 2000 may generate a prediction block of the current block 2100 by performing an inverse transform on the combined region.

In operation S2750, the image-decoding apparatus 2000 may reconstruct the current block 2100 by using the prediction block of the current block 2100.

In an embodiment, the image-decoding apparatus 2000 may reconstruct the current block 2100 by using the prediction block.

In an embodiment, the image-decoding apparatus 2000 may determine the prediction block as the reconstructed current block 2100.

In an embodiment, the image-decoding apparatus 2000 may generate the reconstructed current block 2100by combining the prediction block with residual data obtained from the bitstream.

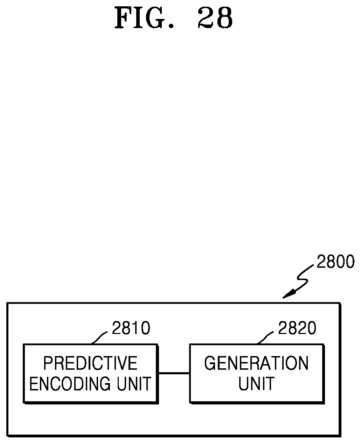

FIG. 28 is a block diagram illustrating a configuration of an image-encoding apparatus according to an embodiment.

Referring to FIG. 28, an image-encoding apparatus 2800 may include a predictive encoding unit 2810 and a generation unit 2820.

The predictive encoding unit 2810 and the generation unit 2820 according to an embodiment may be implemented as at least one processor. In an embodiment, the predictive encoding unit 2810 and the generation unit 2820 may operate according to at least one instruction stored in at least one memory.

The image-encoding apparatus 2800 may include at least one memory in which input/output data of the predictive encoding unit 2810 and the generation unit 2820 are stored. In addition, the image-encoding apparatus 2800 may include a memory controller configured to control a data input/output of the memory.

In an embodiment, the predictive encoding unit 2810 may correspond to the predictive encoding unit 1915 illustrated in FIG. 19, and the generation unit 2820 may correspond to the entropy encoding unit 1925 illustrated in FIG. 19.

The predictive encoding unit 2810 may determine a prediction mode of the current block. The current block may be a coding tree unit, a coding unit, a transform unit, or a prediction unit split from the current picture to be encoded.

In an embodiment, the prediction mode of the current block may be any one of a plurality of prediction modes including an intra mode and an inter mode. For example, the intra mode may include a template matching prediction mode.

Alternatively, in an embodiment, the prediction mode of the current block may be any one of a plurality of prediction modes including at least one of an intra mode, an inter mode, or a template matching prediction mode.

The predictive encoding unit 2810 may generate may generate a prediction block of the current block by performing the intra prediction or the inter prediction on the current block based on a prediction mode of the current block and encode the current block by using the prediction block.

In an embodiment, when the prediction mode of the current block is a template matching prediction mode, the predictive encoding unit 2810 may determine a reference block for the current block within a search region by performing template matching.

When a prediction block is generated through the intra prediction performed on the current block, the predictive encoding unit 2810 may encode the current block by using the prediction block.

In an embodiment, encoding of the current block may refer to a process of generating information that enables reconstruction of the current block by the image-decoding apparatus 2000. The information generated through encoding may be included in the bitstream.

In an embodiment, when the template matching prediction is applied to the current block, the predictive encoding unit 2810 may identify a reference block in a predefined search region by performing the template matching and generate a prediction block of the current block by using the identified reference block.

The specific embodiment of performing the template matching prediction described in relation to FIGS. 20 to 27 may be applied in the substantially the same manner in the predictive encoding unit 2810. Any redundant descriptions thereof are omitted.

In an embodiment, the predictive encoding unit 2810 may determine as a reference block of the current block a candidate block having a sub-template that is most similar to each sub-template in the transformed template of the current block by performing the difference comparison in units of partitioned sub-templates. In this regard, the embodiment described in relation to FIGS. 23 to 25 may be applied. Any redundant descriptions thereof are omitted.

In addition, the predictive encoding unit 2810 may obtain a transformed reference block from the reference block, combine the regions corresponding to the sub-templates used in the determination of each reference block in the transformed reference block, and generate a prediction block of the current block based on the combined region. In this regard, the embodiment described in relation to FIG. 25 may be applied. Any redundant descriptions thereof are omitted.

In an embodiment, the predictive encoding unit 2810 may generate residual data corresponding to a difference between the prediction block and the current block. When the prediction is determined as the current block, the residual data may not be generated.

In an embodiment, the predictive encoding unit 2810 may encode the current block by using the prediction block. The bitstream may be generated as a result of encoding of the current block. In an embodiment, the image-encoding apparatus 2800 may obtain residual data corresponding to a difference between the prediction block and the original block, and information on the residual data may be included in the bitstream.

In an embodiment, as operations of a predictive encoding unit 4010 of the image-encoding apparatus 2800 may be identical to the operations of the predictive decoding unit 2030 of the image-decoding apparatus 2000, the description of the operations of the predictive decoding unit 2030 provided above may be applied to the predictive encoding unit 2810.

The generation unit 2820 may generate a bitstream including an encoding result of a picture. The bitstream may include a decoding result of the current block.

In an embodiment, the generation unit 2820 may transmit the bitstream to the image-decoding apparatus 2000 through a network.

In an embodiment, the generation unit 2820 may store a bitstream in a data storage medium including a magnetic medium such as a hard disk, a floppy disk, and a magnetic tape, an optical recording medium such as a CD-ROM and a DVD, and a magneto-optical medium such as a floptical disk, etc.

The generation unit 2820 may generate a bitstream including syntax elements generated through the encoding of the picture. Values corresponding to the syntax elements may be included in the bitstream according to a hierarchical structure of the picture.

The generation unit 2820 may obtain bins included in the bitstream by entropy-encoding the syntax elements.

In an embodiment, the bitstream may include information on a prediction mode of the current block in the current picture.

In an embodiment, the information on the prediction mode may be included in a sequence parameter set, a picture parameter set, a slice header, or slice data of a bitstream. For example, the slice data may include information signaled at a level of coding tree, coding unit, transform tree, or transform unit.

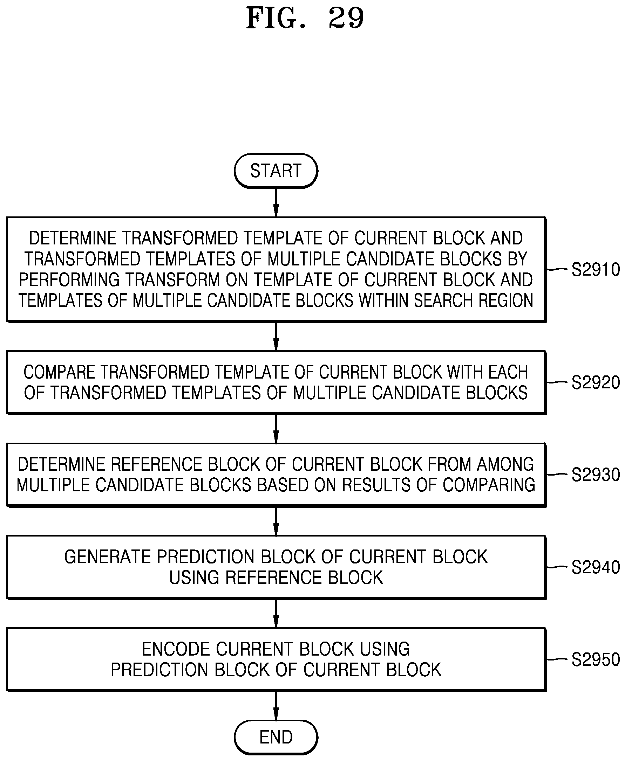

FIG. 29 is a flowchart illustrating a method of encoding an image, according to an embodiment.

In operation S2910, the image-encoding apparatus 2800 may determine a transformed template of the current block by performing a transform on a template of the current block and determine transformed templates of a plurality of candidate blocks by performing a transform on templates of the plurality of candidate blocks in the search region.

The specific embodiment of performing the template matching prediction described in relation to FIGS. 21 to 27 may be applied in the substantially the same manner in an image-encoding apparatus 4000. Any redundant descriptions thereof are omitted.

In an embodiment, various transforms may be predefined. For example, the predefined transform may include at least one of Hadamard transform, DCT-based transform, DST-based transform, Wavelet transform, or KLT.

In an embodiment, when performing the template matching prediction using transformed templates, a candidate block in the search region may be determined by various method. In this regard, the embodiment described in relation to FIGS. 22 and 25 may be applied. Any redundant descriptions thereof are omitted.

In an embodiment, positions of the plurality of candidate blocks may be determined in units of predetermined pixel units starting from a top-left initial position within the search region. The initial top-left position may be determined based on the height of the top template of the current block and the width of the left template of the current block.

Furthermore, the positions of the plurality of candidate blocks may be determined according to results of comparison performed based on the SAD within the search region.

In operation S2920, the image-encoding apparatus 2800 may compare the transformed template of the current block and the transformed template of each of the plurality of candidate blocks.

In an embodiment, the image-encoding apparatus 2800 may split each of the transformed template of the current block and the transformed template of each of the plurality of candidate blocks into a plurality of sub-templates. In this regard, the embodiment described in relation to FIGS. 23 to 25 may be applied. Any redundant descriptions thereof are omitted.

In an embodiment, the image-encoding apparatus 2800 may calculate a difference between a current sub-template in the transformed template of the current block and a sub-template corresponding to a current sub-template in the transformed template of the first candidate block. For example, the difference may be calculated by using the SATD.

In an embodiment, the transformed template of the current block may include a first sub-template including transform coefficients corresponding to the first frequency band (or frequency component) and a second sub-template including transform coefficients corresponding to the second frequency band. In other words, the transformed template of the current block may include the first sub-template corresponding to the first frequency band and the second sub-template corresponding to the second frequency band.

Similarly, each of the transformed templates of the plurality of candidate blocks may include a third sub-template including transform coefficients corresponding to the first frequency band and a fourth sub-template including transform coefficients corresponding to the second frequency band. In other words, the transformed template of each of the plurality of candidate blocks may include the third sub-template corresponding to the first frequency band and the fourth sub-template corresponding to the second frequency band.

In operation 2930, the image-encoding apparatus 2800 may determine a reference block of the current block from among a plurality of candidate blocks based on the comparison result obtained in operation S2920.

In an embodiment, the image-encoding apparatus 2800 may determine as a reference block of the current block a candidate block having a sub-template that is most similar to each sub-template in the transformed template of the current block by performing the difference comparison in units of partitioned sub-templates. In this regard, the embodiment described in relation to FIGS. 23 to 25 may be applied. Any redundant descriptions thereof are omitted.

In an embodiment, the image-encoding apparatus 2800 may determine as a first reference block a candidate block minimizing a difference between the first sub-template of the current block and the third sub-template of the candidate block. The image-encoding apparatus 2800 may determine as a second reference block a candidate block minimizing a difference between the second sub-template of the current block and the fourth sub-template of the candidate block.

In operation S2940, the image-encoding apparatus 2800 may generate a prediction block of the current block by using the reference block.

In an embodiment, the image-encoding apparatus 2800 may generate a prediction block of the current block by performing a weighted summation of the first reference block and the second reference block.

In addition, the image-encoding apparatus 2800 may obtain a transformed reference block from the reference block, combine the regions corresponding to the sub-templates used in the determination of each reference block in the transformed reference block, and generate a prediction block of the current block based on the combined region. In this regard, the embodiment described in relation to FIG. 25 may be applied. Any redundant descriptions thereof are omitted.

In an embodiment, the image-encoding apparatus 2800 may determine a first transformed reference block and a second transformed reference block by performing a transform on each of the first reference block and the second reference block.

In an embodiment, the image-encoding apparatus 2800 may combine a first region including transform coefficients corresponding to the first frequency band in the first transformed reference block and a second region including transform coefficients corresponding to the second frequency band in the second transformed reference block.

In an embodiment, the image-encoding apparatus 2800 may generate a prediction block of the current block by performing an inverse transform on the combined region.

In operation S2950, the image-encoding apparatus 2800 may encode the current block by using the prediction block of the current block. The bitstream may be generated as a result of encoding of the current block.

In an embodiment, the image-encoding apparatus 2800 may determine the prediction block as the reconstructed current block.

In an embodiment, the image-encoding apparatus 2800 may obtain residual data corresponding to a difference between the prediction block and the original block, and information on the residual data may be included in the bitstream.

The method of encoding an image and the image-encoding apparatus 2800 and the method of decoding an image and the image-decoding apparatus 2000 aim to improve the performance of predictive encoding and predictive decoding of a current block.

The method of encoding an image and the image-encoding apparatus 2800 and the method of decoding an image and the image-decoding apparatus 2000 aim to reduce an amount of data required for intra prediction mode signaling.

The method of encoding an image and the image-encoding apparatus 2800 and the method of decoding an image and the image-decoding apparatus 2000 aim to decrease a bitrate of a bitstream.

The technical objects to be achieved by the present disclosure are not limited to the above, and other objects which are not mentioned herein can be clearly understood from the description by a person skilled in the art.

The method of decoding an image according to an embodiment may include determining a transformed template of the current block by performing a transform on a template of the current block and determining transformed templates of a plurality of candidate blocks by performing a transform on templates of the plurality of candidate blocks in the search region.

According to an embodiment, the transform may be performed by using a predefined transform.

According to an embodiment, the predefined transform may include at least one of Hadamard transform, DCT-based transform, DST-based transform, Wavelet transform, or KLT.

According to an embodiment, positions of the plurality of candidate blocks in the search region may be determined in units of predetermined pixel units starting from a top-left initial position within the search region.

According to an embodiment, the initial top-left position may be determined based on the height of the top template of the current block and the width of the left template of the current block.

According to an embodiment, the positions of the plurality of candidate blocks in the search region may be determined according to results of comparison performed based on the SAD within the search region.

A method of decoding an image according to an embodiment may include comparing the transformed template of the current block and the transformed template of each of the plurality of candidate blocks.

According to an embodiment, the comparing of the transformed template of the current block and the transformed template of each of the plurality of candidate blocks may include splitting each of the transformed template of the current block and the transformed templates of the plurality of candidate blocks into a plurality of sub-templates.

According to an embodiment, the comparing of the transformed template of the current block and the transformed template of each of the plurality of candidate blocks may include calculating a difference between the current sub-template and the sub-template corresponding to the current sub-template in the transformed template of the first candidate block.

According to an embodiment, the difference may be calculated based on the SATD.

According to an embodiment, the transformed template of the current block may include a first sub-template including transform coefficients corresponding to the first frequency band and a second sub-template including transform coefficients corresponding to the second frequency band.

According to an embodiment, each of the transformed templates of the plurality of candidate blocks may include a third sub-template including transform coefficients corresponding to the first frequency band and a fourth sub-template including transform coefficients corresponding to the second frequency band.

The method of decoding an image according to an embodiment may include determining a reference block of the current block from among a plurality of candidate blocks based on the comparison result.

According to an embodiment, the determining of the reference block of the current block may include determining as a first reference block a candidate block minimizing a difference between the first sub-template and the third sub-template and determining as a second reference block a candidate block minimizing a difference between a second sub-template and a fourth sub-template.

The method of decoding an image according to an embodiment may include generating a prediction block of the current block by using the reference block.

According to an embodiment, the generating of the prediction block of the current block may include generating the prediction block of the current block by performing a weighted summation of the first reference block and the second reference block.

According to an embodiment, the generating of the prediction block of the current block may include generating the prediction block of the current block by performing a weighted summation of the first reference block and the second reference block.

According to an embodiment, the generating of the prediction block of the current block may include determining a first transformed reference block and a second transformed reference block by performing a transform on the first reference block and the second reference block.

According to an embodiment, the generating of the prediction block of the current block may include combining a first region including transform coefficients corresponding to the first frequency band in the first transformed reference block and a second region including transform coefficients corresponding to the second frequency band in the second transformed reference block.

According to an embodiment, the generating of the prediction block of the current block may include generating the prediction block of the current block by performing an inverse transform on a combined region of the first region and the second region.

The method of decoding an image according to an embodiment may include reconstructing the current block by using the prediction block of the current block.

The image-decoding apparatus according to an embodiment may include at least one memory storing at least one instruction and at least one processor configured to operate according to the at least one instruction.

In an embodiment, the at least one processor may determine a transformed template of the current block by performing a transform on a template of the current block and determine transformed templates of a plurality of candidate blocks by performing a transform on templates of the plurality of candidate blocks in the search region.

According to an embodiment, the transform may be performed by using a predefined transform.

According to an embodiment, the predefined transform may include at least one of Hadamard transform, DCT-based transform, DST-based transform, Wavelet transform, or KLT.

According to an embodiment, positions of the plurality of candidate blocks in the search region may be determined in units of predetermined pixel units starting from a top-left initial position within the search region.

According to an embodiment, the initial top-left position may be determined based on the height of the top template of the current block and the width of the left template of the current block.

According to an embodiment, the positions of the plurality of candidate blocks in the search region may be determined according to results of comparison performed based on the SAD within the search region.

In an embodiment, at least one processor may compare the transformed template of the current block and the transformed template of each of the plurality of candidate blocks.

According to an embodiment, the at least one processor may split each of the transformed template of the current block and the transformed templates of the plurality of candidate blocks into a plurality of sub-templates.

According to an embodiment, the at least one processor may calculate a difference between the current sub-template and the sub-template corresponding to the current sub-template in the transformed template of the first candidate block.

According to an embodiment, the difference may be calculated based on the SATD.

According to an embodiment, the transformed template of the current block may include a first sub-template including transform coefficients corresponding to the first frequency band and a second sub-template including transform coefficients corresponding to the second frequency band.

According to an embodiment, each of the transformed templates of the plurality of candidate blocks may include a third sub-template including transform coefficients corresponding to the first frequency band and a fourth sub-template including transform coefficients corresponding to the second frequency band.

In an embodiment, the at least one processor may determine a reference block of the current block from among a plurality of candidate blocks based on the comparison result.

According to an embodiment, the at least one processor may determine as a first reference block a candidate block minimizing a difference between the first sub-template and the third sub-template and determine as a second reference block a candidate block minimizing a difference between a second sub-template and a fourth sub-template.

In an embodiment, the at least one processor may generate a prediction block of the current block by using the reference block.

According to an embodiment, the at least one processor may generate a prediction block of the current block by performing a weighted summation of the first reference block and the second reference block.

According to an embodiment, the at least one processor may generate a prediction block of the current block by performing a weighted summation of the first reference block and the second reference block.

According to an embodiment, the at least one processor may determine a first transformed reference block and a second transformed reference block by performing a transform on each of the first reference block and the second reference block.

According to an embodiment, the at least one processor may combine a first region including transform coefficients corresponding to the first frequency band in the first transformed reference block and a second region including transform coefficients corresponding to the second frequency band in the second transformed reference block.

According to an embodiment, the at least one processor may generate a prediction block of the current block by performing an inverse transform on the combined region of the first region and the second region.

In an embodiment, the at least one processor may reconstruct the current block by using the prediction block of the current block.

The method of encoding an image according to an embodiment may include determining a transformed template of the current block by performing a transform on a template of the current block and determining transformed templates of a plurality of candidate blocks by performing a transform on templates of the plurality of candidate blocks in the search region.

According to an embodiment, the transform may be performed by using a predefined transform.

According to an embodiment, the predefined transform may include at least one of Hadamard transform, DCT-based transform, DST-based transform, Wavelet transform, or KLT.

According to an embodiment, positions of the plurality of candidate blocks in the search region may be determined in units of predetermined pixel units starting from a top-left initial position within the search region.

According to an embodiment, the initial top-left position may be determined based on the height of the top template of the current block and the width of the left template of the current block.

According to an embodiment, the positions of the plurality of candidate blocks in the search region may be determined according to results of comparison performed based on the SAD within the search region.

A method of encoding an image according to an embodiment may include comparing the transformed template of the current block and the transformed template of each of the plurality of candidate blocks.

According to an embodiment, the comparing of the transformed template of the current block and the transformed template of each of the plurality of candidate blocks may include splitting each of the transformed template of the current block and the transformed templates of the plurality of candidate blocks into a plurality of sub-templates.

According to an embodiment, the comparing of the transformed template of the current block and the transformed template of each of the plurality of candidate blocks may include calculating a difference between the current sub-template and the sub-template corresponding to the current sub-template in the transformed template of the first candidate block.

According to an embodiment, the difference may be calculated based on the SATD.

According to an embodiment, the transformed template of the current block may include a first sub-template including transform coefficients corresponding to the first frequency band and a second sub-template including transform coefficients corresponding to the second frequency band.

According to an embodiment, each of the transformed templates of the plurality of candidate blocks may include a third sub-template including transform coefficients corresponding to the first frequency band and a fourth sub-template including transform coefficients corresponding to the second frequency band.

The method of encoding an image according to an embodiment may include determining a reference block of the current block from among a plurality of candidate blocks based on the comparison result.

According to an embodiment, the determining of the reference block of the current block may include determining as a first reference block a candidate block minimizing a difference between the first sub-template and the third sub-template and determining as a second reference block a candidate block minimizing a difference between a second sub-template and a fourth sub-template.

The method of encoding an image according to an embodiment may include generating a prediction block of the current block by using the reference block.

According to an embodiment, the generating of the prediction block of the current block may include generating the prediction block of the current block by performing a weighted summation of the first reference block and the second reference block.

According to an embodiment, the generating of the prediction block of the current block may include generating the prediction block of the current block by performing a weighted summation of the first reference block and the second reference block.

According to an embodiment, the generating of the prediction block of the current block may include determining a first transformed reference block and a second transformed reference block by performing a transform on the first reference block and the second reference block.

According to an embodiment, the generating of the prediction block of the current block may include combining a first region including transform coefficients corresponding to the first frequency band in the first transformed reference block and a second region including transform coefficients corresponding to the second frequency band in the second transformed reference block.

According to an embodiment, the generating of the prediction block of the current block may include generating the prediction block of the current block by performing an inverse transform on a combined region of the first region and the second region.

The method of encoding an image according to an embodiment may include encoding the current block by using the prediction block of the current block.

The image-encoding apparatus according to an embodiment may include at least one memory storing at least one instruction and at least one processor configured to operate according to the at least one instruction.

In an embodiment, the at least one processor may determine a transformed template of the current block by performing a transform on a template of the current block and determine transformed templates of a plurality of candidate blocks by performing a transform on templates of the plurality of candidate blocks in the search region.

According to an embodiment, the transform may be performed by using a predefined transform.

According to an embodiment, the predefined transform may include at least one of Hadamard transform, DCT-based transform, DST-based transform, Wavelet transform, or KLT.

According to an embodiment, positions of the plurality of candidate blocks in the search region may be determined in units of predetermined pixel units starting from a top-left initial position within the search region.

According to an embodiment, the initial top-left position may be determined based on the height of the top template of the current block and the width of the left template of the current block.

According to an embodiment, the positions of the plurality of candidate blocks in the search region may be determined according to results of comparison performed based on the SAD within the search region.

In an embodiment, at least one processor may compare the transformed template of the current block and the transformed template of each of the plurality of candidate blocks.

According to an embodiment, the at least one processor may split each of the transformed template of the current block and the transformed templates of the plurality of candidate blocks into a plurality of sub-templates.

According to an embodiment, the at least one processor may calculate a difference between the current sub-template and the sub-template corresponding to the current sub-template in the transformed template of the first candidate block.

According to an embodiment, the difference may be calculated based on the SATD.

According to an embodiment, the transformed template of the current block may include a first sub-template including transform coefficients corresponding to the first frequency band and a second sub-template including transform coefficients corresponding to the second frequency band.

According to an embodiment, each of the transformed templates of the plurality of candidate blocks may include a third sub-template including transform coefficients corresponding to the first frequency band and a fourth sub-template including transform coefficients corresponding to the second frequency band.

In an embodiment, the at least one processor may determine a reference block of the current block from among a plurality of candidate blocks based on the comparison result.

According to an embodiment, the at least one processor may determine as a first reference block a candidate block minimizing a difference between the first sub-template and the third sub-template and determine as a second reference block a candidate block minimizing a difference between a second sub-template and a fourth sub-template.

In an embodiment, the at least one processor may generate a prediction block of the current block by using the reference block.

According to an embodiment, the at least one processor may generate a prediction block of the current block by performing a weighted summation of the first reference block and the second reference block.

According to an embodiment, the at least one processor may generate a prediction block of the current block by performing a weighted summation of the first reference block and the second reference block.

According to an embodiment, the at least one processor may determine a first transformed reference block and a second transformed reference block by performing a transform on each of the first reference block and the second reference block.

According to an embodiment, the at least one processor may combine a first region including transform coefficients corresponding to the first frequency band in the first transformed reference block and a second region including transform coefficients corresponding to the second frequency band in the second transformed reference block.

According to an embodiment, the at least one processor may generate a prediction block of the current block by performing an inverse transform on the combined region of the first region and the second region.

In an embodiment, the at least one processor may encode the current block by using the prediction block of the current block.

In a computer-readable recoding medium having recorded thereon a bitstream, the bitstream may include an encoding result of the current block.

In an embodiment, the encoding result of the current block may be generated by determining a transformed template of the current block by performing a transform on a template of the current block, and determining transformed templates of a plurality of candidate blocks by performing a transform on templates of the plurality of candidate blocks in the search region.

According to an embodiment, the transform may be performed by using a predefined transform.

According to an embodiment, the predefined transform may include at least one of Hadamard transform, DCT-based transform, DST-based transform, Wavelet transform, or KLT.

According to an embodiment, positions of the plurality of candidate blocks in the search region may be determined in units of predetermined pixel units starting from a top-left initial position within the search region.

According to an embodiment, the initial top-left position may be determined based on the height of the top template of the current block and the width of the left template of the current block.

According to an embodiment, the positions of the plurality of candidate blocks in the search region may be determined according to results of comparison performed based on the SAD within the search region.

In an embodiment, the encoding result of the current block may be generated by comparing the transformed template of the current block and the transformed template of each of the plurality of candidate blocks.

According to an embodiment, the encoding result of the current block may be generated by splitting each of the transformed template of the current block and the transformed templates of the plurality of candidate blocks into a plurality of sub-templates.

According to an embodiment, the encoding result of the current block may be generated by calculating a difference between the current sub-template and the sub-template corresponding to the current sub-template in the transformed template of the first candidate block.

According to an embodiment, the difference may be calculated based on the SATD.

According to an embodiment, the transformed template of the current block may include a first sub-template including transform coefficients corresponding to the first frequency band and a second sub-template including transform coefficients corresponding to the second frequency band.

According to an embodiment, each of the transformed templates of the plurality of candidate blocks may include a third sub-template including transform coefficients corresponding to the first frequency band and a fourth sub-template including transform coefficients corresponding to the second frequency band.

In an embodiment, the encoding result of the current block may be generated by determining a reference block of the current block from among a plurality of candidate blocks based on the comparison result.

According to an embodiment, the encoding result of the current block may be generated by determining as a first reference block a candidate block minimizing a difference between the first sub-template and the third sub-template, and determining as a second reference block a candidate block minimizing a difference between a second sub-template and a fourth sub-template.

In an embodiment, the encoding result of the current block may be generated by generating a prediction block of the current block by using the reference block.

According to an embodiment, the encoding result of the current block may be generated by generating a prediction block of the current block by performing a weighted summation of the first reference block and the second reference block.

According to an embodiment, the encoding result of the current block may be generated by generating a prediction block of the current block by performing a weighted summation of the first reference block and the second reference block.

According to an embodiment, the encoding result of the current block may be generated by determining a first transformed reference block and a second transformed reference block by performing a transform on each of the first reference block and the second reference block.

According to an embodiment, the encoding result of the current block may be generated by combining a first region including transform coefficients corresponding to the first frequency band in the first transformed reference block and a second region including transform coefficients corresponding to the second frequency band in the second transformed reference block.

According to an embodiment, the encoding result of the current block may be generated by generating a prediction block of the current block by performing an inverse transform on the combined region of the first region and the second region.

In an embodiment, the encoding result of the current block may be generated by encoding the current block by using the prediction block of the current block.

The method of encoding an image and the image-encoding apparatus 2800 and the method of decoding an image and the image-decoding apparatus 2000 may improve the performance of predictive encoding and predictive decoding of a current block.

The method of encoding an image and the image-encoding apparatus 2800 and the method of decoding an image and the image-decoding apparatus 2000 may reduce an amount of data required for intra prediction mode signaling.

The method of encoding an image and the image-encoding apparatus 2800 and the method of decoding an image and the image-decoding apparatus 2000 may decrease a bitrate of a bitstream.

The effects to be achieved by the present disclosure are not limited to the above, and other effects which are not mentioned herein can be clearly understood from the description by a person of skill in the art.

The embodiments of the present disclosure may be written as a program executable on a computer, and such program may be stored in a device-readable storage medium.

A non-transitory storage medium may be provided as a machine-readable storage medium. The non-transitory storage medium simply means that the medium is tangible and does not include signals (e.g., electromagnetic waves), and this term is not intended to distinguish semi-permanent storage of data in a storage medium from temporary storage of the same. For example, the non-transitory storage may include a buffer in which data is temporarily stored.

According to an embodiment of the disclosure, the method described in one or more embodiments of the disclosure may be included and provided in a computer program product. A computer program product may be traded between a seller and a buyer. The computer program may be distributed in the form of a machine-readable storage medium (e.g., compact disc read-only memory; CD-ROM), or distributed (e.g., downloaded or uploaded) online through an application store or directly between two user devices (e.g., smartphones). In the case of online distribution, at least some of the computer program products (e.g., a downloadable application, etc.) may be at least temporarily stored in a storage medium readable by devices, such as a memory of a manufacturer server, an application store server, or a relay server or temporarily generated.

## Claims

1. A method of decoding an image, the method comprising:
determining a transformed template of a current block by performing a transform on a template of the current block, and determining transformed templates of a plurality of candidate blocks by performing a transform on templates of the plurality of candidate blocks in a search region;
comparing the transformed template of the current block with each of the transformed templates of the plurality of candidate blocks;
determining a reference block of the current block from among the plurality of candidate blocks based on results of the comparing;
generating a prediction block of the current block using the reference block; and
reconstructing the current block using the prediction block of the current block.

2. The method of claim 1, wherein the comparing of the transformed template of the current block with each of the transformed templates of the plurality of candidate blocks comprises:
splitting each of the transformed template of the current block and the transformed templates of the plurality of candidate blocks into a plurality of sub-templates; and
calculating a difference between a current sub-template in the transformed template of the current block and a sub-template corresponding to the current sub-template in a transformed template of a first candidate block.

3. The method of claim 2, wherein the transformed template of the current block comprises a first sub-template including transform coefficients corresponding to a first frequency band and a second sub-template including transform coefficients corresponding to a second frequency band, and
each of the transformed templates of the plurality of candidate blocks comprises a third sub-template including transform coefficients corresponding to the first frequency band and a fourth sub-template including transform coefficients corresponding to the second frequency band.

4. The method of claim 3, wherein the determining of the reference block of the current block comprises:
determining as a first reference block a candidate block having a minimum difference between the first sub-template and the third sub-template; and
determining as a second reference block a candidate block having a minimum difference between the second sub-template and the fourth sub-template.

5. The method of claim 4, wherein the generating of the prediction block of the current block comprises generating the prediction block of the current block by performing a weighted sum of the first reference block and the second reference block.

6. The method of claim 4, wherein the generating of the prediction block of the current block comprises:
determining a first transformed reference block and a second transformed reference block by performing a transform on the first reference block and the second reference block;
combining a first region including transform coefficients corresponding to the first frequency band in the first transformed reference block with a second region including transform coefficients corresponding to the second frequency band in the second transformed reference block; and
generating the prediction block of the current block by performing an inverse transform on the combined region.

7. The method of claim 1, wherein the transform is performed by using a pre-defined transform, and
the pre-defined transform includes at least one of a Hadamard transform, a discrete cosine transform (DCT)-based transform, a discrete sine transform (DST)-based transform, a Wavelet transform, or a Karhunen Loeve transform (KLT).

8. The method of claim 2, wherein the difference is calculated based on a sum of absolute transformed difference (SATD).

9. The method of claim 1, wherein positions of the plurality of candidate blocks are determined in predetermined pixel units, starting from a top-left initial position within the search region, and
the top-left initial position is determined based on a height of a top template of the current block and a width of a left template of the current block.

10. The method of claim 1, wherein positions of the plurality of candidate blocks are determined according to a result of comparison performed based on a sum of absolute difference (SAD) within the search region.

11. An image-decoding apparatus comprising:
at least one memory in which at least one instruction is stored; and
at least one processor configured to operate according to the at least one instruction,
wherein the at least one processor is further configured to:
determine a transformed template of a current block by performing a transform on a template of the current block;
determine transformed templates of a plurality of candidate blocks by performing a transform on templates of the plurality of candidate blocks within a search region;
compare the transformed template of the current block with each of the transformed templates of the plurality of candidate blocks;
determine a reference block of the current block from among the plurality of candidate blocks based on results of the comparing;
generate a prediction block of the current block using the reference block; and
reconstruct the current block using the prediction block of the current block.

12. A method of encoding an image, the method comprising:
determining a transformed template of a current block by performing a transform on a template of the current block, and determining transformed templates of a plurality of candidate blocks by performing a transform on templates of the plurality of candidate blocks within a search region;
comparing the transformed template of the current block with each of the transformed templates of the plurality of candidate blocks;
determining a reference block of the current block from among the plurality of candidate blocks based on results of the comparing;
generating a prediction block of the current block using the reference block; and
encoding the current block using the prediction block of the current block.

13. An image-encoding apparatus comprising:
at least one memory in which at least one instruction is stored; and
at least one processor configured to operate according to the at least one instruction,
wherein the at least one processor is further configured to:
determine a transformed template of a current block by performing a transform on a template of the current block;
determine transformed templates of a plurality of candidate blocks by performing a transform on templates of the plurality of candidate blocks within a search region;
compare the transformed template of the current block with each of the transformed templates of the plurality of candidate blocks;
determine a reference block of the current block from among the plurality of candidate blocks based on results of the comparing;
generate a prediction block of the current block using the reference block; and
encode the current block using the prediction block of the current block.

14. A computer-readable recording medium having recorded thereon a bitstream, wherein the bitstream includes an encoding result of a current block, and
the encoding result of the current block is generated by:
determining a transformed template of the current block by performing a transform on a template of the current block;
determining transformed templates of a plurality of candidate blocks by performing a transform on templates of the plurality of candidate blocks within a search region;
comparing the transformed template of the current block with each of the transformed templates of the plurality of candidate blocks;
determining a reference block of the current block from among the plurality of candidate blocks based on results of the comparing;
generating a prediction block of the current block using the reference block; and
encoding the current block using the prediction block of the current block.
